(19) Europäisches Patentamt
European Patent Office
Office européen des brevets

(11) EP 0 661 300 B1

(12) **EUROPÄISCHE PATENTSCHRIFT**

(45) Veröffentlichungstag und Bekanntmachung des Hinweises auf die Patenterteilung:
**18.03.1998 Patentblatt 1998/12**

(51) Int Cl.⁶: **C08F 10/00**, C08F 4/602

(21) Anmeldenummer: **94120163.4**

(22) Anmeldetag: **20.12.1994**

(54) **Verfahren zur Herstellung von Polyolefinen**

Process for the production of polyolefins

Procédé de préparation de polyoléfines

(84) Benannte Vertragsstaaten:
**AT BE CH DE DK ES FR GB GR IE IT LI NL PT SE**

(30) Priorität: **21.12.1993 DE 4343566**
**14.09.1994 DE 4432617**
**10.10.1994 DE 4436106**

(43) Veröffentlichungstag der Anmeldung:
**05.07.1995 Patentblatt 1995/27**

(73) Patentinhaber: **TARGOR GmbH**
**55116 Mainz (DE)**

(72) Erfinder:
- **Aulbach, Michael, Dr.**
  **D-65719 Hofheim (DE)**
- **Bachmann, Bernd, Dr.**
  **D-65817 Eppstein (DE)**
- **Erker, Gerhard, Prof.Dr.**
  **D-48159 Münster (DE)**
- **Psiorz, Christian, Dipl.-Chem.**
  **D-48161 Münster (DE)**
- **Küber, Frank, Dr.**
  **D-61440 Oberursel (DE)**
- **Osan, Frank, Dr.**
  **D-65779 Kelkheim (DE)**
- **Weller, Thomas, Dr.**
  **D-55130 Mainz (DE)**
- **Herrmann, Hans-Friedrich, Dr.**
  **D-64291 Darmstadt (DE)**

(56) Entgegenhaltungen:
**EP-A- 0 528 041**
**EP-A- 0 650 981**
**EP-A- 0 721 954**
**WO-A-93/20113**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 661 300 B1

## Beschreibung

Die vorliegende Erfindung betrifft ein Verfahren zur Herstellung von Polyolefinen in Gegenwart einer speziellen stereorigiden Metallocenverbindung.

Aus der Literatur ist die Herstellung von Polyolefinen mit löslichen Metallocenverbindungen in Kombination mit Aluminoxanen oder anderen Cokatalysatoren, die aufgrund ihrer Lewis-Acidität das neutrale Metallocen in ein Kation überführen und stabilisieren können, bekannt (EP 129 368, EP 351 392).

Im Tagungsband der 1st Journal of Organometallic Chemistry Conference on Applied Organometallic Chemistry, Seite 136 werden Metallocene beschrieben, welche einen substituierten tricyclischen Kohlenwasserstoff als Ligandsystem aufweisen.

Bei Einsatz löslicher Metallocenverbindungen auf der Basis von Bis(cyclopentadienyl)zirkon-dialkyl bzw. -dihalogenid in Kombination mit oligomeren Aluminoxanen erhält man ataktische Polymere, die wegen ihrer unausgewogenen und ungenügenden Produkteigenschaften technisch nur von geringer Bedeutung sind. Außerdem sind bestimmte Olefincopolymere nicht zugänglich.

Derivate des Zirkonocendichlorids, in denen die beiden substituierten Cyclopentadienylgruppen über eine Methyl-, Ethylen- oder eine Dimethylsilylenbrücke miteinander verbunden sind, können aufgrund ihrer konformativen Starrheit als Katalysatoren zur isospezifischen Polymerisation von Olefinen benutzt werden (Chem. Lett. 1989, S. 1853 bis 1856 oder EP-A 0 316 155). Besondere Bedeutung besitzen Metallocene mit (substituierten) Indenylresten als Liganden zur Herstellung hochisotaktischer Polymere mit hoher Kristallinität und hohem Schmelzpunkt (EP 485 823, EP 530 647).

Von großem Interesse sind jedoch Polymere, die in ihrem Eigenschaftsprofil zwischen diesen beiden Extremen liegen sowie bestimmte Olefincopolymere.

Es bestand die Aufgabe, ein Katalysatorsystem zur Verfügung zu stellen, das die Nachteile des Standes der Technik vermeidet und sich zur Herstellung bestimmter Olefinhomopolymere und Olefincopolymere eignet, insbesondere Polyolefinen mit reduzierter Kristallinität, erhöhter Schlagzähigkeit, erhöhter Transparenz, hoher Fließfähigkeit bei Verarbeitungstemperatur, niedriger Molmasse und reduziertem Schmelzpunkt.

Die vorliegende Erfindung betrifft somit ein Verfahren zur Herstellung eines Polyolefins durch Polymerisation mindestens eines Olefins in Gegenwart einer stereorigiden Metallocenverbindung, die als Liganden zwei substituierte oder unsubstituierte Cyclopentadienylgruppen aufweist, die über ein mono- oder polycyclisches Ringsystem miteinander verbunden sind, worin sich eine Cyclopentadienylgruppe als Substituent an dem mono- oder polycyclischen Ringsystem (d.h. die Cyclopentadienylgruppe ist über eine kovalente Bindung an das Ringsystem gebunden) befindet, während eine weitere Cyclopentadienylgruppe an das mono- oder polycyclische Ringsystem anelliert ist.

Bei der Bestimmung der Anzahl der Ringatome des mono- oder polycyclischen Ringsystems werden diejenigen Kohlenstoffatome der an das Ringsystem anellierten Cyclopentadienylgruppe(n) mitgezählt, welche aufgrund der Anellierung Teile des Ringsystems sind. Substituenten an dem mono- oder polycyclischen Ringsystem werden nicht mitgezählt.

Das mono- oder polycyclische Ringsystem kann aromatisch, aliphatisch oder gemischt aromatisch und aliphatisch sein und kann auch Heteroatome wie Stickstoff, Sauerstoff, Schwefel, Silizium oder Germanium enthalten. Es weist bevorzugt 6-40, besonders bevorzugt 6-20 Ringatome, insbesondere Kohlenstoffringatome, auf. Das mono- oder polycyclische Ringsystem kann auch Substituenten wie eine $C_1$-$C_{40}$-kohlenwasserstoffhaltige Gruppe tragen.

Anellierte Cyclopentadienylgruppen sind einfach (z.B. über die 1,2- oder 1,3-Position des Cyclopentadienylrings) oder mehrfach (z.B. über die 1,2,3- oder 1,2,3,4-Position des Cyclopentadienylrings), bevorzugt einfach an das mono- oder polycyclische Ringsystem anelliert.

Die Zentraleinheit $M^1R^x{}_n$ der erfindungsgemäßen Metallocenverbindung besteht bevorzugt aus einem Übergangsmetallatom $M^1$, insbesondere der Gruppe IIIb, IVb, Vb oder VIb des Periodensystems der Elemente, welches n Substituenten $R^x$ trägt, die gleich oder verschieden sind und vorzugsweise eine $C_1$-$C_{40}$-kohlenwasserstoffhaltige Gruppe, ein Halogenatom, eine OH-Gruppe oder ein Wasserstoffatom bedeuten. Die Summe aus der Anzahl der Substituenten $R^x$ und der Anzahl der substituierten oder unsubstituierten Cyclopentadienylgruppen (Liganden) entspricht der Wertigkeit des Übergangsmetallatoms $M^1$.

Bevorzugt werden in dem erfindungsgemäßen Verfahren stereorigide Metallocenverbindungen eingesetzt, die ein Ligandsystem aufweisen, welches von 4-($\eta^5$-3'-alkyl-cyclopentadienyl)-4,6,6-trimethyl-($\eta^5$-2-alkyl-4,5-tetrahydropentalen) verschieden ist.

Besonders bevorzugt sind Verbindungen der Formel I

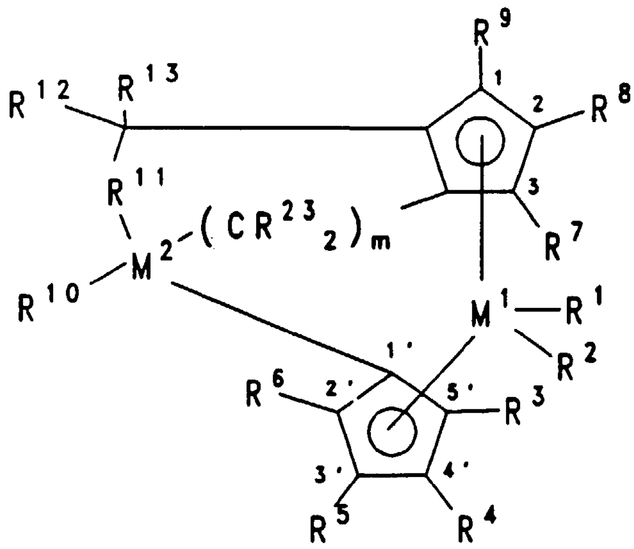

(I)

,worin

$M^1$ ein Metall der Gruppe IIIb, IVb, Vb oder VIb des Periodensystems ist,

$M^2$ Kohlenstoff, Silizium oder Germanium ist,

$R^1$ und $R^2$ gleich oder verschieden sind und ein Wasserstoffatom, eine $C_1$-$C_{40}$-kohlenwasserstoffhaltige Gruppe wie eine $C_1$-$C_{10}$-Alkyl-, eine $C_1$-$C_{10}$-Alkoxy, eine $C_6$-$C_{10}$-Aryl-, eine $C_6$-$C_{25}$-Aryloxy-, eine $C_2$-$C_{10}$-Alkenyl-, eine $C_7$-$C_{40}$-Arylalkyl- oder eine $C_7$-$C_{40}$-Arylalkenylgruppe, eine OH-Gruppe, ein Halogenatom oder $NR^{14}_2$, worin $R^{14}$ ein Halogenatom, eine $C_1$-$C_{10}$-Alkylgruppe oder eine $C_6$-$C_{10}$-Arylgruppe ist, bedeuten, oder $R^1$ und $R^2$ zusammen mit den sie verbindenden Atomen ein Ringsystem bilden,

$R^3$, $R^4$, $R^5$, $R^6$, $R^7$, $R^8$ und $R^9$ gleich oder verschieden sind und ein Wasserstoffatom, ein Halogenatom, eine $C_1$-$C_{20}$-kohlenwasserstoffhaltige Gruppe wie eine $C_1$-$C_{10}$-Alkylgruppe, die halogeniert sein kann, eine $C_6$-$C_{20}$-Arylgruppe, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe, einen, $-R^{14}-SiR^{14}_3-$, $-NR^{14}_2-$, $-SiOR^{14}_3-$, $-SiSR^{14}_3-$ oder $-PR^{14}_2$-Rest bedeuten, worin $R^{14}$ ein Halogenatom, eine $C_1$-$C_{10}$-Alkylgruppe oder eine $C_6$-$C_{10}$-Arylgruppe ist, oder zwei oder mehr benachbarte Reste $R^3$, $R^4$, $R^5$, $R^6$, $R^7$, $R^8$ und $R^9$ zusammen mit den sie verbindenen Atomen ein Ringsystem bilden, welches bevorzugt 4-40, besonders bevorzugt 6-15 Kohlenstoffatome enthält,

$R^{10}$ ein Wasserstoffatom, oder eine $C_1$-$C_{40}$-kohlenwasserstoffhaltige Gruppe wie eine $C_1$-$C_{20}$-Alkyl-, eine $C_1$-$C_{10}$-Alkoxy-, eine $C_6$-$C_{20}$-Aryl-, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe bedeutet, die jeweils Reste $-NR^{14}_3$, $-SiR^{14}_3$, $-SR^{14}_2$ oder $-OSiR^{14}_3$ tragen können, worin $R^{14}$ ein Halogenatom, eine $C_1$-$C_{10}$-Alkylgruppe oder eine $C_6$-$C_{10}$-Arylgruppe ist, oder $R^{10}$ mit einem oder mehreren der Reste $R^3$, $R^4$, $R^5$ und $R^6$ verbunden ist,

$R^{11}$

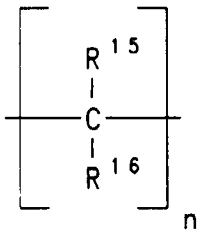 , 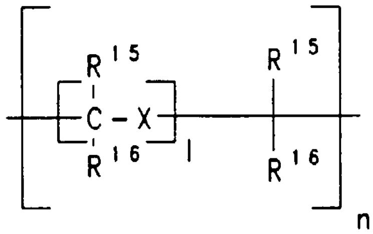 , 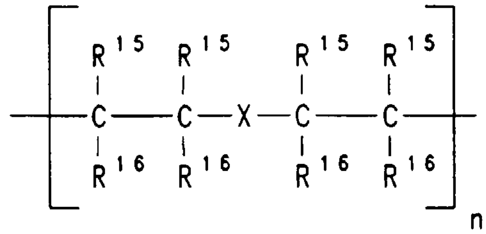 ,

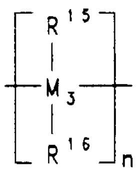 , 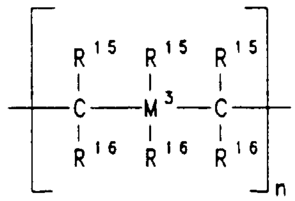 , 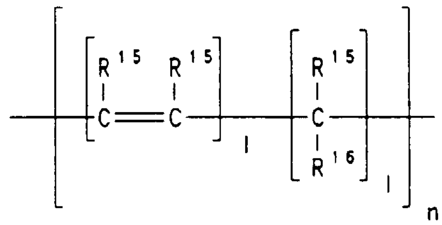

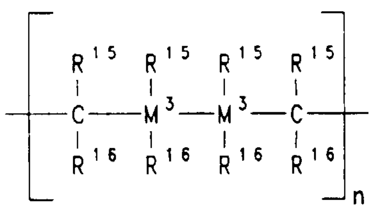 oder 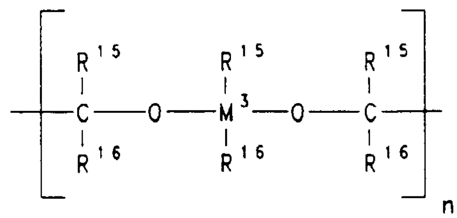

ist, wobei n eine ganze Zahl von 1 bis 20 ist, l ein ganze Zahl von 0 bis 20 ist, X gleich O, = $NR^{14}$, = CO, = $PR^{14}$, = $P(O)R^{14}$, = =SO, = $SO_2$ oder -S- ist, worin $R^{14}$ ein Halogenatom, eine $C_1$-$C_{10}$-Alkylgruppe oder eine $C_6$-$C_{10}$-Arylgruppe ist, $R^{15}$ und $R^{16}$ gleich oder verschieden sind und ein Wasserstoffatom, ein Halogenatom, oder eine $C_1$-$C_{40}$-kohlenwasserstoffhaltige Gruppe wie eine $C_1$-$C_{10}$-Alkyl-, eine $C_1$-$C_{10}$-Fluoralkyl-, eine $C_1$-$C_{10}$-Alkoxy-, eine $C_6$-$C_{10}$-Aryl-, eine $C_6$-$C_{10}$-Fluoraryl-, eine $C_6$-$C_{10}$-Aryloxy-, eine $C_2$-$C_{10}$-Alkenyl-, eine $C_7$-$C_{40}$-Arylalkyl-, eine $C_7$-$C_{40}$-Alkylaryl- oder eine $C_8$-$C_{40}$-Arylalkenylgruppe bedeuten, oder zwei Reste $R^{15}$, zwei Reste $R^{16}$, oder

$R^{15}$ und $R^{16}$ jeweils mit den sie verbindenen Atomen einen oder mehrere Ringe bilden, und $M^3$ Silizium, Germanium oder Zinn ist,

$R^{12}$ und $R^{13}$ gleich oder verschieden ist, und ein Wasserstoffatom, eine $C_1$-$C_{40}$-kohlenwasserstoffhaltige Gruppe wie eine $C_1$-$C_{20}$-Alkyl-, eine $C_1$-$C_{10}$-Alkoxy-, eine $C_6$-$C_{20}$-Aryl-, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe bedeutet, die jeweils Reste $-NR^{14}_3$, $-SR^{14}_2$, $-SiR^{14}_3$, $-OSiR^{14}_3$, worin $R^{14}$ ein Halogenatom, eine $C_1$-$C_{10}$-Alkylgruppe oder eine $C_6$-$C_{10}$-Arylgruppe ist, oder Halogen tragen können,

$R^{23}$ gleich oder verschieden sind und ein Wasserstoffatom, ein Halogenatom oder eine $C_1$-$C_{40}$-kohlenwasserstoffhaltige Gruppe wie eine $C_1$-$C_{10}$-Alkylgruppe, eine $C_1$-$C_{10}$-Alkoxy-, eine $C_6$-$C_{10}$-Aryl-, eine $C_6$-$C_{25}$-Aryloxy-, eine $C_2$-$C_{10}$-Alkenyl, eine $C_7$-$C_{40}$-Arylalkyl- oder eine $C_7$-$C_{40}$-Arylalkenylgruppe bedeuten, oder einer oder mehr Reste $R^{23}$ mit einem oder mehr Resten $R^{15}$ und $R^{16}$ und/oder einem oder mehr Resten $R^{10}$, $R^{11}$, $R^{12}$ und $R^{13}$ verbunden sind, und m

eine ganze Zahl von 0 bis 24 ist, wobei für den Fall, daß $M^2$ gleich C, m gleich 0 und $R^{11}$ gleich $CH_2$ ist, mindestens einer der Reste $R^4$, $R^8$, $R^{10}$, $R^{12}$, $R^{13}$ ungleich Alkyl und/oder mindestens einer der Reste $R^3$, $R^5$, $R^6$, $R^7$ und $R^9$ ungleich Wasserstoff ist.

Für Verbindungen der Formel I gilt bevorzugt, daß

$M^1$ Zirkonium oder Hafnium, insbesondere Zirkonium ist,

$R^1$ und $R^2$ gleich sind und eine $C_1$-$C_3$-Alkylgruppe oder ein Halogenatom, insbesondere Chlor bedeuten,

$R^3$, $R^4$, $R^5$, $R^6$, $R^7$, $R^8$ und $R^9$ gleich oder verschieden sind und ein Wasserstoffatom, eine $C_1$-$C_{10}$-Alkylgruppe oder eine $C_6$-$C_{24}$-Arylgruppe sind, oder zwei oder mehr benachbarte Reste zusammen mit den sie verbindenden Atomen ein aromatisches oder aliphatisches Kohlenwasserstoffringsystem bilden,

$R^{10}$ ein Wasserstoffatom, eine $C_6$-$C_{24}$-Arylgruppe oder eine $C_1$-$C_{10}$-Alkylgruppe, insbesondere $C_1$-$C_4$-Alkylgruppe ist,

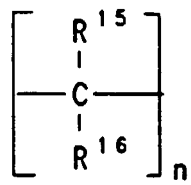

ist, wobei n eine ganze Zahl von 1 bis 8, insbesondere von 2 bis 4 ist,

$R^{15}$ und $R^{16}$ gleich oder verschieden sind und Wasserstoff oder eine $C_1$-$C_{10}$-Alkylgruppe sind, oder zwei Reste $R^{15}$, zwei Reste $R^{16}$, oder $R^{15}$ und $R^{16}$ zusammen mit den sie verbindenden Atomen ein Kohlenwasserstoffringsystem bilden,

$M^2$ Kohlenstoff ist,

$R^{12}$ und $R^{13}$ gleich oder verschieden sind und ein Wasserstoffatom, eine $C_1$-$C_{10}$-Alkylgruppe, insbesondere eine $C_1$-$C_4$-Alkylgruppe, oder eine $C_6$-$C_{10}$-Arylgruppe sind und m = 0 ist.

Besonders bevorzugt sind Verbindungen der Formel I, worin

$M^1$ Zirkonium ist,

$R^1$ und $R^2$ gleich sind und ein Halogenatom, insbesondere Chlor bedeuten,

$R^3$, $R^4$, $R^5$, $R^6$, $R^7$, $R^8$ und $R^9$ gleich oder verschieden sind und Wasserstoff oder eine $C_1$-$C_4$-Alkylgruppe wie Methyl, Ethyl, Propyl, Isopropyl, Butyl oder Isobutyl oder eine $C_6$-$C_{14}$-Arylgruppe wie Phenyl oder Naphtyl bedeuten, oder $R^8$ und $R^9$ sowie $R^3$ und $R^4$ und/oder $R^5$ und $R^6$ zusammen mit den sie verbindenden Atomen ein aromatisches Kohlenwasserstoffringsystem bilden, insbesondere einen Sechsring, der seinerseits substituiert sein kann,

$M^2$ ein Kohlenstoffatom ist,

$R^{10}$ eine $C_1$-$C_6$-Alkylgruppe, insbesondere Methyl ist,

$R^{11}$ $-CH_2-CH_2-$ ist,

$R^{12}$ und $R^{13}$ gleich oder verschieden sind und

eine Methyl- oder Phenyl-Gruppe bedeuten und m = 0 ist.

Vorzugsweise mindestens einer der Reste $R^3$ bis $R^9$, insbesondere mindestens einer der Reste $R^4$, $R^5$ und $R^8$ von Wasserstoff verschieden, insbesondere dann, wenn $R^{11}$ gleich $-CH_2-CH_2-$ ist.

Beispiele für erfindungsgemäße Metallocenverbindungen sind:

[4-($\eta^5$-Cyclopentadienyl)-4,7,7 -trimethyl-($\eta$5-4,5,6,7-tetrahydroindenyl)]-dichlorotitan,
[4-($\eta^5$-Cyclopentadienyl)-4,7,7-trimethyl-($\eta^5$-4,5,6,7-tetrahydroindenyl)]-dichlorozirconium,
[4-($\eta^5$-Cyclopentadienyl)-4,7,7-trimethyl-($\eta^5$-4,5,6,7-tetrahydroindenyl)]-dichlorohafnium,
[4-($\eta^5$-Cyclopentadienyl)-4,7,7-triphenyl-($\eta^5$-4,5,6,7-tetrahydroindenyl)]-dichlorotitan,

[4-($\eta^5$-Cyclopentadienyl)-4,7,7-triphenyl-($\eta^5$-4,5,6,7-tetrahydroindenyl)]-dichlorozirconium,
[4-($\eta^5$-Cyclopentadienyl)-4,7-dimethyl-7-phenyl-($\eta^5$-4,5,6,7-tetrahydroindenyl)]-dichlorotitan,
[4-($\eta^5$-Cyclopentadienyl)-4,7-dimethyl-7-phenyl-($\eta^5$-4,5,6-7-tetrahydroindenyl)]-dichlorozirconium,
[4-($\eta^5$-Cyclopentadienyl)-4,7-dimethyl-7-naphtyl-($\eta^5$-4,5,6,7-tetrahydroindenyl)]-dichlorotitan,
[4-($\eta^5$-Cyclopentadienyl)-4,7-dimethyl-7-naphtyl-($\eta^5$-4,5,6,7-tetrahydroindenyl)]-dichlorozirconium,
[4-($\eta^5$-Cyclopentadienyl)-4,7-dimethyl-7-butyl-($\eta^5$-4,5,6,7-tetrahydroindenyl)]-dichlorotitan,
[4-($\eta^5$-Cyclopentadienyl)-4,7-dimethyl-7 butyl-($\eta^5$-4,5,6,7-tetrahydroindenyl)]-dichlorozirconium,
[4-($\eta^5$-3'-tert-Butyl-cyclopentadienyl)-4,7,7-trimethyl-($\eta^5$-4,5,6,7-tetrahydroindenyl)]-dichlorotitan,
[4-($\eta^5$-3'-tert-Butyl-cyclopentadienyl)-4,7,7-trimethyl-($\eta^5$-4,5,6,7-tetrahydroindenyl)]dichlorozirconium,
[4-($\eta^5$-3'-tert-Butyl-cyclopentadienyl)-4,7,7-triphenyl-($\eta^5$-4,5,6,7-tetrahydroindenyl)]dichlorotitan,
[4-($\eta^5$-3'-tert-Butyl-cyclopentadienyl)-4-7,7-triphenyl-($\eta^5$-4,5,6,7-tetrahydroindenyl)]dichlorozirconium,
[4-($\eta^5$-3'-tert-Butyl-cyclopentadienyl)-4,7-dimethyl-7-phenyl-($\eta^5$-4,5,6,7-tetra-hydroindenyl)]dichlorotitan,
[4-($\eta^5$-3'-tert-Butyl-cyclopentadienyl)-4,7-dimethyl-7-phenyl-($\eta^5$-4,5,6,7-tetra-hydroindenyl)]dichlorozirconium,
[4-($\eta^5$-3'-tert-Butyl-cyclopentadienyl)-4,7-dimethyl-7-naphtyl-($\eta^5$-4,5,6,7-tetra-hydroindenyl)]dichlorotitan,
[4-($\eta^5$-3'-tert-Butyl-cyclopentadienyl)-4,7-dimethyl-7-naphtyl-($\eta^5$-4,5,6,7-tetra-hydroindenyl)]dichlorozirconium,
[4-($\eta^5$-3'-tert-Butyl-cyclopentadienyl)-4,7-dimethyl-7-butyl-($\eta^5$-4, 5, 6 ,7-tetra-hydroindenyl)]dichlorotitan,
[4-($\eta^5$-3'-tert-Butyl-cyclopentadienyl)-4,7-dimethyl-7-butyl-($\eta^5$-4,5,6,7-tetra-hydroindenyl)]dichlorozirconium,
[4-($\eta^5$-Indenyl)-4,7,7-trimethyl-($\eta^5$-4,5,6,7-tetrahydroindenyl)]dichlorotitan,
[4-($\eta^5$-Indenyl)-4,7,7-trimethyl-($\eta^5$-4,5,6,7-tetrahydroindenyl)]dichlorozirconium,
[4-($\eta^5$-Indenyl)-4,7,7-triphenyl-($\eta^5$-4,5,6,7-tetrahydroindenyl)]dichlorotitan,
[4-($\eta^5$-Indenyl)-4,7,7-triphenyl-($\eta^5$-4,5,6,7-tetrahydroindenyl)]dichlorozirconium,
[4-($\eta^5$-Indenyl)-4,7-dimethyl-7-phenyl-(5,6,7-tetrahydroindenyl)]dichlorotitan,
[4-($\eta^5$-Indenyl)-4,7-dimethyl-7-phenyl-($\eta^5$-4,5,6,7-tetrahydroindenyl)]dichlorozirconium,
[4-($\eta^5$-Indenyl)-4,7-dimethyl-7-naphtyl-($\eta^5$-4,5,6,7-tetrahydroindenyl)]dichlorotitan,
[4-($\eta^5$-Indenyl)-4,7-dimethyl-7-naphtyl-($\eta^5$-4,5,6,7-tetrahydroindenyl)]dichlorozirconium,
[4-($\eta^5$-Indenyl)-4,7-dimethyl-7-butyl-($\eta^5$-4,5,6,7-tetrahydroindenyl)]dichlorotitan,
[4-($\eta^5$-Indenyl)-4,7-dimethyl-7-butyl-($\eta^5$-4,5,6,7-tetrahydroindenyl)]dichlorozirconium,
[4-($\eta^5$-Cyclopentadienyl)-4,7,7-trimethyl-($\eta^5$-4,5,6,7-tetrahydrofluorenyl)]dichlorotitan,
[4-($\eta^5$-Cyclopentadienyl)-4,7,7-trimethyl-($\eta^5$-4,5,6,7-tetrahydrofluorenyl)]dichlorozirconium,
[4-($\eta^5$-Cyclopentadienyl)-4,7 7-triphenyl-($\eta^5$-4,5,6,7-tetrahydrofluorenyl)]dichlorotitan,
[4-($\eta^5$-Cyclopentadienyl)-4,7,7-triphenyl-($\eta^5$-4,5,6,7-tetrahydrofluorenyl)]-dichlorozirconium,
[4-($\eta^5$-Cyclopentadienyl)-4,7-dimethyl-7-phenyl-($\eta^5$-4,5,6,7-tetrahydrofluorenyl)dichlorotitan,
[4-($\eta^5$-Cyclopentadienyl)-4,7-dimethyl-7-phenyl-($\eta^5$-4,5,6,7-tetrahydrofluorenyl)]dichlorozirconium,
[4-($\eta^5$-Cyclopentadienyl)-4,7-dimethyl-7-naphtyl-($\eta^5$-4,5,6,7-tetrahydrofluorenyl)]dichlorotitan,
[4-($\eta^5$-Cyclopentadienyl)-4,7-dimethyl-7-naphtyl-($\eta^5$-4, 5,6,7-tetrahydrofluorenyl)]dichlorozirconium,
[4-($\eta^5$-Cyclopentadienyl)-4,7-dimethyl-7-butyl-($\eta^5$-4, 5,6,7-tetrahydrofluorenyl)]dichlorotitan,
[4-($\eta^5$-Cyclopentadienyl)-4,7-dimethyl-7-butyl-($\eta^5$-4,5,6,7-tetrahydrofluorenyl)]dichlorozirconium,
[4-($\eta^5$-3'-Methylcyclopentadienyl)-4,7,7-trimethyl-($\eta^5$-4,5,6,7-tetrahydroindenyl)]dichlorotitan,
[4-($\eta^5$-3'-Methylcyclopentadienyl)-4,7,7-trimethyl-($\eta^5$-4,5,6,7-tetrahydroindenyl)]dichlorozirconium,
[4-($\eta^5$-3'-Methylcyclopentadienyl)-4,7,7-triphenyl-($\eta^5$-4,5,6,7-tetrahydroindenyl)]dichlorotitan,
[4-($\eta^5$-3'-Methylcyclopentadienyl)-4,7,7-triphenyl-($\eta^5$-4,5,6,7-tetrahydroindenyl)]dichlorozirconium,
[4-($\eta^5$-3'-Methylcyclopentadienyl)-4,7-dimethyl-7-phenyl-($\eta^5$-4,5,6,7-tetrahydroindenyl)]dichlorotitan,
[4-($\eta^5$-3'-Methylcyclopentadienyl)-4,7-dimethyl-7-phenyl-($\eta^5$-4,5,6,7-tetrahydroindenyl)]dichlorozirconium,
[4-($\eta^5$-3'-Methylcyclopentadienyl)-4,7-dimethyl-7-naphtyl-($\eta^5$-4,5,6,7-tetrahydroindenyl)ldichlorotitan,
[4-($\eta^5$-3'-Methylcyclopentadienyl)-4,7-dimethyl-7-naphtyl-($\eta^5$-4,5,6,7-tetrahydroindenyl)]dichlorozirconium,
[4-($\eta^5$-3'-Methylcyclopentadienyl)-4,7-dimethyl-7-butyl-($\eta^5$-4,5,6,7-tetrahydroindenyl)]dichlorotitan,
[4-($\eta^5$-3'-Methylcyclopentadienyl)-4,7-dimethyl-7-butyl-($\eta^5$-4,5,6,7-tetrahydroindenyl)]dichlorozirconium,
[4-($\eta^5$-Cyclopentadienyl)-4,7,7-trimethyl-($\eta^5$-2-methyl-4,5,6,7-tetrahydroindenyl)]dichlorotitan,
[4-($\eta^5$-Cyclopentadienyl)-4,7,7-trimethyl-($\eta^5$-2-methyl-4,5,6,7-tetrahydroindenyl)]dichlorozirconium,
[4-($\eta^5$-Cyclopentadienyl)-4,7,7-triphenyl-($\eta^5$-2-methyl-4,5,6,7-tetrahydroindenyl)]dichlorotitan,
[4-($\eta^5$-Cyclopentadienyl)-4,7,7-triphenyl-($\eta^5$-2-methyl-4,5,6,7-tetrahydroindenyl)]dichlorozirconium,
[4-($\eta^5$-Cyclopentadienyl)-4,7-dimethyl-7-phenyl-($\eta^5$-2-methyl-4,5,6,7-tetrahydroindenyl)]dichlorotitan,
[4-($\eta^5$-Cyclopentadienyl)-4,7-dimethyl-7-phenyl-($\eta^5$-2-methyl-4,5,6,7-tetrahydroindenyl)]dichlorozirconium,
[4-($\eta^5$-Cyclopentadienyl)-4,7-dimethyl-7-naphtyl-($\eta^5$-2-methyl-4,5,6,7-tetrahydroindenyl)]dichlorotitan,
[4-($\eta^5$-Cyclopentadienyl)-4,7-dimethyl-7-naphtyl-($\eta^5$-2-methyl-4,5,6,7-tetrahydroindenyl)]dichlorozirconium,
[4-($\eta^5$-Cyclopentadienyl)-4,7-dimethyl-7-butyl-($\eta^5$-2-methyl-4,5,6,7-tetrahydroindenyl)ldichlorotitan,
[4-($\eta^5$-Cyclopentadienyl)-4,7-dimethyl-7-butyl-($\eta^5$-2-methyl-4,5,6,7-tetrahydroindenyl)]dichlorozirconium,
[4-($\eta^5$-3'-Methylcyclopentadienyl)-4,7,7-trimethyl-($\eta^5$-2-methyl-4,5,6,7-tetrahydroindenyl)]dichlorotitan,

[4-($\eta^5$-3'-Methylcyclopentadienyl)-4,7,7-trimethyl-($\eta^5$-2-methyl-4,5,6,7-tetrahydroindenyl)]dichlorozirconium,
[4-($\eta^5$-3'-Methylcyclopentadienyl)-4,7,7-triphenyl-($\eta^5$-2-methyl-4,5,6,7-tetrahydroindenyl)]dichlorotitan,
[4-($\eta^5$-3'-Methylcyclopentadienyl)-4,7,7-triphenyl-($\eta^5$-2-methyl-4,5,6,7-tetrahydroindenyl)ldichlorozirconium,
[4-($\eta^5$-3'-Methylcyclopentadienyl)-4,7-dimethyl-7-phenyl-($\eta^5$-2-methyl-4,5,6,7-tetrahydroindenyl)]dichlorotitan,
[4-($\eta^5$-3'-Methylcyclopentadienyl)-4,7-dimethyl-7-phenyl-($\eta^5$-2-methyl-4,5,6,7-tetrahydroindenyl)]dichlorozirconium,
[4-($\eta^5$-3'-Methylcyclopentadienyl)-4'7-dimethyl-7-naphtyl-($\eta^5$-2-methyl-4,5,6,7-tetrahydroindenyl)]dichlorotitan,
[4-($\eta^5$-3'-Methylcyclopentadienyl)-4,7-dimethyl-7-naphtyl-($\eta^5$-2-methyl-4,5,6,7-tetrahydroindenyl)]dichlorozirconium,
[4-($\eta^5$-3'-Methylcyclopentadienyl)-4,7-dimethyl-7-butyl-($\eta^5$-2-methyl-4,5,6,7-tetrahydroindenyl)]dichlorotitan,
[4-($\eta^5$-3'-Methylcyclopentadienyl)-4,7-dimethyl-7-butyl-($\eta^5$-2-methyl-4,5,6,7-tetrahydroindenyl)]dichlorozirconium,
[4-($\eta^5$-Fluorenyl)-4,7,7-trimethyl-($\eta^5$-4,5,6,7-tetrahydroindenyl)]dichlorotitan,
[4-($\eta^5$-Fluorenyl)-4,7,7-trimethyl-($\eta^5$-4,5,6,7-tetrahydroindenyl)]dichlorozirconium,
[4-($\eta^5$-Fluorenyl)-4,7,7-triphenyl-($\eta^5$-4,5,6,7-tetrahydroindenyl)]dichlorotitan,
[4-($\eta^5$-Fluorenyl)-4,7,7-triphenyl-($\eta^5$-4,5,6,7-tetrahydroindenyl)]dichlorozirconium,
[4-($\eta^5$-Fluorenyl)-4,7-dimethyl-7-phenyl-($\eta^5$-4,5,6,7-tetrahydroindenyl)]dichlorotitan,
[4-($\eta^5$-Fluorenyl)-4,7-dimethyl-7-phenyl-($\eta^5$-4,5,6,7-tetrahydroindenyl)]dichlorozirconium,
[4-($\eta^5$-Fluorenyl)-4,7-dimethyl-7-naphtyl-($\eta^5$-4,5,6,7-tetrahydroindenyl)]dichlorotitan,
[4-($\eta^5$-Fluorenyl)-4,7-dimethyl-7-naphtyl-($\eta^5$-4,5,6,7-tetrahydroindenyl)]dichlorozirconium,
[4-($\eta^5$-Fluorenyl)-4,7-dimethyl-7-butyl-($\eta^5$-4,5,6,7-tetrahydroindenyl)]dichlorotitan,
[4-($\eta^5$-Fluorenyl)-4,7-dimethyl-7-butyl-($\eta^5$-4,5,6,7-tetrahydroindenyl)]dichlorozirconium,
[4-($\eta^5$-Cyclopentadienyl)-4,7,7-trimethyl-4,5,6,7,10,11,12,13-octahydro-5,6-benzoindenyl)]-dichlorozirconium,
[5-($\eta^5$-Cyclopentadienyl)-4,7,7-trimethyl-($\eta^5$-4,5,6,7-tetrahydroindenyl)]dichlorotitan,
[5-($\eta^5$-Cyclopentadienyl)-4,7,7-trimethyl-($\eta^5$-4,5,6,7-tetrahydroindenyl)]dichlorozirconium,
[5-($\eta^5$-Cyclopentadienyl)-4,7,7-triphenyl-($\eta^5$-4,5,6,7-tetrahydroindenyl)]dichlorotitan,
[5-($\eta^5$-Cyclopentadienyl)-4,7,7-triphenyl-($\eta^5$-4,5,6,7-tetrahydroindenyl)]dichlorozirconium,
[5-($\eta^5$-Cyclopentadienyl)-4,7-dimethyl-7-phenyl-($\eta^5$-4,5,6,7-tetrahydroindenyl)]dichlorotitan,
[5-($\eta^5$-Cyclopentadienyl)-4,7-dimethyl-7-phenyl-($\eta^5$-4,5,6,7-tetrahydroindenyl)]dichlorozirconium,
[5-($\eta^5$-Cyclopentadienyl)-4,7-dimethyl-7-naphtyl-($\eta^5$-4,5,6,7-tetrahydroindenyl)]dichlorotitan,
[5-($\eta^5$-Cyclopentadienyl)-4,7-dimethyl-7-naphtyl-($\eta^5$-4,5,6,7-tetrahydroindenyl)]dichlorozirconium,
[5-($\eta^5$-Cyclopentadienyl)-4,7-dimethyl-7-butyl-($\eta^5$-4,5,6,7-tetrahydroindenyl)]dichlorotitan,
[5-($\eta^5$-Cyclopentadienyl)-4,7-dimethyl-7-butyl-($\eta^5$-4,5,6,7-tetrahydroindenyl)]dichlorozirconium,
[5-($\eta^5$-3'-tert-Butyl-cyclopentadienyl)-4,7,7-trimethyl-($\eta^5$-4,5,6,7-tetrahydroindenyl)]dichlorotitan,
[5-($\eta^5$-3'-tert-Butyl-Cyclopentadienyl)-4,7,7-trimethyl-($\eta^5$-4,5,6,7-tetrahydroindenyl)]dichlorozirconium,
[5-($\eta^5$-3'-tert-Butyl-cyclopentadienyl)-4,7,7-triphenyl-5,6,7-tetrahydroindenyl)]dichlorotitan,
[5-($\eta^5$-3'-tert-Butyl-cyclopentadienyl)-4,7,7-triphenyl-($\eta^5$-4,5,6,7-tetrahydroindenyl)]dichlorozirconium,
[5-($\eta^5$-3'-tert-Butyl-cyclopentadienyl)-4,7-dimethyl-7-phenyl-($\eta^5$-4,5,6,7-tetrahydroindenyl)]-dichlorotitan,
[5-($\eta^5$-3'-tert-Butyl-cyclopentadienyl)-4,7-dimethyl-7-phenyl-($\eta^5$-4,5,6,7-tetrahydroindenyl)]dichlorozirconium,
[5-($\eta^5$-3'-tert-Butyl-cyclopentadienyl)-4,7-dimethyl-7-naphtyl-($\eta^5$-4,5,6,7-tetrahydroindenyl)]dichlorotitan,
[5-($\eta^5$-3'-tert-Butyl-cyclopentadienyl)-4,7-dimethyl-7-naphtyl-($\eta^5$-4,5,6,7-tetrahydroindenyl)]dichlorozirconium,
[5-($\eta^5$-3'-tert-Butyl-cyclopentadienyl)-4,7-dimethyl-7-butyl-($\eta^5$-4,5,6,7-tetrahydroindenyl)]dichlorotitan,
[5-($\eta^5$-3'-tert-Butyl-cyclopentadienyl)-4,7-dimethyl-7-butyl-($\eta^5$-4,5,6,7-tetrahydroindenyl)]dichlorozirconium,
[5-($\eta^5$-Indenyl)-4,7,7-trimethyl-($\eta^5$-4,5,6,7-tetrahydroindenyl)]dichlorotitan,
[5-($\eta^5$-Indenyl)-4,7,7-trimethyl-($\eta^5$-4,5,6,7-tetrahydroindenyl)]dichlorozirconium,
[5-($\eta^5$-Indenyl)-4,7,7-triphenyl-($\eta^5$.4,5,6,7-tetrahydroindenyl)]dichlorotitan,
[5-($\eta^5$-Indenyl)-4,7,7-triphenyl-($\eta^5$-4,5,6,7-tetrahydroindenyl)]dichlorozirconium,
[5-($\eta^5$-Indenyl)-4,7-dimethyl-7-phenyl-($\eta^5$-4,5,6,7-tetrahydroindenyl)]dichlorotitan,
[5-($\eta^5$-Indenyl)-4,7-dimethyl-7-phenyl-($\eta^5$-4,5,6,7-tetrahydroindenyl)]dichlorozirconium,
[5-($\eta^5$-Indenyl)-4,7-dimethyl-7-naphtyl-($\eta^5$-4,5,6,7-tetrahydroindenyl)]dichlorotitan,
[5-($\eta^5$-Indenyl)-4,7-dimethyl-7-naphtyl-($\eta^5$-4,5,6,7-tetrahydroindenyl)]dichlorozirconium,
[5-($\eta^5$-Indenyl)-4,7-dimethyl-7-butyl-($\eta^5$-4,5,6,7-tetrahydroindenyl)]dichlorotitan,
[5-($\eta^5$-Indenyl)-4,7-dimethyl-7-butyl-($\eta^5$-4,5,6,7-tetrahydroindenyl)]dichlorozirconium,
[5-($\eta^5$-Cyclopentadienyl)-4,7,7-trimethyl-($\eta^5$-4,5,6,7-tetrahydrofluorenyl)]dichlorotitan,
[5-($\eta^5$-Cyclopentadienyl)-4,7,7-trimethyl-($\eta^5$-4,5,6,7-tetrahydrofluorenyl)]dichlorozirconium,
[5-($\eta^5$-Cyclopentadienyl)-4,7,7-triphenyl-($\eta^5$-4,5,6,7-tetrahydrofluorenyl)]dichlorotitan,
[5-($\eta^5$-Cyclopentadienyl)-4,7,7-triphenyl-($\eta^5$-4,5,6,7-tetrahydrofluorenyl)]dichlorozirconium,
[5-($\eta^5$-Cyclopentadienyl)-4,7-dimethyl-7-phenyl-($\eta^5$-4,5,6,7-tetrahydrofluorenyl)]dichlorotitan,

[5-($\eta^5$-Cyclopentadienyl)-4,7-dimethyl-7-phenyl-($\eta^5$-4,5,6,7-tetrahydrofluorenyl)]dichlorozirconium,
[5-($\eta^5$-Cyclopentadienyl)-4,7-dimethyl-7-naphtyl-($\eta^5$-4,5,6,7-tetrahydrofluorenyl)]dichlorotitan,
[5-($\eta^5$-Cyclopentadienyl)-4,7-dimethyl-7-naphtyl-($\eta^5$-4,5,6,7-tetrahydrofluorenyl)]dichlorozirconium,
[5-($\eta^5$-Cyclopentadienyl)-4,7-dimethyl-7-butyl-($\eta^5$-4,5,6,7-tetrahydrofluorenyl)]dichlorotitan,
[5-($\eta^5$-Cyclopentadienyl)-4,7-dimethyl-7-butyl-($\eta^5$-4,5,6,7-tetrahydrofluorenyl)]dichlorozirconium,
[5-($\eta^5$-Fluorenyl)-4,7,7-trimethyl-($\eta^5$-4,5,6,7-tetrahydroindenyl)]dichlorotitan,
[5-($\eta^5$-Fluorenyl)-4,7,7-trimethyl-($\eta^5$-4,5,6,7-tetrahydroindenyl)]dichlorozirconium,
[5-($\eta^5$-Fluorenyl)-4,7,7-triphenyl-($\eta^5$-4,5,6,7-tetrahydroindenyl)]dichlorotitan,
[5-($\eta^5$-Fluorenyl)-4,7,7-triphenyl-($\eta^5$-4,5,6,7-tetrahydroindenyl)]dichlorozirconium,
[5-($\eta^5$-Fluorenyl)-4,7-dimethyl-7-phenyl-($\eta^5$-4,5,6,7-tetrahydroindenyl)]dichlorotitan,
[5-($\eta^5$-Fluorenyl)-4,7-dimethyl-7-phenyl-($\eta^5$-4,5,6,7-tetrahydroindenyl)]dichlorozirconium,
[4-($\eta^5$-3'-Isopropyl-cyclopentadienyl)-4,7,7-trimethyl-$\eta^5$-4,5,6,7-tetrahydroindenyl]dichlorozirkonium
[4-($\eta^5$-4'-Isopropyl-cyclopentadienyl)-4,7,7-trimethyl-$\eta^5$-4,5,6,7-tetrahydroindenyl]dichlorozirkonium
[4-($\eta^5$-3'-Isopropyl-cyclopentadienyl)-2-isopropyl-4,7,7-trimethyl-$\eta^5$-4,5,6,7-tetrahydroindenyl]-dichlorozirkonium
[4-($\eta^5$-4'-Isopropyl-cyclopentadienyl)-2-isopropyl-4,7,7-trimethyl-$\eta^5$-4,5,6,7-tetrahydroindenyl]-dichlorozirkonium

[4-($\eta^5$-3'-Isopropyl-cyclopentadienyl)-4,7-dimethyl-7-phenyl-$\eta^5$-4,5,6,7-tetrahydroindenyl]-dichlorozirkonium
[4-($\eta^5$-4'-Isopropyl-cyclopentadienyl)-4,7-dimethyl-7-phenyl-$\eta^5$-4,5,6,7-tetrahydroindenyl]-dichlorozirkonium
[4-($\eta^5$-3'-Isopropyl-cyclopentadienyl)-2-isopropyl-4,7-dimethyl-7-phenyl-$\eta^5$-4,5,6,7-tetrahydroindenyl]-dichlorozirkonium
[4-($\eta^5$-4'-Isopropyl-cyclopentadienyl)-2-isopropyl-4,7-dimethyl-7-phenyl-$\eta^5$-4,5,6,7-tetrahydroindenyl]-dichlorozirkonium
[4-($\eta^5$-3'-Trimethylsilyl-cyclopentadienyl)-4,7,7-trimethyl-$\eta^5$-4,5,6,7-tetrahydroindenyl]-dichlorozirkonium
[4-($\eta^5$-4'-Trimethylsilyl-cyclopentadienyl)-4,7,7-trimethyl-$\eta^5$-4,5,6,7-tetrahydroindenyl]-dichlorozirkonium
[4-($\eta^5$-3'-Trimethylsilyl-cyclopentadienyl)-2-trimethylsilyl-4,7,7-trimethyl-$\eta^5$-4,5,6,7-tetrahydroindenyl]-dichlorozirkonium
[4-($\eta^5$-4'-Trimethylsilyl-cyclopentadienyl)-2-trimethylsilyl-4,7,7-trimethyl-$\eta^5$-4,5,6,7-tetrahydroindenyl]-dichlorozirkonium

[4-($\eta^5$-3'-(tert.-Butyl-dimethylsilyl)-cyclopentadienyl)-4,7,7-trimethyl-$\eta^5$-4,5,6,7-tetrahydroindenyl]-dichlorozirkonium
[4-($\eta^5$-4'-(tert.-Butyl-dimethylsilyl)-cyclopentadienyl)-4,7,7-trimethyl-$\eta^5$-4,5,6,7-tetrahydroindenyl]-dichlorozirkonium
[4-($\eta^5$-3'-(tert.-Butyl-dimethylsilyl)-cyclopentadienyl)-2-(tert.-butyl-dimethylsilyl)-4,7,7-trimethyl-$\eta^5$-4,5,6,7-tetrahydroindenyl]-dichlorozirkonium
[4-($\eta^5$-4'-(tert.-Butyl-dimethylsilyl)-cyclopentadienyl)-2-(tert.-butyl-dimethylsilyl)-4,7,7-trimethyl-$\eta^5$-4,5,6,7-tetrahydroindenyl]-dichlorozirkonium

[4($\eta^5$-3'-Trimethylsilyl-cyclopentadienyl)-4,7-dimethyl-7-phenyl-$\eta^5$-4,5,6,7-tetrahydroindenyl]-dichlorozirkonium
[4-($\eta^5$-4'-Trimethylsilyl-cyclopentadienyl)-4,7-dimethyl-7-phenyl-$\eta^5$-4,5,6,7-tetrahydroindenyl]-dichlorozirkonium
[4-($\eta^5$-3'-Trimethylsilyl-cyclopentadienyl)-2-trimethylsilyl-4,7-dimethyl-7-phenyl-$\eta^5$-4,5,6,7-tetrahydroindenyl]-dichlorozirkonium
[4-($\eta^5$-4'-Trimethylsilyl-cyclopentadienyl)-2-trimethylsilyl-4,7-dimethyl-7-phenyl-$\eta^5$-4,5,6,7-tetrahydroindenyl]-dichlorozirkonium
[4-($\eta^5$-3'-Phenyl-cyclopentadienyl)-4,7,7-trimethyl-$\eta^5$-4,5,6,7-tetrahydroindenyl]dichlorozirkonium
[4-($\eta^5$-4'-Phenyl-cyclopentadienyl)-4,7,7-trimethyl-$\eta^5$-4,5,6,7-tetrahydroindenyl]dichlorozirkonium
[4-($\eta^5$-3'-Phenyl-cyclopentadienyl)-2-phenyl-4,7,7-trimethyl-$\eta^5$-4,5,6,7-tetrahydroindenyl]-dichlorozirkonium
[4-($\eta^5$-4'-Phenyl-cyclopentadienyl)-2-phenyl-4,7,7-trimethyl-$\eta^5$-4,5,6,7-tetrahydroindenyl]-dichlorozirkonium
[4-($\eta^5$-3'-Phenyl-cyclopentadienyl)-4,7-dimethyl-7-phenyl-$\eta^5$-4,5,6,7-tetrahydroindenyl]-dichlorozirkonium
[4-($\eta^5$-4'-Phenyl-cyclopentadienyl)-4,7-dimethyl-7-phenyl-$\eta^5$-4,5,6,7-tetrahydroindenyl]-dichlorozirkonium
[4-($\eta^5$-3'-Phenyl-cyclopentadienyl)-2-phenyl-4,7-dimethyl-7-phenyl-$\eta^5$-4,5,6,7-tetrahydroindenyl]-dichlorozirkonium
[4-($\eta^5$-4'-Phenyl-cyclopentadienyl)-2-phenyl-4,7-dimethyl-7-phenyl-$\eta^5$-4,5,6,7-tetrahydroindenyl]-dichlorozirkonium

[4-($\eta^5$-4'-Methyl-cyclopentadienyl)-4,7,7-trimethyl-$\eta^5$-4,5,6,7-tetrahydroindenyl]-dichlorozirkonium
[4-($\eta^5$-4'-Methyl-cyclopentadienyl)-2-methyl-4,7,7-trimethyl-$\eta^5$-4,5,6,7-tetrahydroindenyl]-dichlorozirkonium
[4-($\eta^5$-4'-Methyl-cyclopentadienyl)-2-methyl-4,7-dimethyl-7-phenyl-$\eta^5$-4,5,6,7-tetrahydroindenyl]-dichlorozirkoni-

um
[4-($\eta^5$-4'-tert.-Butyl-cyclopentadienyl)-2-tert.-butyl-4,7,7-trimethyl-$\eta^5$-4,5,6,7-tetrahydroindenyl]-dichlorozirkonium
[4($\eta^5$-3'-tert.-Butyl-cyclopentadienyl)-2-tert.-butyl-4,7,7-trimethyl-$\eta^5$-4,5,6,7-tetrahydroindenyl]-dichlorozirkonium
[4-($\eta^5$-4'-tert.-Butyl-cyclopentadienyl)-4,7,7-trimethyl-$\eta^5$-4,5,6,7-tetrahydroindenyl]dichlorozirkonium

[4-($\eta^5$-3'-Benzyl-cyclopentadienyl)-4,7,7-trimethyl-$\eta^5$-4,5,6,7-tetrahydroindenyl]dichlorozirkonium
[4-($\eta^5$-4'-Benzyl-cyclopentadienyl)-4,7,7-trimethyl-$\eta^5$-4,5,6,7-tetrahydroindenyl]dichlorozirkonium
[4-($\eta^5$-3'-Benzyl-cyclopentadienyl)-2-benzyl-4,7,7-trimethyl-$\eta^5$-4,5,6,7-tetrahydroindenyl]-dichlorozirkonium
[4-($\eta^5$-4'-Benzyl-cyclopentadienyl)-2-benzyl-4,7,7-trimethyl-$\eta^5$-4,5,6,7-tetrahydroindenyl]-dichlorozirkonium

[4-($\eta^5$-Cyclopentadienyl)-4-butyl-7,7-dimethyl-$\eta^5$-4,5,6,7-tetrahydroindenyl]dichlorozirkonium
[4-($\eta^5$-Cyclopentadienyl)-4-butyl-7-methyl-7-butyl-$\eta^5$-4,5,6,7-tetrahydroindenyl]-dichlorozirkonium
[4-($\eta^5$-Cyclopentadienyl)-4-methyl-7,7-dibutyl-$\eta^5$-4,5,6,7-tetrahydroindenyl]dichlorozirkonium
[4-($\eta^5$-Cyclopentadienyl)-4-methyl-7-butyl-7-phenyl-$\eta^5$-4,5,6,7-tetrahydroindenyl]dichlorozirkonium
[4-($\eta^5$-Cyclopentadienyl)-4-butyl-7-methyl-7-phenyl-$\eta^5$-4,5,6,7-tetrahydroindenyl]dichlorozirkonium

[4-($\eta^5$-3'-Isopropyl-cyclopentadienyl)-2-isopropyl-4-butyl-7,7-dimethyl-$\eta^5$-4,5,6,7-tetrahydroindenyl]-dichlorozirkonium
[4-($\eta^5$-4'-Isopropyl-cyclopentadienyl)-2-isopropyl-4-butyl-7,7-dimethyl-$\eta^5$-4,5,6,7-tetrahydroindenyl]-dichlorozirkonium
[4-($\eta^5$-3'-Isopropyl-cyclopentadienyl)-2-isopropyl-4-butyl-7-butyl-7-methyl-$\eta^5$-4,5,6,7-tetrahydroindenyl]-dichlorozirkonium
[4-($\eta^5$-4'-Isopropyl-cyclopentadienyl)-2-isopropyl-4-butyl-7-methyl-7-phenyl-$\eta^5$-4,5,6,7-tetrahydroindenyl]-dichlorozirkonium

[4-($\eta^5$-3'-Isopropyl-cyclopentadienyl)-4-butyl-7-butyl-7-methyl-$\eta^5$-4,5,6,7-tetrahydroindenyl]-dichlorozirkonium
[4-($\eta^5$-4'-Isopropyl-cyclopentadienyl)-4-butyl-7-methyl-7-phenyl-$\eta^5$-4,5,6,7-tetrahydroindenyl]-dichlorozirkonium

[4-($\eta^5$-Cyclopentadienyl)-4,7-dimethyl-7-(2-propen-1-yl)-($\eta^5$-4,5,6,7-tetrahydroindenyl]-dichlorozirkonium
[4-($\eta^5$-3'-Isopropylcyclopentadienyl)-4,7-dimethyl-7-(2-propen-1-yl)-($\eta^5$-4'5,6,7-tetrahydroindenyl]-dichlorozirkonium

[4-($\eta^5$-Cyclopentadienyl)-4,7-dimethyl-7-(3-(9-borabicyclo{3,3,1}nonyl-B)propyl)-($\eta^5$-4,5,6,7-tetrahydroindenyl] dichlorozirkonium
[4-($\eta^5$-3'-Isopropyl-cyclopentadienyl)-4,7-dimethyl-7-(3-(9-borabicyclo{3,3,1}nonyl-B)propyl)-($\eta^5$-4,5,6,7-tetrahydroindenyl]dichlorozirkonium
[4-($\eta^5$-4'-Isopropyl-cyclopentadienyl)-4,7-dimethyl-7-(3-(9-borabicyclo{3,3,1}nonyl-B)propyl)-($\eta^5$-4,5,6,7-tetrahydroindenyl]dichlorozirkonium
[4-($\eta^5$-3'-tert.-Butyl-cyclopentadienyl)-4,7-dimethyl-7-(3-(9-borabicyclo{3,3,1}nonyl-B)propyl)-($\eta^5$-4,5,6,7-tetrahydroindenyl]dichlorozirkonium
[4-($\eta^5$-4'-tert.-Butyl-cyclopentadienyl)-4,7-dimethyl-7-(3-(9-borabicyclo{3,3,1}nonyl-B)propyl)-($\eta^5$-4,5,6,7-tetrahydroindenyl]dichlorozirkonium
[4-($\eta^5$-3'-Methyl-cyclopentadienyl)-4,7-dimethyl-7-(3-(9-borabicyclo{3,3,1}nonyl-B)propyl)-($\eta^5$-4,5,6,7-tetrahydjoindenyl]dichlorozirkonium
[4-($\eta^5$-3'-Isopropyl-cyclopentadienyl)-2-isopropyl-4,7-dimethyl-7-(3-(9-borabicyclo{3,3,1}nonyl-B)propyl)-($\eta^5$-4,5,6,7-tetrahydroindenyl]dichlorozirkonium
[4-($\eta^5$-4'-Isopropyl-cyclopentadienyl)-2-isopropyl-4,7-dimethyl-7-(3-(9-borabicyclo{3,3,1}nonyl-B)propyl)-($\eta^5$-4,5,6,7-tetrahydroindenyl]dichlorozirkonium

[4-($\eta^5$-3'-Ethyl-cyclopentadienyl)-4,7,7-trimethyl-$\eta^5$-4,5,6,7-tetrahydroindenyl]dichlorozirkonium
[4-($\eta^5$-4'-Ethyl-cyclopentadienyl)-4,7,7-trimethyl-$\eta^5$-4,5,6,7-tetrahydroindenyl]dichlorozirkonium
[4-($\eta^5$-3'-Ethyl-cyclopentadienyl)-2-ethyl-4,7,7-trimethyl-$\eta^5$-4,5,6,7-tetrahydroindenyl]dichlorozirkonium
[4-($\eta^5$-4'-Ethyl-cyclopentadienyl)-2-ethyl-4,7,7-trimethyl-$\eta^5$-4,5,6,7-tetrahydroindenyl]dichlorozirkonium

[4-($\eta^5$-3'-Isopropyl-cyclopentadienyl)-2-phenyl-4,7,7-trimethyl-$\eta^5$-4,5,6,7-tetrahydroindenyl]-dichlorozirkonium
[4-($\eta^5$-4'-Isopropyl-cyclopentadienyl)-2-phenyl-4,7,7-trimethyl-$\eta^5$-4,5,6,7-tetrahydroindenyl]-dichlorozirkonium
[4-($\eta^5$-3'-Isopropyl-cyclopentadienyl)-2-methyl-4,7,7-trimethyl-$\eta^5$-4,5,6,7-tetrahydroindenyl]-dichlorozirkonium

[4-($\eta^5$-4'-Isopropyl-cyclopentadienyl)-2-methyl-4,7,7-trimethyl-$\eta^5$-4,5,6,7-tetrahydroindenyl]-dichlorozirkonium
[4-($\eta^5$-3'-Isopropyl-cyclopentadienyl)-2-phenyl-4,7,7-trimethyl-$\eta^5$-4,5,6,7-tetrahydroindenyl]-dichlorozirkonium
[4-($\eta^5$-4'-Isopropyl-cyclopentadienyl)-2-phenyl-4,7,7-trimethyl-$\eta^5$-4,5,6,7-tetrahydroindenyl]-dichlorozirkonium
[4-($\eta^5$-2-Indenyl)-4,7,7-trimethyl-$\eta^5$-4,5,6,7-tetrahydroindenyl]-dichlorozirkonium
[4-($\eta^5$-2-(4,5,6,7-tetrahydro)-indenyl)-4,7,7-trimethyl-$\eta^5$-4,5,6,7-tetrahydroindenyl]-dichlorozirkonium
[4-($\eta^5$-2-Indenyl)-2-methyl-4,7,7-trimethyl-$\eta^5$-4,5,6,7-tetrahydroindenyl]-dichlorozirkonium
[4-($\eta^5$-2-(4,5,6,7-tetrahydro)-indenyl)-2-isopropyl-4,7,7-trimethyl-$\eta^5$-4,5,6,7-tetrahydroindenyl]-dichlorozirkonium
[4-($\eta^5$-2-Indenyl)-2-phenyl-4,7,7-trimethyl($\eta^5$-4,5,6,7-tetrahydroindenyl]-dichlorozirkonium
[4-($\eta^5$-2-(4,5,6,7-tetrahydro)-indenyl)-2-butyl-4,7,7-trimethyl-$\eta^5$-4,5,6,7-tetrahydroindenyl]-dichlorozirkonium
[4-($\eta^5$-2-Indenyl)-2-trimethylsilyl-4,7,7-trimethyl-$\eta^5$-4,5,6,7-tetrahydroindenyl]-dichlorozirkonium
[4-($\eta^5$-2-(4,5,6,7-tetrahydro)-indenyl)-2-trimethylsilyl-4,7,7-trimethyl-($\eta^5$-4,5,6,7-tetrahydroindenyl]-dichlorozirkonium
[4-($\eta^5$-2-Indenyl)-2-isopropyl-4,7,7-trimethyl-$\eta^5$-4,5,6,7-tetrahydroindenyl]-dichlorozirkonium
[4-($\eta^5$-2-(4,5,6,7-tetrahydro)-indenyl)-2-methyl-4,7,7-trimethyl-$\eta^5$-4,5,6,7-tetrahydroindenyl]-dichlorozirkonium
[4-($\eta^5$-2-Indenyl)-2-butyl-4,7,7-trimethyl-$\eta^5$-4,5,6,7-tetrahydroindenyl]-dichlorozirkonium
[4-($\eta^5$-2-(4,5,6,7-tetrahydro)-indenyl)-2-phenyl-4,7,7-trimethyl-$\eta^5$-4,5,6,7-tetrahydroindenyl]-dichlorozirkonium

[4-($\eta^5$-3'-Isopropyl-cyclopentadienyl)-2-methyl-4,7,7-trimethyl-$\eta^5$-4,5,6,7-tetrahydroindenyl]-dichlorozirkonium
[4-($\eta^5$-4'-Isopropyl-cyclopentadienyl)-2-methyl-4,7,7-trimethyl-$\eta^5$-4,5,6,7-tetrahydroindenyl]-dichlorozirkonium

[4-($\eta^5$-3'-Isopropyl-cyclopentadienyl)-4,7,7-trimethyl-$\eta^5$-4,5,6,7-tetrahydrofluorenyl]-dichlorozirkonium
[4-($\eta^5$-4'-Isopropyl-cyclopentadienyl)-4,7,7-trimethyl-($\eta^5$-4,5,6,7-tetrahydrofluorenyl]-dichlorozirkonium
[4-($\eta^5$-3'-Isopropyl-cyclopentadienyl)-2-isopropyl-4,7,7-trimethyl-$\eta^5$-4,5,6,7-tetrahydrofluorenyl]-dichlorozirkonium
[4-($\eta^5$-4'-Isopropyl-cyclopentadienyl)-2-isopropyl-4,7,7-trimethyl-$\eta^5$-4,5,6,7-tetrahydrofluorenyl]-dichlorozirkonium

[4-($\eta^5$-3'-Butyl-cyclopentadienyl)-4,7,7-trimethyl-$\eta^5$-4,5,6,7-tetrahydroindenyl]dichlorozirkonium
[4-($\eta^5$-4'-Butyl-cyclopentadienyl)-4,7,7-trimethyl-$\eta^5$-4,5,6,7-tetrahydroindenyl]-dichlorozirkonium
[4-($\eta^5$-3'-Butyl-cyclopentadienyl)-2-isopropyl-4,7,7-trimethyl-$\eta^5$-4, 5 ,6,7-tetrahydroindenyl]-dichlorozirkonium
[4-($\eta^5$-4'-Butyl-cyclopentadienyl)-2-isopropyl-4,7,7-trimethyl-$\eta^5$-4,5,6,7-tetrahydroindenyl]-dichlorozirkonium
[4-($\eta^5$-3'-Butyl-cyclopentadienyl)-2-butyl-4,7,7-trimethyl-$\eta^5$-4,5,6,7-tetrahydroindenyl]-dichlorozirkonium
[4-($\eta^5$-4'-Butyl-cyclopentadienyl)-2-butyl-4,7,7-trimethyl-$\eta^5$-4,5,6,7-tetrahydroindenyl]-dichlorozirkonium

[4-($\eta^5$-3',4'-Dimethyl-cyclopentadienyl)-4,7,7-trimethyl-$\eta^5$-4,5,6,7-tetrahydroindenyl]-dichlorozirkonium
[4-($\eta^5$-3',4'-Diisopropyl-cyclopentadienyl)-4,7,7-trimethyl-$\eta^5$-4,5,6,7-tetrahydroindenyl]-dichlorozirkonium
[4-($\eta^5$-3',4'-Diphenyl-cyclopentadienyl)-2-isopropyl-4,7,7-trimethyl-$\eta^5$-4,5,6,7-tetrahydroindenyl]-dichlorozirkonium
[4-($\eta^5$-3',4'-Diethyl-cyclopentadienyl)-2-isopropyl-4,7,7-trimethyl-$\eta^5$-4,5,6,7-tetrahydroindenyl]-dichlorozirkonium

[4-($\eta^5$-3',4'-Dibutyl-cyclopentadienyl)-2-isopropyl-4,7,7-trimethyl-$\eta^5$-4,5,6,7-tetrahydroindenyl]-dichlorozirkonium

[4-($\eta^5$-3'Methyl-4'-phenyl-cyclopentadienyl)-4,7,7-trimethyl-$\eta^5$-4,5,6,7-tetrahydroindenyl]-dichlorozirkonium
[4-($\eta^5$-3'-Ethyl-4'-phenyl-cyclopentadienyll-4,7,7-trimethyl-$\eta^5$-4,5,6,7-tetrahydroindenyl]-dichlorozirkonium
[4-($\eta^5$-3'-Isopropyl-4'-phenyl-cyclopentadienyl)-4,7,7-trimethyl-$\eta^5$-4,5,6,7-tetrahydroindenyl]-dichlorozirkonium
[4-($\eta^5$-3'-Methyl-4'-isopropyl-cyclopentadienyl)-4,7,7-trimethyl-$\eta^5$-4,5,6,7-tetrahydroindenyl]-dichlorozirkonium,
(4-($\eta^5$.3-t-butyl-cyclopentadienyl)-4,6,6-trimethyl-($\eta^5$-2-t-butyl-4,5-tetrahydropentalen))dichlorozirconium,
(4-($\eta^5$-cyclopentadienyl)-4,6,6-trimethyl-($\eta^5$-4,5-tetrahydropentalen)) dichlorozirconium,
Silizium-bis($\eta^5$-(2-propandiyl)-cyclopentadienyl)dichlorozirconium,
Silizium-bis($\eta^5$-12-propandiyl)-cyclopentadienyl)dichlorozirconium,
Germanium-bis($\eta^5$-(2-propandiyl)-2-methylcyclopentadienyl)dichlorozirconium.
[4-($\eta^5$-3'-Methyl-4'-naphthyl-cyclopentadienyl)-4,7,7-trimethyl-$\eta^5$-4,5,6,7-tetrahydroindenyl]-dichlorozirkonium
[4-(η5-3'Methyl-4'-butyl-cyclopentadienyl)-4,7,7-trimethyl-$\eta^5$-4,5,6,7-tetrahydroindenyl]-dichlorozirkonium

Die Benennung der voranstehend genannten erfindungsgemäßen Verbindungen soll anhand der Verbindung [4-($\eta^5$-4'-Methyl-cyclopentadienyl)-4,7,7-trimethyl-($\eta^5$-4,5,6,7-tetrahydroindenyl)]dichlorozirconium veranschaulicht werden. Das Ringsystem, welches die beiden Cyclopentadienylliganden dieser Verbindung verbrückt, weist sechs Kohlenstoffringatome (C4, C5, C6, C7, C8, C9) und drei Methylsubstituenten auf. Eine Cyclopentadienylgruppe ist an das

Ringsystem einfach anelliert, die zweite befindet sich als Substituent an dem Ringsystem.

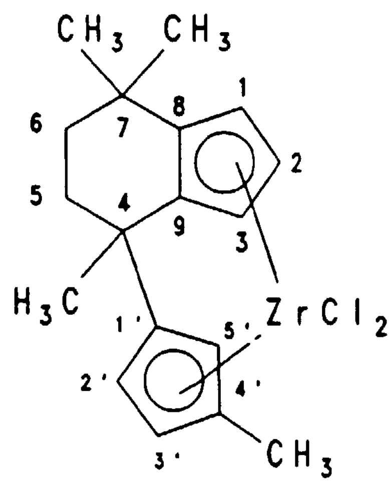

Die nachfolgend genannten Verbindungen sind nach IUPAC-Nomenklatur benannt.

[$\eta^5$-9-($\eta^5$-cyclopentadienyl)tricyclo[6.1.1.$0^{2,6}$]deca-2,5-dienyl]dichlorotitan,
[$\eta^5$-9-($\eta^5$-cyclopentadienyl)tricyclo[6.1.1.$0^{2,6}$]deca-2,5-dienyl]dichlorozirconium,
[$\eta^5$-7-methyl-9-($\eta^5$-cyclopentadienyl)tricyclo[6.1.1.$0^{2,6}$]deca-2,5-dienyl]dichlorotitan,
[$\eta^5$-7-methyl-9-($\eta^5$-cyclopentadienyl)tricyclo[6.1.1.$0^{2,6}$]deca-2,5-dienyl]dichlorozirconium,
[$\eta^5$-9-methyl-9-($\eta^5$-cyclopentadienyl)tricyclo[6.1.1.$0^{2,6}$]deca-2,5-dienyl]dichlorotitan,
[$\eta^5$-9-methyl-9-($\eta^5$-cyclopentadienyl)tricyclo[6.1.1.$0^{2,6}$]deca-2,5-dienyl]dichlorozirconium,
[$\eta^5$-10-($\eta^5$-cyclopentadienyl)tricyclo[5.2.1.$0^{2,6}$]deca-2,5-dienyl]dichlorotitan,
[$\eta^5$-10-($\eta^5$-cyclopentadienyl)tricyclo[5.2.1.$0^{2,6}$]deca-2,5-dienyl]dichlorozirconium,
[$\eta^5$-10-methyl-10-($\eta^5$-cyclopentadienyl)tricyclo[5.2.1.$0^{2,6}$]deca-2,5-dienyl]dichlorotitan,
[$\eta^5$-10-methyl-10-($\eta^5$-cyclopentadienyl)tricyclo[5.2.1.$0^{2,6}$]deca-2,5-dienyl]dichlorozirconium,
[$\eta^5$-9-($\eta^5$-cyclopentadienyl)tricyclo[5.2.2.$0^{2,6}$]undeca-2,5-dienyl]dichlorotitan,
[$\eta^5$-9-($\eta^5$-cyclopentadienyl)tricyclo[5.2.2.$0^{2,6}$]undeca-2,5-dienyl]dichlorozirconium,
[$\eta^5$-9-methy-9-($\eta^5$-cyclopentadienyl)tricyclo[5.2.2.$0^{2,6}$]undeca-2,5-dienyl]dichlorotitan,
[$\eta^5$-9-methy-9-($\eta^5$-cyclopentadienyl)tricyclo[5.2.2.$0^{2,6}$]undeca-2,5-dienyl]dichlorozirconium, [$\eta^5$-10-($\eta^5$-3'-methyl-cyclopentadienyl)tricyclo [5.2.1.$0^{2,6}$]deca-2,5-dienyl]dichlorotitan, [$\eta^5$-10-($\eta^5$-3'-methyl-cyclopentadienyl)tricyclo [5.2.1.$0^{2,6}$]deca-2,5-dienyl]-dichlorozirconium,
[$\eta^5$-10-methyl-10-($\eta^5$-3'-methyl-cyclopentadienyl)tricyclo[5.2.1.$0^{2,6}$]deca-2'5-dienyl]dichlorotitan,[$\eta^5$-10-methyl-10-($\eta^5$-3'-methyl-cyclopentadienyl) tricyclo[5.2.1.$0^{2,6}$]deca-2'5-dienyl]-dichlorozirconium,
[$\eta^5$-4-methyl-10-($\eta^5$-3'-methyl-cyclopentadienyl)tricyclo[5.2.1.$0^{2,6}$]deca-2,5-dienyl]dichlorotitan, [$\eta^5$-4-methyl-10-($\eta^5$-3'-methyl-cyclopentadienyl) tricyclo[5.2.1.$0^{2,6}$]deca-2,5-dienyl]-dichlorozirconium,
[$\eta^5$-4,10-dimethyl-10-($\eta^5$-3'-methyl-cyclopentadienyl)tricyclo [5.2.1.$0^{2,6}$]deca-2,5-dienyl]dichlorotitan,
[$\eta^5$-4,10-dimethyl-10-($\eta^5$-3'-methyl-cyclopentadienyl) tricyclo[5.2.1.$0^{2,6}$]deca-2,5-dienyl]dichlorozirconium,
[$\eta^5$-5-methyl-10-($\eta^5$-3'-methyl-cyclopentadienyl)tricyclo[5.2.1.$0^{2,6}$]deca-2,5-dienyl]dichlorotitan, [$\eta^5$-5-methyl-10-($\eta^5$-3'-methyl-cyclopentadienyl) tricyclo [5.2.1.$0^{2,6}$]deca-2,5-dienyl]-dichlorozirconium,
[$\eta^5$-5,10-dimethyl-10-($\eta^5$-3'-methyl-cyclopentadienyl) tricyclo[5.2.1.$0^{2,6}$]deca-2,5-dienyl]dichlorotitan,
[$\eta^5$-5,10-dimethyl-10-($\eta^5$-3'-methyl-cyclopentadienyl)tricyclo[5.2.1.$0^{2,6}$]deca-2,5-dienyl]dichlorozirconium.

Die Herstellung der erfindungsgemäßen Metallocene soll durch das nachfolgende Reaktionsschema anhand von Metallocenen der Formel VI veranschaulicht werden. Dabei bedeutet $M^4$ ein Metall der Hauptgruppe Ia, IIa oder IIIa.

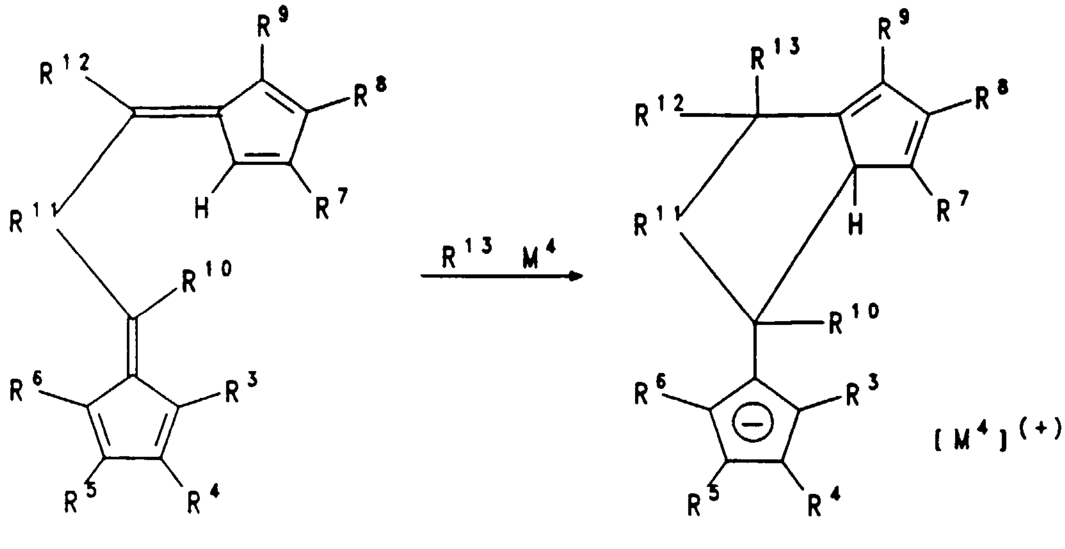


(II) (III)

(III) + $H_2O$

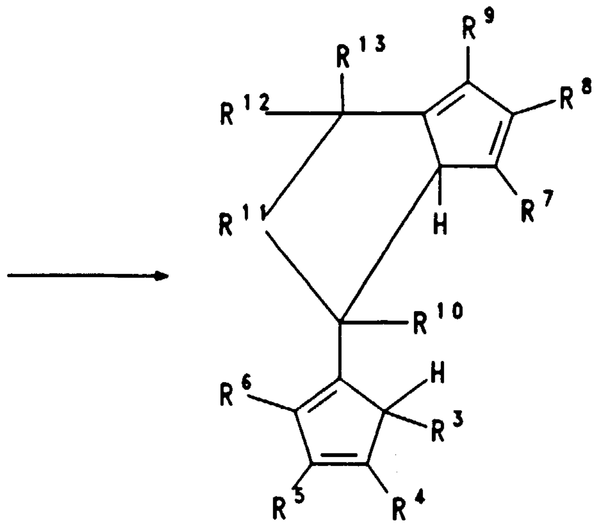

(IV)

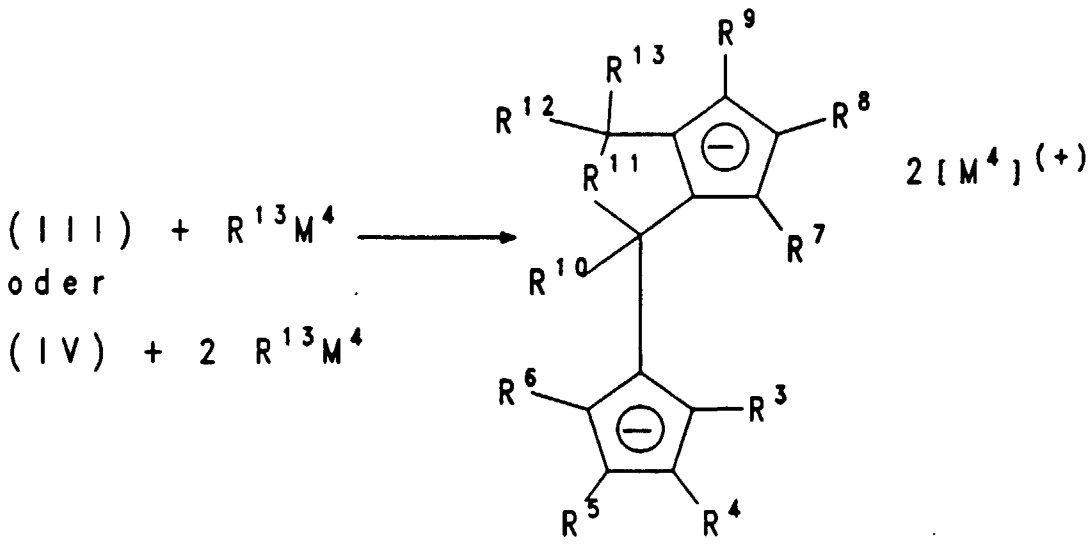


(V)

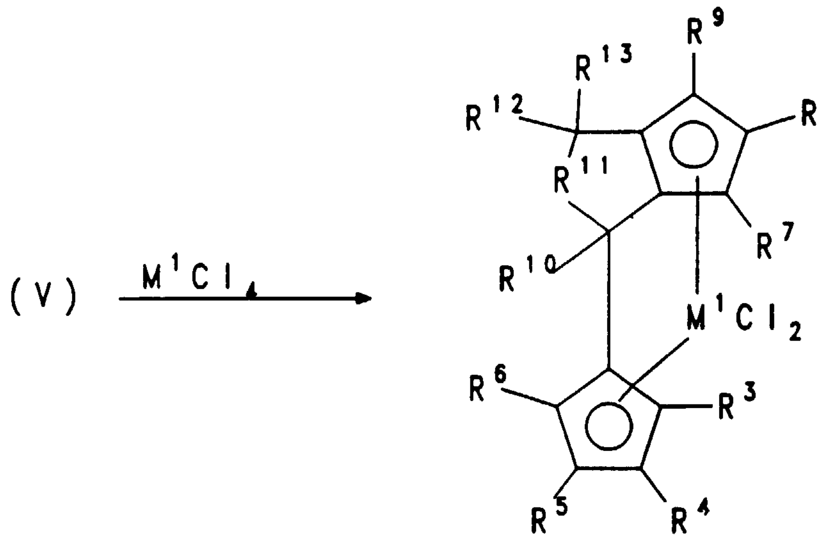


(VI)

Die Difulvene der Formel II werden aus Diketonen (Chem. Ber. 114, 1226 (1981) ibid 109, 3426 (1976); ibid 107, 2453 (1974)) bzw. Ketoaldehyden nach literaturbekannten Methoden hergestellt (J.Org. Chem. 57 (1992) 2504; ibid, 49 (1984) 1849; Chimia, 46 (1992) 377).

Die Umsetzung des Difulvens II zu dem Ligandsystem der Formel III erfolgt durch Umsetzung mit einer metallorganischen Verbindung (wie z.B. Methyllithium, Butyllithium, Phenyllithium) oder Grignardreagenzien.

Die Salze der Formel III können direkt zu den entsprechenden Dianion-Verbindungen der Formel V durch Deprotonierung mit beispielsweise Butyllithium umgesetzt werden. Die Hydrolyse von Verbindung III führt zur Bildung der Biscyclopentadien-Verbindung IV, welche als Konstitutionsisomerengemisch anfällt und chromatographisch gereinigt werden kann. Durch zweifache Deprotonierung von IV mit beispielsweise Butyllithium wird die Dianion-Verbindung der Formel V gebildet.

Die Umsetzung zu den verbrückten Metallocenen der Formel VI sowie die Isolierung der gewünschten Komplexe ist im Prinzip bekannt. Hierzu wird das Dianion der Formel V in einem inerten Lösungsmittel mit dem entsprechenden

Metallhalogenid wie z.B. Zirkoniumtetrachlorid umgesetzt. Die Metallocene der Formel VI können auch direkt aus den Difulvenen der Struktur II ohne Isolierung der Zwischenstufen synthetisiert werden.

Geeignete Lösungsmittel sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol.

Die Biscyclopentadienyl-Verbindungen der Formel IV, bei welchen mindestens einer der Reste $R^3$ bis $R^6$ sowie mindestens einer der Reste $R^7$ bis $R^9$ Wasserstoff ist, und mindestens einer der Reste $R^3$ bis $R^9$ von Wasserstoff verschieden ist, können durch literaturbekannte Methoden zu den Fulvenen der Formel IVa bzw. IVb umgesetzt werden. Dies soll durch das nachfolgende Reaktionsschema veranschaulicht werden, wobei
$R^{17}$, $R^{18}$, $R^{20}$ und $R^{21}$ gleich oder verschieden sind und wie $R^{10}$ definiert sind:

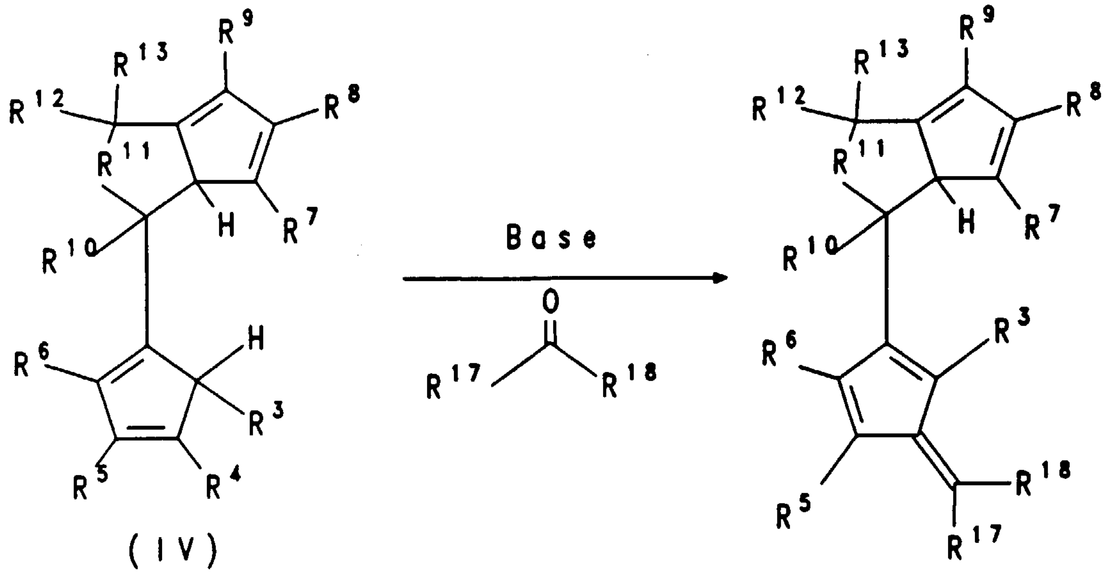


(IV)

(IVa)

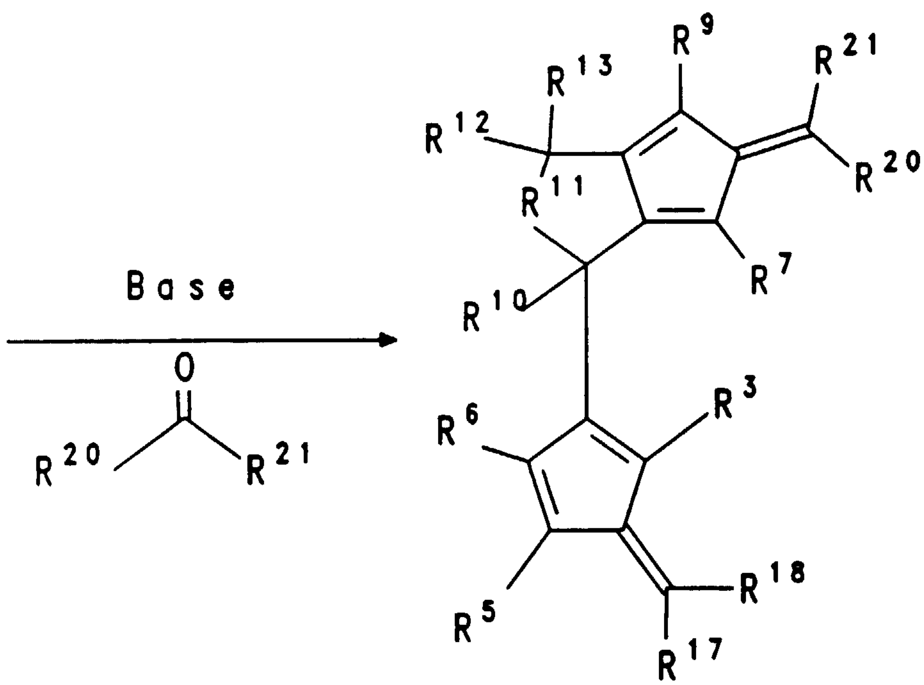


(IVb)

Durch Umsetzung des Fulvens IVa mit metallorganischen Verbindungen der Formel $R^{19}M^5$ (wobei $R^{17}$, $R^{18}$, $R^{19}$, $R^{20}$ und $R^{21}$ gleich oder verschieden sind und wie $R^{10}$ definiert sind; $M^5$ wie $M^4$ definiert ist) führt zur Bildung der Monoanion-Verbindung IIIa. Die Verwendung von zwei Äquivalenten $R^{19}M^5$ führt direkt zur Bildung der Dianion-Verbindung Va:

(IVa)

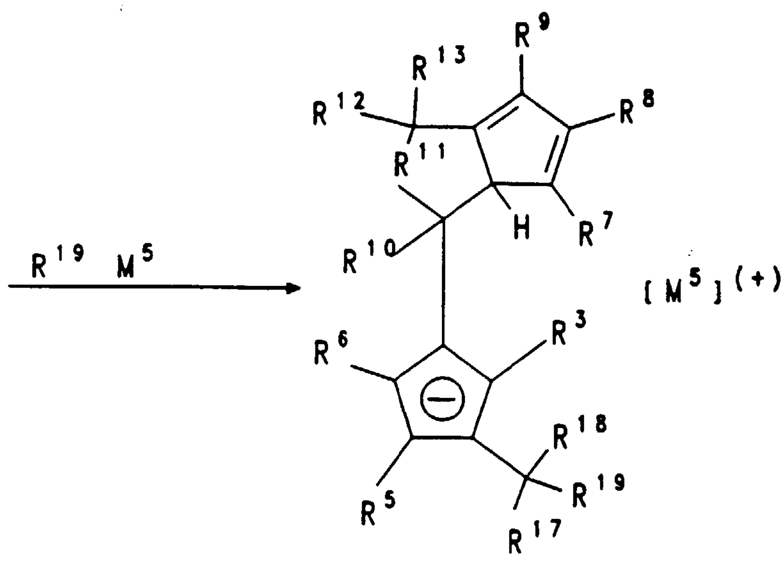


(IIIa)

(IIIa)

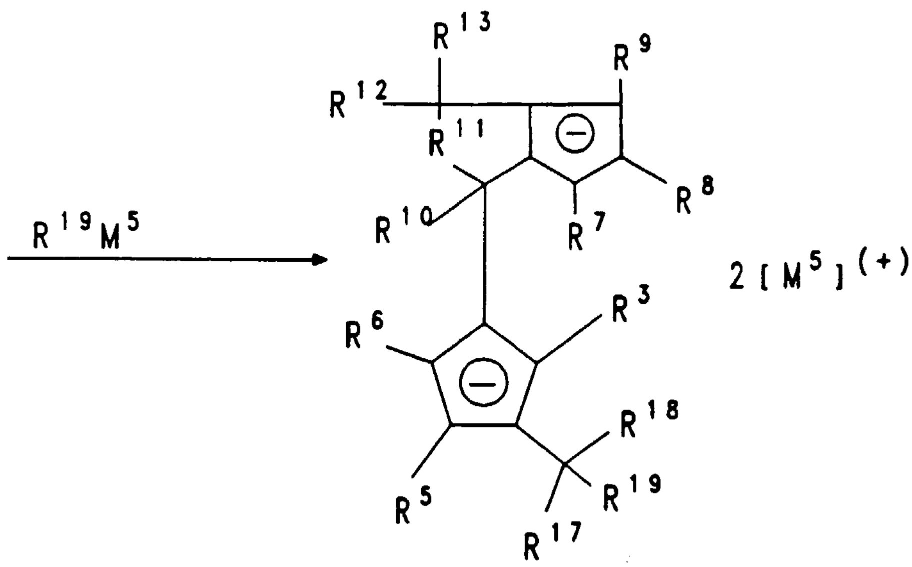


(Va)

Die Umsetzung des Fulvens IVb führt entsprechend der Umsetzung von IVa zur Bildung der Dianion-Verbindung Vb

(IVb)

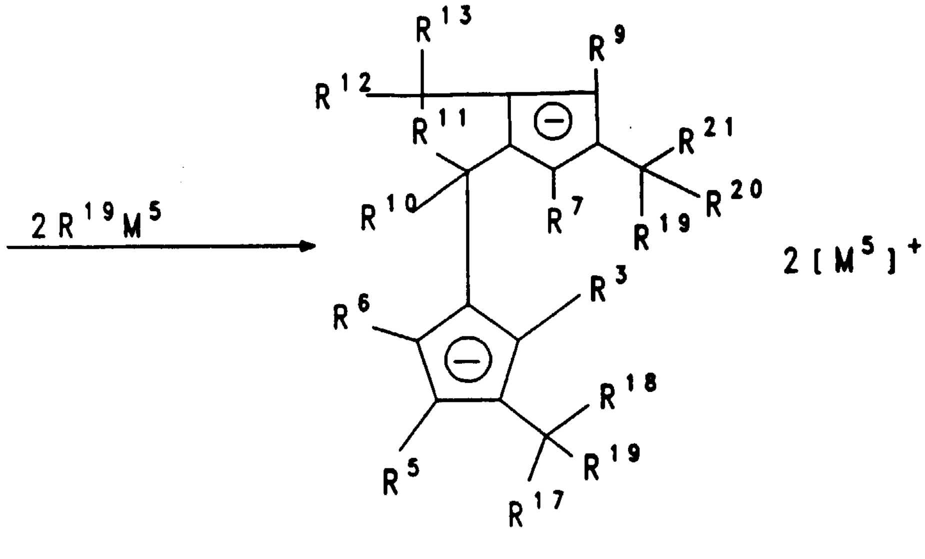


(Vb)

Die Biscyclopentadienyl-Anionen der Formel V, können mit Verbindungen

$R^{22}{}_pM^6X$ umgesetzt werden, worin
$M^6$ ein Element der III.-V. Hauptgruppe ist,
X eine Abgangsgruppe wie Halogen, Tosylat, Triflat ist,
$R^{22}$ wie $R^{10}$ definiert ist, und
p eine ganze Zahl von 1 bis 5 ist.

Dies soll durch das nachfolgende Reaktionsschema veranschaulicht werden:

(V)

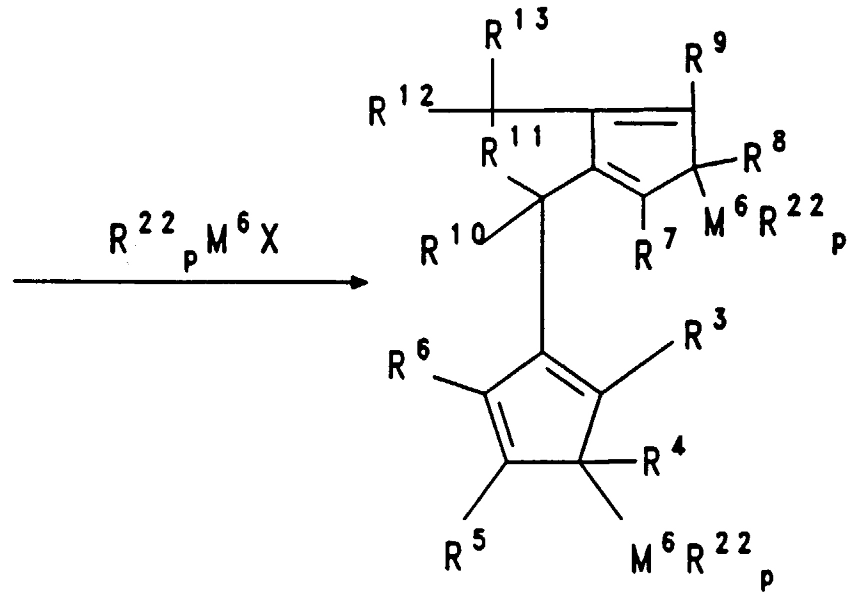


(VII)

Die Verbindungen der Formel VII, bei welchen mindestens einer der Reste $R^3$ bis $R^6$ sowie mindestens einer der Reste $R^7$ bis $R^9$ Wasserstoff ist, können zu den erfindungsgemäßen Metallocenen umgesetzt werden.

Die Salze der Formel IIIa können direkt zu den entsprechenden Dianion-Verbindungen der Formel Va durch Deprotonierung mit beispielsweise Butyllithium umgesetzt werden. Die Umsetzung zu den verbrückten Metallocenen der Formel I erfolgt entsprechend der Reaktion von V nach VI.

Eine weitere Möglichkeit zur Darstellung der erfindungsgemäßen Metallocen-Verbindungen besteht in der Umsetzung von mono- oder polycyclischen Ringsystemen, an denen eine Cyclopentadienylgruppe anelliert ist, wobei diese mono- oder polycyclischen Ringsysteme funktionelle Gruppen tragen, die als Abgangsgruppen in Substitutionsreaktionen dienen können (wie z.B. Bromid oder Tosylat), mit beispielsweise Cyclopentadienyl- oder Indenyllithiumverbindungen.

Die in dem erfindungsgemäßen Verfahren eingesetzten Metallocene sind hochaktive Katalysatorkomponenten für die Olefinpolymerisation. Je nach Substitutionsmuster der Liganden können die Metallocene als Isomerengemisch anfallen. Die Metallocene werden bevorzugt isomerenrein eingesetzt. Die Verwendung des Racemats ist in den meisten Fällen ausreichend.

Verwendet werden kann aber auch das reine Enantiomere in der (+)- oder (-)-Form. Mit den reinen Enantiomeren ist ein optisch aktives Polymer herstellbar. Getrennt werden sollten jedoch die konfigurationsisomeren Formen der Metallocene, da das polymerisationsaktive Zentrum (das Metallatom) in diesen Verbindungen ein Polymer mit anderen Eigenschaften erzeugt. Für bestimmte Anwendungen, beispielsweise weiche Formkörper, kann dies durchaus wünschenswert sein.

Bevorzugt werden in dem erfindungsgemäßen Verfahren eines oder mehrere Olefine der Formel $R^a$-CH = CH-$R^b$ homo- oder copolymerisiert, worin $R^a$ und $R^b$ gleich oder verschieden sind und ein Wasserstoffatom oder einen Kohlenwasserstoffrest mit 1 bis 20 C-Atomen, insbesondere 1 bis 10 C-Atomen, bedeuten, oder $R^a$ und $R^b$ zusammen mit den sie verbindenen Atomen einen oder mehrere Ringe bilden. Beispiele für solche Olefine sind 1-Olefine wie Ethylen, Propylen, 1-Buten, 1-Penten, 1-Hexen, 4-Methyl-1-penten oder 1-Octen, Styrol, cyclische und acyclische Diene wie 1,3-Butadien, Isopren, 1,4-Hexadien, Norbornadien, Vinylnorbornen oder 5-Ethylidennorbornen.
Bevorzugt wird in dem erfindungsgemäßen Verfahren Ethylen homopolymerisiert, oder Ethylen mit einem oder mehreren 1-Olefinen mit 3 bis 20 C-Atomen, wie Propylen, und/oder einem oder mehreren Dienen mit 4 bis 20 C-Atomen, wie 1,3-Butadien, copolymerisiert.

Die Polymerisation wird bevorzugt bei einer Temperatur von -60 bis 250°C, besonders bevorzugt 50 bis 200°C, durchgeführt. Der Druck beträgt bevorzugt 0,5 bis 2000 bar, besonders bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungsform ist die Gasphasenpolymerisation.

Bevorzugt enthält der in dem erfindungsgemäßen Verfahren eingesetzte Katalysator eine Metallocenverbindung. Es können auch Mischungen zweier oder mehrerer Metallocenverbindungen eingesetzt werden, z.B. zur Herstellung von Polyolefinen mit breiter oder multimodaler Molmassenverteilung.

Prinzipiell ist als Cokatalysator in dem erfindungsgemäßen Verfahren jede Verbindung geeignet, die aufgrund ihrer Lewis-Acidität das neutrale Metallocen in ein Kation überführen und dieses stabilisieren kann ("labile Koordination"). Darüber hinaus soll der Cokatalysator oder das aus ihm gebildete Anion keine weiteren Reaktionen mit dem gebildeten Metallocenkation eingehen (EP 427 697). Als Cokatalysator wird bevorzugt eine Aluminiumverbindung und/oder eine Borverbindung verwendet.

Die Borverbindung hat bevorzugt die Formel $R^{25}_xNH_{4-x}BR^{26}_4$, $R^{25}_xPH_{4-x}BR^{26}_4$, $R^{25}_3CBR^{26}_4$ oder $BR^{26}_3$, worin x eine Zahl von 1 bis 4, bevorzugt 3, bedeutet, die Reste $R^{25}$ gleich oder verschieden, bevorzugt gleich sind, und $C_1$-$C_{10}$-Alkyl oder $C_6$-$C_{18}$-Aryl sind, oder zwei Reste $R^{25}$ zusammen mit dem sie verbindenden Atomen einen Ring bilden, und die Reste $R^{26}$ gleich oder verschieden, bevorzugt gleich sind, und $C_6$-$C_{18}$-Aryl sind, das durch Alkyl, Haloalkyl oder Fluor substituiert sein kann. Insbesondere steht $R^{25}$ für Ethyl, Propyl, Butyl oder Phenyl und $R^{26}$ für Phenyl, Pentafluorophenyl, 3,5-Bistrifluoromethylphenyl, Mesityl, Xylyl oder Tolyl (EP 277 003, EP 277 004 und EP 426 638).

Bevorzugt wird als Cokatalysator eine Aluminiumverbindung wie Aluminoxan und/oder ein Aluminiumalkyl eingesetzt.

Besonders bevorzugt wird als Cokatalysator ein Aluminoxan, insbesondere der Formel IIa für den linearen Typ und/oder der Formel IIb für den cyclischen Typ verwendet,

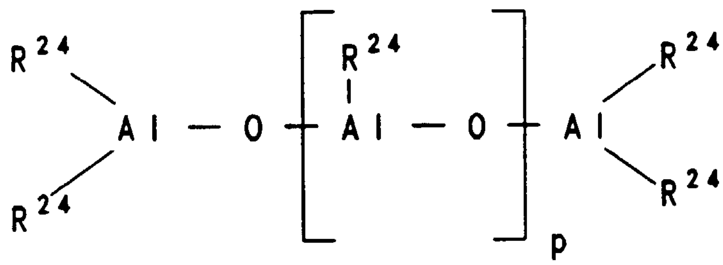

(IIa)

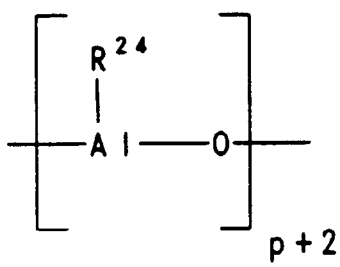

(IIb)

, wobei in den Formeln IIa und IIb die Reste $R^{24}$ gleich oder verschieden sind und Wasserstoff oder eine $C_1$-$C_{20}$-Kohlenwasserstoffgruppe wie eine $C_1$-$C_{18}$-Alkylgrupppe, eine $C_6$-$C_{18}$-Arylgruppe oder Benzyl bedeuten, und p eine ganze Zahl von 2 bis 50, bevorzugt 10 bis 35 bedeutet.

Bevorzugt sind die Reste $R^{24}$ gleich und bedeuten Wasserstoff, Methyl, Isobutyl, Phenyl oder Benzyl, besonders bevorzugt Methyl.

Sind die Reste $R^{24}$ verschieden, so sind sie bevorzugt Methyl und Wasserstoff oder alternativ Methyl und Isobutyl, wobei Wasserstoff oder Isobutyl bevorzugt in einem zahlenmäßigen Anteil von 0,01 bis 40 % (der Reste $R^{24}$) enthalten sind.

Die Verfahren zur Herstellung der Aluminoxane sind bekannt. Die genaue räumliche Stuktur der Aluminoxane ist nicht bekannt (J. Am. Chem. Soc. (1993) 115, 4971). Beispielsweise ist denkbar, daß sich Ketten und Ringe zu größeren zweidimensionalen oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Metallocenverbindung vor dem Einsatz in der Polymerisationsreaktion mit einem Cokatalysator,

insbesondere einem Aluminoxan vorzuaktivieren. Dadurch wird die Polymerisationsaktivität deutlich erhöht. Die Voraktivierung der Metallocenverbindung wird vorzugsweise in Lösung vorgenommen. Bevorzugt wird dabei die Metallocenverbindung in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösungsmenge. Das Metallocen kann in der gleichen Konzentration eingesetzt werden, vorzugsweise wird es jedoch in einer Menge von $10^{-4}$ bis 1 mol pro mol Aluminoxan eingesetzt. Die Voraktivierungsdauer beträgt 5 Minuten bis 60 Stunden, vorzugsweise 5 bis 60 Minuten. Man arbeitet bei einer Temperatur von -78 bis 100°C, vorzugsweise 0 bis 70°C.

Die Metallocenverbindung wird bevorzugt in einer Konzentration, bezogen auf das Übergangsmetall, von $10^{-3}$ bis $10^{-8}$, vorzugsweise $10^{-4}$ bis $10^{-7}$ mol Übergangsmetall pro $dm^3$ Lösemittel bzw. pro $dm^3$ Reaktorvolumen angewendet. Das Aluminoxan, wird bevorzugt in einer Konzentration von $10^{-6}$ bis $10^{-1}$ mol, vorzugsweise $10^{-5}$ bis $10^{-2}$ mol pro $dm^3$ Lösemittel bzw. pro $dm^3$ Reaktorvolumen verwendet. Die anderen genannten Cokatalysatoren werden in etwa äquimolaren Mengen zu der Metallocenverbindung verwendet. Prinzipiell sind aber auch höhere Konzentrationen möglich.

Das Aluminoxan kann auf verschiedene Arten nach bekannten Verfahren hergestellt werden. Eine der Methoden ist beispielsweise, daß eine Aluminiumkohlenwasserstoffverbindung und/oder ein Hydridoaluminiumkohlenwasserstoffverbindung mit Wasser (gasförmig, fest, flüssig oder gebunden - beispielsweise als Kristallwasser) in einem inerten Lösungsmittel (wie beispielsweise Toluol) umgesetzt wird. Zur Herstellung eines Aluminoxans mit verschiedenen Resten $R^{24}$ werden beispielsweise entsprechend der gewünschten Zusammensetzung zwei verschiedene Aluminiumtrialkyle mit Wasser umgesetzt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen vor dem Einsatz in der Polymerisationsreaktion mit einem Cokatalysator, insbesondere, Aluminoxan vorzuaktivieren. Dadurch wird die Polymerisationsaktivität deutlich erhöht und die Kornmorphologie verbessert. Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösungsmenge. Das Metallocen kann in der gleichen Konzentration eingesetzt werden, vorzugsweise wird es jedoch in einer Menge von $10^{-4}$ bis 1 mol pro mol Aluminoxan eingesetzt. Die Voraktivierung beträgt 5 Minuten bis 60 Stunden, vorzugsweise 5 bis 60 Minuten. Man arbeitet bevorzugt bei einer Temperatur von - 78 bis 150°C, vorzugsweise 0 bis 80°C.

Zur Entfernung von im Olefin vorhandenen Katalysatorgiften ist eine Reinigung mit einer Aluminiumverbindung, bevorzugt einem Aluminiumalkyl, wie Trimethylaluminium oder Triethylaluminium, vorteilhaft. Diese Reinigung kann sowohl im Polymerisationssystem selbst erfolgen, oder das Olefin wird vor der Zugabe in das Polymerisationssystem mit der Aluminiumverbindung in Kontakt gebracht und anschließend wieder abgetrennt.

Als Molmassenregler und/oder zur Steigerung der Katalysatoraktivität kann in dem erfindungsgemäßen Verfahren Wasserstoff zugegeben werden. Hierdurch können niedermolekulare Polyolefine wie Wachse erhalten werden.

Bevorzugt wird in dem erfindungsgemäßen Verfahren die Metallocenverbindung mit dem Cokatalysator außerhalb des Polymerisationsreaktors in einem separaten Schritt unter Verwendung eines geeigneten Lösemittels umgesetzt. Dabei kann eine Trägerung vorgenommen werden.

Im dem erfindungsgemäßen Verfahren kann mit Hilfe der Metallocenverbindung eine Vorpolymerisation erfolgen. Zur Vorpolymerisation wird bevorzugt das (oder eines der) in der Polymerisation eingesetzte(n) Olefin(e) verwendet.

Der in dem erfindungsgemäßen Verfahren eingesetzte Katalysator kann geträgert sein. Durch die Trägerung läßt sich beispielsweise die Kornmorphologie des hergestellten Polyolefins steuern. Dabei kann die Metallocenverbindung zunächst mit dem Träger und anschließend mit dem Cokatalysator umgesetzt werden. Es kann auch zunächst der Cokatalysator geträgert werden und anschließend mit der Metallocenverbindung umgesetzt werden. Auch ist es möglich das Reaktionsprodukt von Metallocenverbindung und Cokatalysator zu trägern. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form. Die Herstellung des geträgerten Cokatalysators kann beispielsweise wie in EP 567 952 beschrieben durchgeführt werden.

Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form.

Vorzugsweise wird der Cokatalysator, z.B. Aluminoxan, auf einen Träger wie beispielsweise Silikagele, Aluminiumoxide, festes Aluminoxan, andere anorganische Trägermaterialien oder auch ein Polyolefinpulver in feinverteilter Form aufgebracht und dann mit dem Metallocen umgesetzt.

Als anorganische Träger können Oxide eingesetzt werden, die flammenpyrolytisch durch Verbrennung von Element-Halogeniden in einer Knallgas-Flamme erzeugt wurden, oder als Kieselgele in bestimmten Korngrößen-Verteilungen und Kornformen herstellbar sind.

Die Herstellung des geträgerten Cokatalysators kann beispielsweise wie in EP 578 838 beschrieben in der folgenden Weise in einem Edelstahl-Reaktor in explosionsgeschützter Ausführung mit einem Umpumpsystem der Druckstufe 60 bar, mit Inertgasversorgung, Temperierung durch Mantelkühlung und zweitem Kühlkreislauf über einen Wärmetauscher am Umpumpsystem erfolgen. Das Umpumpsystem saugt den Reaktorinhalt über einen Anschluß im Reaktorboden mit einer Pumpe an und drückt ihn in einen Mischer und durch eine Steigleitung über einen Wärmetauscher in den Reaktor zurück. Der Mischer ist so gestaltet, daß sich in dem Zulauf ein verengter Rohrquerschnitt befindet, wo eine erhöhte Strömungsgeschwindigkeit entsteht, und in dessen Turbulenzzone axial und entgegen der Strömungsrichtung eine dünne Zuleitung geführt ist, durch welche - getaktet - jeweils eine definierte Menge Wasser unter 40 bar Argon eingespeist werden kann. Die Kontrolle der Reaktion erfolgt über einen Probennehmer am Umpumpkreislauf.

Im Prinzip sind jedoch auch andere Reaktoren geeignet.

Im vorstehend beschriebenen Reaktor mit 16 $dm^3$ Volumen werden 5 $dm^3$ Decan unter Inertbedingungen vorgelegt. 0,5 $dm^3$ (= 5,2 mol) Trimethylaluminium werden bei 25°C zugefügt. Danach werden 250 g Kieselgel SD 3216-30 (Grace AG), welche vorher bei 120°C in einem Argonfließbett getrocknet wurden, durch einen Feststofftrichter in den Reaktor eindosiert und mit Hilfe des Rührers und des Umpumpsystems homogen verteilt. Eine Gesamtmenge von 76,5 g Wasser wird in Portionen von 0,1 $cm^3$ während 3,25 h jeweils alle 15 s in den Reaktor gegeben. Der Druck, herrührend vom Argon und den entwickelten Gasen, wird durch ein Druckregelventil konstant bei 10 bar gehalten. Nachdem alles Wasser eingebracht worden ist, wird das Umpumpsystem abgeschaltet und das Rühren noch 5 h bei 25°C fortgesetzt.

Der in dieser Weise hergestellte geträgerte Cokatalysator wird als eine 10 %ige Suspension in n-Decan eingesetzt. Der Aluminiumgehalt ist 1,06 mmol Al pro $cm^3$ Suspension. Der isolierte Feststoff enthält 31 Gew.% Aluminium, das Suspensionsmittel enthält 0,1 Gew.% Aluminium.

Weitere Möglichkeiten der Herstellung eines geträgerten Cokatalysators sind in EP 578 838 beschrieben.

Danach wird das erfindungsgemäße Metallocen auf den geträgerten Cokatalysator aufgebracht, indem das gelöste Metallocen mit dem geträgerten Cokatalysator gerührt wird. Das Lösemittel wird entfernt und durch einen Kohlenwasserstoff ersetzt, in dem sowohl Cokatalysator als auch das Metallocen unlöslich sind.

Die Reaktion zu dem geträgerten Katalysatorsystem erfolgt bei einer Temperatur von -20 bis + 120°C, bevorzugt 0 bis 100°C, besonders bevorzugt bei 15 bis 40°C. Das Metallocen wird mit dem geträgerten Cokatalysator in der Weise umgesetzt, daß der Cokatalysator als Suspension mit 1 bis 40 Gew.-%, bevorzugt mit 5 bis 20 Gew.-% in einem aliphatischen, inerten Suspensionsmittel wie n-Decan, Hexan, Heptan, Dieselöl mit einer Lösung des Metallocens in einem inerten Lösungsmittel wie Toluol, Hexan, Heptan, Dichlormethan oder mit dem feingemahlenen Feststoff des Metallocens zusammengebracht wird. Umgekehrt kann auch eine Lösung des Metallocens mit dem Feststoff des Cokatalysators umgesetzt werden.

Die Umsetzung erfolgt durch intensives Mischen, beispielsweise durch Verrühren bei einem molaren $Al/M^1$-Verhältnis von 100/1 bis 10000/1, bevorzugt von 100/1 bis 3000/1 sowie einer Reaktionszeit von 5 bis 120 Minuten, bevorzugt 10 bis 60 Minuten, besonders bevorzugt 10 bis 30 Minuten unter inerten Bedingungen.
Im Laufe der Reaktionszeit zur Herstellung des geträgerten Katalysatorsystems treten insbesondere bei der Verwendung der erfindungsgemäßen Metallocene mit Absorptionsmaxima im sichtbaren Bereich Veränderungen in der Farbe der Reaktionsmischung auf, an deren Verlauf sich der Fortgang der Reaktion verfolgen läßt.

Nach Ablauf der Reaktionszeit wird die überstehende Lösung abgetrennt, beispielsweise durch Filtration oder Dekantieren. Der zurückbleibende Feststoff wird 1- bis 5-mal mit einem inerten Suspensionsmittel wie Toluol, n-Decan, Hexan, Dieselöl, Dichlormethan zur Entfernung löslicher Bestandteile im gebildeten Katalysator, insbesondere zur Entfernung von nicht umgesetzten und damit löslichem Metallocen, gewaschen.

Das so hergestellte geträgerte Katalysatorsystem kann im Vakuum getrocknet als Pulver oder noch Lösemittel behaftet wieder resuspendiert und als Suspension in einem der vorgenannten inerten Suspensionsmittel in das Polymerisationssystem eindosiert werden.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan, genannt. Weiterhin kann eine Benzin- bzw. hydrierte Dieselölfraktion benutzt werden. Brauchbar ist auch Toluol. Bevorzugt wird im flüssigen Monomeren polymerisiert.

Vor der Zugabe des Katalysators, insbesondere des geträgerten Katalysatorsystems (aus einem erfindungsgemäßen Metallocen und einem geträgerten Cokatalysator beziehungsweise aus einem erfindungsgemäßen Metallocen und einer aluminiumorganischen Verbindung auf einem Polyolefinpulver in feinverteilter Form), kann zusätzlich eine andere Aluminiumalkylverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhander Katalysatorgifte im Olefin) in den Reaktor gegeben werden. Diese wird in einer Konzentration von 100

bis 0,01 mmol Al pro kg Reaktorinhalt dem Polymerisationssystem zugesetzt. Bevorzugt werden Triisobutylaluminium und Triethylaluminium in einer Konzentration von 10 bis 0,1 mmol Al pro kg Reaktorinhalt. Dadurch kann bei der Synthese eines geträgerten Katalysatorsystems das molare $Al/M^1$-Verhältnis klein gewählt werden.

Werden inerte Lösemittel verwendet, werden die Monomeren gasförmig oder flüssig zudosiert.

Die Dauer der Polymerisation ist beliebig, da das in dem erfindungsgemäßen Verfahren zu verwendende Katalysatorsystem einen nur geringen zeitabhängigen Abfall der Polymerisationsaktivität zeigt.

Die in dem erfindungsgemäßen Verfahren eingesetzten Metallocene eignen sich zur Herstellung von Polyolefinen mit reduzierter Kristallinität, erhöhter Schlagzähigkeit, erhöhter Transparenz, hoher Fließfähigkeit bei Verarbeitungstemperatur sowie reduziertem Schmelzpunkt.

Anwendungsschwerpunkte solcher Polyolefine sind Weichmacher- und Gleitmittelrezepturen, Schmelzkleberanwendungen, Beschichtungen, Abdichtungen, Isolierungen, Ausgießmassen oder Schalldämmungsmaterialien.

Durch Anwendung von Wasserstoff oder durch Erhöhung der Polymerisationstemperatur sind auch Polyolefine niedriger Molmasse, wie Wachse zugänglich, deren Härte oder Schmelzpunkt durch den Comonomergehalt variiert werden können.

Umgekehrt lassen sich durch Wahl der Polymerisationsbedingungen auch hochmolekulare Polyolefine herstellen, welche als thermoplastische Werkstoffe geeignet sind. Diese sind insbesondere zur Herstellung von Formkörpern wie Folien, Platten oder Großhohlkörpern (z.B. Rohre) geeignet.

Durch Wahl des Polymerisations-Verfahrens und der Comonomerart(en), sowie Comonomermenge(n) lassen sich Olefincopolymere mit elastomeren Eigenschaften wie z.B. Ethylen/Propylen/1,4-Hexadien-Terpolymere herstellen.

Die nachfolgenden Beispiele dienen zur näheren Erläuterung der Erfindung.

Herstellung und Handhabung organometallischer Verbindungen erfolgten unter Ausschluß von Luft und Feuchtigkeit unter Argon-Schutzgas (Schlenk-Technik).
Alle benötigten Lösungsmittel wurden vor Gebrauch durch mehrstündiges Sieden über einem geeigneten Trockenmittel und anschließende Destillation unter Argon absolutiert.

Die Herstellung der als Ausgangsverbindungen eingesetzten Diketone und Ketoaldehyde erfolgte nach literaturbekannten Methoden. Cyclopentadien und Methylcyclopentadien wurden durch Cracken der Dimeren gewonnen und bei -35°C gelagert.

Die Ermittlung des $Al/CH_3$-Verhältnisses im Aluminoxan erfolgte durch Zersetzung der Probe mit $H_2SO_4$ und Bestimmung des Volumens der entstehenden Hydrolysegase unter Normalbedingungen sowie durch komplexometrische Titration des Aluminiums in der dann gelösten Probe nach Schwarzenbach.

Die Verbindungen wurden mit $^1H$-NMR, $^{13}C$-NMR- und IR-Spektroskopie charakterisiert.

Die angegebenen Polymerschmelzpunkte und Schmelzwärmen sind einer DSC-Messung für 2. Aufschmelzen bei einer Aufheizrate von 10°/min entnommen.

Toluol lösliches Methylaluminoxan wird für die Vergleichsbeispiele als 10 %ige Toluol Lösung von der Fa. WITCO bezogen und enthält gemäß Aluminium-Bestimmung 36 mg Al/ml.

Die Bestimmung des Comonomer-Einbaus erfolgt mit $^{13}C$-NMR gemäß der Methode von Randall (Macromolecules 1994, 27, 2120).

Die nachfolgenden Beispiele dienen zur Erläuterung der Erfindung, haben jedoch keinerlei limitierenden Charakter:

A. Darstellung der Bisfulvene II

Beispiel 1a:

Synthese von 2,5-Bis(2,4-cyclopentadien-1-yliden)hexan

Nach einer modifizierten Reaktionsvorschrift [a] werden 11,0 g (96,3 mmol) 2,5 Hexandion und 12,7 g (193 mmol) frisch gecracktes Cyclopentadien in 60 ml Methanol gelöst, auf 0°C abgekühlt und mit 8,60 g (121 mmol) Pyrrolidin versetzt. Nach 90 min Rühren bei 0°C wird die Reaktionslösung mit 5 ml Eisessig und 50 ml Wasser hydrolisiert, zweimal mit je 70 ml Diethylether extrahiert und die vereinigten organischen Phasen mit gesättigter Natriumchloridlösung gewaschen. Man trocknet über Magnesiumsulfat und erhält nach dem Entfernen des Lösungsmittels im Vakuum 18.0 g (89 %) das Difulven als orangeroten öligen Rückstand.

[a] = M.S. Erickson, J.M. Cronan, J.G. Garcia, M.L. McLaughlin, J. Org. Chem. 57 (1992) 2504-2508.
K.J. Stone, R.D. Little, J. Org. Chem. 49 (1984) 1849-1853.

Beispiel 1b:

Synthese von 2,5-Bis(cyclopenta-2,4-dien-1-yliden)-undecan

Eine Lösung aus 3,50 g (19,9 mmol) 2,5-Undecandion in 100 ml Methanol und 10 ml Tetrahydrofuran wird auf 0°C abgekühlt und mit 3,92 (3,14 g, 47,5 mmol) frisch gecracktem Cyclopentadien versetzt. Zu der orangeroten, klaren Reaktionslösung werden danach 6,28 ml (5,40 g, 76,0 mmol) frisch destilliertes Pyrrolidin innerhalb von 10 Minuten hinzugetropft. Dabei verfärbt sich die Reaktionslösung innerhalb von 10 Minuten dunkelrot. Anschließen läßt man auf Raumtemperatur erwärmen und zur Vervollständigung der Rekation weitere 3 Tage rühren. Zur Aufarbeitung wird das Pyrrolidin mit 4 ml Eisessig neutralisiert und mit 100 ml Wasser hydrolisiert. Man extrahiert zweimal mit je 100 ml Pentan, wäscht die vereinigten organischen Phasen mehrmals mit gesättigter, wäßriger Natriumchloridlösung und trocknet über Magnesiumsulfat. Nach Entfernen des Lösungsmittels im Vakuum erhält man das Cyclopentadienyliden (2) als dunkelrotes Öl in einer Rohausbeute von 78 % (4,16 g).
Durch säulenchromatographische Reinigung über eine mit Triethylamin desaktivierte Kieselgelsäure und Pentan: Diethylether (100 : 1) als eluierendes Solvensgemisch erhält man das Difulven (2) als orangefarbenes Öl.

B. Synthese der verbrückten Biscyclopentadienyl-Anionen, V

Beispiel 2:

Synthese von [4-($\eta^5$-Cyclopentadienyl)-4,7,7-trimethyl-($\eta^5$-4,5,6,7-tetrahydroindenyl)]dilithium

Zu einer Lösung von 10,0 g (47,5 mmol) 2,5-Bis(2,4-cyclopentadien-1-yliden)hexan in 150 ml Diethylether werden 62,4 ml (99,8 mmol) einer etherischen 1,60 M Methyllithiumlösung bei 0°C unter heftigem Rühren langsam zugetropft. Man läßt auf Raumtemperatur erwärmen und erhält nach 24 Stunden Rühren einen beigefarbenen Niederschlag. Nach Abfritten und mehrmaligem Waschen mit Pentan erhält man 13,2 g (89 %) des Di-Lithiumsalzes als beiges Pulver, welches mit einem Moläquivalent Diethylether koordiniert ist.

Beispiel 3:

Synthese von 4-($\eta^5$-Cyclopentadienyl)-4,7-dimethyl-7-phenyl-($\eta^5$-4,5,6,7-tetrahydroindenyl)dilithium

Eine etherische Phenyllithiumlösung (83,4 ml, 74,3 mol, 0,89 M Diethyletherlösung) wird bei 0°C zu einer Lösung aus 7,10 g (33,7 mmol) Difulven (Beispiel 1) in 100 ml Diethylether zugetropft. Dabei beginnt nach ca. 5 Minuten ein beiger Niederschlag auszufallen. Man läßt auf Raumtemperatur erwärmen und rührt noch weitere 12 Stunden bei 25°C. Nach dem Abfritten, mehrmaligem Waschen mit Pentan und Trocknen im Ölpumpenvakuum erhält man das Dilithiumsalz als beiges, sehr hydrolyseempfindliches Pulver in 82 % Ausbeute (10,3 g).

Beispiel 4:

Synthese von 4-($\eta^5$-Cyclopentadienyl)-4,7-dimethyl-7-butyl-($\eta^5$-4,5,6,7-tetrahydroindenyl)dilithium

Eine Lösung von 15,0 g (71,3 mmol) Difulven (Beispiel 1), gelöst in 100 ml Diethylether wird auf -30°C abgekühlt und langsam unter heftigem Rühren mit 94 ml (150 mmol) einer 1,60 M Lösung von n-Butyllithium in Hexan versetzt. Dabei bildet sich ein zitronengelber Niederschlag. Man läßt auf Raumtemperatur erwärmen und rührt zur Vervollständigung der Reaktion noch weitere 24 Stunden. Danach wird der ausgefallene Niederschlag abfiltriert, mehrmals mit Pentan gewaschen und im Ölpumpenvakuum getrocknet. Man erhält 23,0 g (91 %) des Dilithiumsalzes als beiges, sehr hydrolyseempfindliches Pulver an dem noch ein Moläquivalent Diethylether koordiniert ist.

C. Synthese der verbrückten Cyclopentadiene IV

Beispiel 5:

Synthese von 7-Cyclopentadienyl-4,4,7-trimethyl-4,5,6,7-tetrahydro-1H-inden

Zu einer Suspension von 7,35 g (23,5 mmol) des Dilithium-Salzes (Beispiel 2) in 50 ml Diethylether gibt man bei 0°C tropfenweise 50 ml entgastes Wasser hinzu. Hierbei verschwindet sofort die beige Suspension und man erhält eine klare, orangene Diethyletherphase. Anschließend trennt man die Phasen im Scheidetrichter, extrahiert die wäßrige

Phase noch zweimal mit je 25 ml Diethylether und wäscht die vereinigten organischen Phasen mit 20 ml einer gesättigten Natriumchloridlösung. Nach dem Trocknen über Magnesiumsulfat und dem Entfernen des Lösungsmittels im Vakuum kann man 5,1 g (96 %) des hydrolysierten Produktes als orangerotes Öl isolieren.

Beispiel 6:

Darstellung von 7-Cyclopentadienyl-4,7-dimethyl-4-phenyl-4,5,6,7-tetrahydro-1H-inden

Eine auf 0°C abgekühlte, gelbe Suspension von 3,64 g (9,72 mmol) des Dilithiumsalzes (Beispiel 3) in 50 ml Diethylether wird durch langsame Zugabe von 20 ml entgastem Wasser hydrolisiert. Dabei verschwindet die Suspension und man erhält eine orangene, klare Reaktionslösung. Nachdem man zweimal mit je 20 ml Diethylether extrahiert hat, werden die vereinigten organischen Phasen mehrmals mit gesättigter, wäßriger Natriumchloridlösung gewaschen und über Magnesiumsulfat getrocknet. Durch anschließendes Entfernen des Lösungsmittels im Vakuum kann man das hydrolisierte Produkt als orangenes Öl in 94 % Ausbeute (2,62 g) isolieren.

Beispiel 7:

Darstellung von 7-Cyclopentadienyl-4,7-dimethyl-4-butyl-4,5,6,7-tetrahydro-1H-inden

Eine auf 0°C abgekühlte, gelbe Suspension von 5,00 g (17,33 mmol) des Dilithiumsalzes (Beispiel 4) in 50 ml Diethylether wird durch langsame Zugabe von 20 ml entgastem Wasser hydrolisiert. Dabei verschwindet die Suspension und man erhält eine orangene, klare Reaktionslösung. Nachdem man zweimal mit je 20 ml Diethylether extrahiert hat, werden die vereinigten organischen Phasen mehrmals mit gesättigter, wäßriger Natriumchloridlösung gewaschen und über Magnesiumsulfat getrocknet. Durch anschließendes Entfernen des Lösungsmittels im Vakuum kann man das hydrolisierte Produkt als orangefarbenes Öl in 96 % Ausbeute (4,59 g) isolieren.

D. Synthese der verbrückten Cyclopentadien-Fulven-Liganden IVa durch nachträgliches Einführen von Substituenten (Einführung verschiedener Reste $R^{13}$, $R^{17}$, $R^{18}$, $R^{20}$, $R^{21}$)

Beispiel 8a:

Synthese von 7-(3'-Isopropyliden-cyclopenta-1,4-dienyl)-4,4,7-trimethyl-4,5,6,7-tetrahydro-1H-inden

7,70 g (34,0 mmol) des Cyclopentadienyltetrahydroindenyls (Beispiel 5) werden in 70 ml Methanol gelöst und auf 0°C abgekühlt. Anschließend wird die orangerote Reaktionslösung nacheinander mit 2,96 g (51,0 mmol) Aceton und 4,83 g (68,0 mmol) Pyrrolidin versetzt. Nach 5 Stunden Rühren bei 0°C läßt man zur Vervollständigung der Reaktion noch 2 Stunden bei Raumtemperatur Rühren, ehe man die Reaktion durch Zugabe von 4 ml Eisessig abbricht. Die rote, klare Reaktionslösung wird mit 200 ml Wasser hydrolisiert und die gelbe Suspension 3 x mit je 50 ml Diethylether extrahiert. Nach dem mehrmaligen Waschen der vereinigten organischen Phasen mit gesättigter wäßriger Natriumchloridlösung und dem Trocknen über Magnesiumsulfat erhält man das Fulven als orangeroten wachsartigen Rückstand in einer Ausbeute von 88 % (8,00 g).

Beispiel 8b:

Darstellung von 4-Cyclopentadienyl-4,7-dimethyl-7-allyl-4,5,6,7-tetrahydro-1H-inden

Zu einer Lösung von 16,8 g (79,8 mmol) 2,5-Bis(2,4-cyclopentadien-1-ylidan)hexan (Beispiel 1), gelöst in 100 ml Diethylether und 50 ml Tetrahydrofuran werden unter heftigen Rühren 293 ml einer 0,60 M Lösung des Allylgrignards (175 mmol) in Diethylether bei 0°C innerhalb von einer Stunde zugetropft. Nach beendeter Zugabe läßt man über Nacht bei Raumtemperatur rühren, ehe man die gelborangefarbene Suspension auf 0°C abkühlt und mit wäßriger gesättigter Ammoniumchlorid-Lösung vorsichtig hydrolysiert. Die organische Phase wird abgetrennt, dreimal mit je 50 ml gesättigter wäßriger Natriumchlorid-Lösung gewaschen und anschließend über Magnesiumsulfat getrocknet. Man entfernt das Lösungsmittel im Ölpumpenvakuum und erhält 17,5 g des Produktes als orangefarbenes Öl (87 %).

E. Synthese der Dianion-Komplexe Va

Beispiel 9a:

Synthese von 4-[3'-tBu-($\eta^5$-cyclopentadienyl)]-4,7,7-trimethyl-($\eta^5$-tetrahydroindenyl)dilithium

Bei der Reaktion des Tetrahydroindenylfulvens (Beispiel 8) mit einer etherischen Methyllithiumlösung (2 Äquivalenten) bei 0°C erhält man schon nach wenigen Sekunden einen gelben intensiven Niederschlag. Man läßt noch 12 Stunden bei Raumtemperatur Rühren und erhält nach Abfritten, Waschen mit Pentan und Trocknen im Ölpumpenvakuum das Dilithiumsalz, das ohne weitere Charakterisierung direkt weiter umgesetzt wird.

Beispiel 9b:

Synthese von [4-$\eta^5$-Cyclopentadienyl)-4,7-dimethyl-7-allyl-($\eta^5$-4,5,6,7-tetrahydroindenyl)]dilithium

10,5 g des Allylgrignardproduktes (Beispiel 10) werden in 100 ml Diethylether gelöst, auf 0°C abgekühlt und mit 57,6 ml n-Butyllithium-Lösung (1,60 M in Hexan, 92,0 mmol) tropfenweise versetzt. Nach 18 stündigem Rühren bei Raumtemperatur wird der gelbbeige Rückstand abfiltriert, mehrmals mit Pentan gewaschen und im Ölpumpenvakuum getrocknet. Das Dilithiumsalz wird als beigefarbener Feststoff in qualitativer Ausbeute isoliert und ist noch mit einem Moläquivalent Diethylether koordiniert.

F. Synthese der Metallocene der Formel I

Beispiel 10:

Synthese von 4-($\eta^5$-Cyclopentadienyl)-4,7,7-trimethyl-($\eta^5$-4,5,6,7-tetrahydroindenyl)]dichlorozirconium

Zu einer auf -78°C abgekühlten Suspension von 9,58 g (30,7 mmol) der Dilithiumverbindung (Beispiel 2) in 200 ml Toluol werden 7,50 g (32,2 mmol) Zirconiumtetrachlorid portionsweise innerhalb von 10 min hinzugefügt. Nach 50 Stunden Rühren bei Raumtemperatur wird der Niederschlag abgefrittet und das orangefarbene Filtrat im Vakuum zur Trockne eingeengt. Nach mehrmaligem Waschen mit Pentan erhält man 4,38 g des Zirconocendichlorides als orangegelbes Pulver in einer Rohausbeute von 37 %.
Zur Reinigung wird das orangegelbe Pulver mehrere Tage lang mit Pentan in einer Umlauffritte extrahiert, wobei man nach Entfernen des Lösungsmittels im Ölpumpenvakuum 1,70 g (14 %) des Zirconocendichlorids als gelbes Pulver erhält, Fp.: 223°C (Zers., DSC).

Beispiel 11:

Synthese von 4-($\eta^5$-Cyclopentadienyl)-4,7,7-trimethyl-($\eta^5$-4,5,6,7-tetrahydroindenyl)dichlorotitan

Eine Suspension von 5,46 g (17,5 mmol) des Dilithiumetherates (Beispiel 2) in 200 ml Toluol wird auf -78°C abgekühlt und mit 3,3 g (17,5 mmol) Titantetrachlorid versetzt. Dabei färbt sich die Reaktionslösung sofort dunkelrot. Man läßt 30 Stunden bei Raumtemperatur rühren, frittet von Unlöslichem ab und engt die dunkelrote Toluolphase im Ölpumpenvakuum zur Trockne ein. Nach mehrmaligem Waschen mit Pentan erhält man 1,85 g des Titanocendichlorides als braunbeiges Pulver. Das Rohprodukt wird anschließend mit Pentan in einer Umlauffritte mehrere Tage lang extrahiert, wobei man das Titanocendichlorid nach Entfernen des Lösungsmittels als braunen Feststoff in 13 % Ausbeute (780 mg) erhält; Fp.: 259 °C (Zers., DSD).

Beispiel 12:

Synthese von [4-($\eta^5$-Cyclopentadienyl)-4,7,7-trimethyl-($\eta^5$-4,5,6,7-tetrahydroindenyl)]dichlorozirconium aus 2,5-Bis (2,4-cyclopentadien-1-yliden)hexan

Zu einer Lösung von 10,0 g (47.5 mmol) 2,5-Bis(2,4-cyclopentadien-1-yliden)hexan (Beispiel 1) in 150 ml Toluol werden 62,4 ml (99.8 mmol) einer etherischen 1,60 M Methyllithium-Lösung bei 0°C unter heftigem Rühren langsam zugegeben. Nach beendeter Zugabe läßt man 24 Stunden bei Raumtemperatur rühren, kühlt anschließend auf -30°C ab und gibt 9.32 g (40 mmol) Zirconiumtetrachlorid zu. Nach 30 Stunden Rühren bei Raumtemperatur wird vom LiCl abgefiltert und das Filtrat im Vakuum zur Trockne eingeengt. Nach mehrmaligem Waschen mit Pentan erhält man 4.02

g (26 %) des Zirconiumdichlorids.

Beispiel 13:

Synthese beider Diastereomere von 4-($\eta^5$-cyclopentadienyl)-4,7-dimethyl-7-phenyl($\eta^5$-4,5,6,7-tetrahydroindenyl)dichlorozirconium

Eine auf -78°C abgekühlte Suspension von 4,37 g (11,7 mmol) des Dilithiumsalzes (Beispiel 3) in 200 ml Toluol wird mit 2,72 g (11,7 mmol) Zirconiumtetrachlorid portionsweise versetzt. Man läßt auf Raumtemperatur erwärmen und rührt die orangefarbene Suspension noch 20 Stunden lang bei 20°C. Nach dem Abfiltrieren wird das Lösungsmittel aus dem Filtrat im Ölpumpenvakuum entfernt und der orangerote, ölige Rückstand durch intensives Rühren in 20 ml Pentan pulverisiert. Anschließend erhält man nach Entfernen des Pentans im Vakuum 2,64 g (50 %) des Zirconocendichlorids als gelborangenes Pulver.
Anhand des $^1$H-NMR Spektrums vom Rohprodukt läßt sich das Diastereomerenverhältnis von ~ 8:1 abschätzen.

Beispiel 14:

Synthese beider Diastereomere von 4-($\eta^5$-Cyclopentadienyl)-4,7-dimethyl-7-butyl-($\eta^5$-4,5,6,7-tetrahydroindenyl)dichlorozirconium

Eine Suspension aus 7,80 g (22,0 mmol) des Dilithiumsalzes (Beispiel 4) in 200 ml Toluol wird auf -78°C abgekühlt und mit 5,10 g (22,0 mmol) Zirconiumtetrachlorid portionsweise versetzt. Man läßt auf Raumtemperatur erwärmen und rührt die gelborangene Suspension noch 48 Stunden. Danach frittet man vom Unlöslichen ab und entfernt das Lösungsmittel im Ölpumpenvakuum. Das rotorangefarbene Öl wird durch intensives Rühren mit Pentan pulverisiert, wobei man das Zirconocendichlorid in einer Rohausbeute von 30 % (2,72 g) erhält.
Die Reinigung erfolgt durch mehrtägige Extraktion des Rohproduktes mit Pentan in einer Umlauffritte. Das $^1$H-NMR Spektrum des feinen gelben Niederschlages weist zwei Signalsätze in einem Verhältnis von 15:1 auf. Aus dem gelben abgeheberten Filtrat kann man nach Lagerung bei -30°C wenige Kristalle isolieren. Diese Kristalle des diastereomerenreinen Zirconocendichlorids (pR,4R,7R-4-($\eta^5$-Cyclopentadienyl)-4,7-dimethyl-7-butyl-($\eta^5$-4,5,6,7-tetrahydroindenyl) dichlorozirconium) ermöglichen es, einzelne Signalsätze im $^1$H-NMR zuzuordnen. Dabei entsprechen die Kristalle, welche aus der Pentanlösung auskristallisiert sind, dem Diastereomer, welches am wenigsten gebildet wird.
Auch aus den 1,35 g (14 %) des gelben, feinen Pulvers kann man Kristalle isolieren, indem man ungefähr 100 mg des Pulvers in wenig Methylenchlorid löst und durch Diffusion von Pentan in diese Lösung ganz langsam auskristallisieren läßt. Es handelt sich bei dem Hauptprodukt um das andere Diastereomer.

Beispiel 15:

Synthese von 4-($\eta^5$-Cyclopentadienyl)-4,7-dimethyl-7-butyl-($\eta^5$-4,5,6,7-tetrahydroindenyl)dichlorohafnium

Zu einer auf -78° C abgekühlten Suspension von 2,00 g (5,64 mmol) Dilithiumsalz (Beispiel 4) in 150 ml Toluol werden 1,81 g (5,65 mmol) Hafniumtetrachlorid hinzugefügt. Die orangene Suspension läßt man auf Raumtemperatur erwärmen und rührt zur Vervollständigung der Reaktion noch 2 Tage lang. Anschließend frittet man vom Unlöslichen ab und engt das orangerote Filtrat an der Ölpumpe zur Trockne ein. Der orangerote Rückstand wird mit 30 ml Pentan versetzt und über Nacht intensiv gerührt. Nach Entfernen des Lösungsmittels im Vakuum erhält man das Hafnocendichlorid in einer Rohproduktausbeute von 700 mg (24 %) als beiges Pulver. Im $^1$H-NMR Spektrum des Rohproduktes kann man nur ein Diastereomer finden.

Beispiel 16:

Synthese beider Diastereomere von 4-($\eta^5$-Cyclopentadienyl)-4,7-dimethyl-7-butyl-($\eta^5$-4,5,6,7-tetrahydroindenyl)dichlorotitan

Suspendiert man 5,95 g (16,8 mmol) des Dilithiumsalzes (Beispiel 4) in 120 ml Toluol, so färbt sich die beige Suspension bei der Zugabe von 3,18 g (16,8 mmol) Titantetrachlorid bei -78°C sofort dunkelrot. Die Suspension wird noch 36 Stunden bei Raumtemperatur gerührt, ehe man von dem Niederschlag abtrennt und das dunkelrote Filtrat bis zur Trockne im Ölpumpenvakuum einengt. Dabei erhält man beide Diastereomere des Titanocendichlorids als braunrotes Pulver in einer Rohausbeute von 1,54 g (24 %). Im $^1$H-NMR-Spektrum des Rohproduktes kann man die Signale beider Diastereomeren im Verhältnis 8:1 bestimmen. Extrahiert man das braunrote Pulver mit Pentan mehrere Tage

in einer Umlauffritte, so fällt aus dem Filtrat ein brauner Niederschlag aus. Dabei kann man im $^1H$-NMR-Spektrum feststellen, daß die Pentanlösung beide Isomere in einem Verhältnis von 1:1 beinhaltet (150 mg, 2,3 %), während das braune Pulver (720 mg, 11 %) annäherend diastereomenrein ist.

Beispiel 17:

Synthese von {4-[3'-tBu-($\eta^5$-cyclopentadienyl)]-4,7,7-trimethyl-($\eta^5$-4,5,6,7-tetrahydroindenyl)}dichlorozirconium

Eine Suspension von 2,84 g (7,71 mmol) des Dilithiumsalzes (Beispiel 9) wird in 150 ml Toluol suspendiert und auf -78°C abgekühlt. Nachdem man portionsweise 1,79 g (7,71 mmol) Zirconiumtetrachlorid hinzugefügt hat, läßt man auf Raumtemperatur erwärmen und rührt noch 48 Stunden. Anschließend trennt man von Unlöslichem ab, engt die orangene Toluolphase im Ölpumpenvakuum ein und pulverisiert das orangerote Öl durch heftiges Rühren in Pentan. Dabei erhält man die regioisomeren Zirconocendichloride als orangegelbes Pulver in einer Rohausbeute von 23 % (787 mg). Im $^1H$-NMR Spektrum des Rohproduktes findet man die Signale beider Diastereomere im Verhältnis 1:1. Durch Extraktion des orangegelben Pulvers mit Pentan in einer Umlauffritte erhält man 370 mg (11 %) der Zirconocendichloride in einem Verhältnis von 1:1.

G. Synthese der Metallocendialkyl-Komplexe

Beispiel 18: Synthese von 4-($\eta^5$-Cyclopentadienyl)-4,7,7-trimethyl-($\eta^5$-4,5,6,7-tetrahydroindenyl)zirconiumdimethyl

In Anlehnung an die Literaturvorschrift [b] werden zu einer Suspension von 1,03 g (2,66 mmol) Zirconocendichlorid (Beispiel 10) in 50 ml Diethylether 3,30 ml (5,33 mmol, 1,60 M) einer etherischen Methyllithium-Lösung bei -78°C langsam zutropft. Man läßt im Kältebad langsam auf Raumtemperatur erwärmen und rührt noch 5 Stunden bei Raumtemperatur nach. Das Lösungsmittel wird im Vakuum entfernt und der farblose Rückstand mit 3 x 50 ml Pentan extrahiert.
Die vereinigten Pentanlösungen werden eingeengt und zur Kristallisation bei -25°C aufbewahrt. Man erhält nach Abhebern des Lösungsmittels und Trocknen im Ölpumpenvakuum 700 mg (76 %) Zirconocendimethyl als farbloses, kristallines Pulver.
[b] E. Samuel, M.D. Rausch, J.Am.Chem.Soc. 95 (1973) 6263.

Beispiel 19:

Synthese beider Diastereomere von [4-($\eta^5$-Cyclopentadienyl)-4,7-dimethyl-7-(2-propen-1-yl)-($\eta^5$-4,5,6,7-tetrahydroindenyl)]dichlorotitan

Man löst 2,45 g (7,24 mmol) der Dilithiumverbindung (Beispiel 9b) in 80 ml Tetrahydrofuran und erhält eine organgefarbene, klare Lösung, die anschließend auf -78°C abgekühlt wird und mit 2,42 g (7,24 mmol) Titantetrachlorid-bis-THF-Addukt versetzt wird. Das Reaktionsgemisch verfärbt sich daraufhin sofort dunkelrot. Man läßt auf Raumtemperatur erwärmen und rührt noch zwei Tage. Nach Entfernen des Lösungsmittels im Vakuum erhält man braunes Pulver. Durch Pentanextraktion des Rohproduktes in einer Umlauffritte kann man 0,22 g (9 %) der beiden Allyltitanocen als braune Pulver isolieren.

Im $^1H$-NMR-Spektrum findet man beide Produkte in einem Diastereomerenverhältnis von 2:1.

Beispiel 20:

Synthese beider Diasteromere von [4-($\eta^5$-Cyclopentadienyl)-4,7-dimethyl-7-(2-propen-1-yl)-($\eta^5$-4,5,6,7-tetrahydroindenyl)]dichlorozirconium

7,56 g (22,3 mmol) der Dilithiumverbindung (Beispiel 9b) werden in 200 ml Toluol suspendiert und auf -78°C abgekühlt. Dazu werden 5,21 g (22,3 mmol) Zirconiumtetrachlorid portionsweise hinzugefügt. Nach 30 Minuten bei -78°C läßt man innerhalb von 4 Stunden auf Raumtemperatur erwärmen und rührt noch weitere 12 Stunden. Die orangefarbene Suspension wird nun über eine G4-Fritte abfiltriert, der Rückstand zweimal mit je 30 mol Toluol gewaschen und das Filtrat bis zur Trockne im Ölpumpenvakuum eingeengt. Dabei erhält man ein organgerotes Öl, welches durch Zugabe von 50 ml Pentan und anschließendem intensiven Rühren pulverisiert werden kann. Nach dem Entfernen des Lösungsmittels im Vakuum erhält man die gelborangefarbenen, pulverigen Allylzirconocene in einer Rohausbeute von 5,04 g (55 %).
Durch mehrfache Extraktion des Rohproduktes mit 100 ml Pentan in einer Umlauffritte kann man 2,34 g (26 %) der

Allylzirconocene als gelbe Pulver isolieren; Fp.: 99°C (DSC).

Im $^1$H-NMR-Spektrum findet man beide Produkte 23a und 23b in einem Diastereomerenverhältnis von 1,5:1.

Beispiel 21:

Synthese beider Diastereomere von [4-($\eta^5$-Cyclopentadienyl)-4,7-dimethyl-7-(3-(9-borabicyclo{3,31}nonyl-B)propyl-($\eta^5$-4,5,6,7-tetrahydroindenyl)]dichlorozirconium 210 mg (0,51 mmol) der Allylzirconocendichloride (Beispiel 20) werden in 50 ml Toluol gelöst und bei Raumtemperatur mit 62 mg (0,51 mmol) 9-BBN versetzt. Man rührt 36 Stunden bei Raumtemperatur, entfernt das Lösungsmittel im Vakuum und pulverisiert das orangegelbene Öl mit 30 ml Diethylether. Engt man nun die klare Lösung bis auf 10 ml ein und kühlt mehrere Stunden auf -30°C ab, so erhält man 208 mg (78 %) der Diasteromere als orangegelbe Pulver; Fp.: 74°C (DSC).

Beispiel 22:

Synthese von 7-(3'-$^i$Propyl-cyclopentadienyl)-4,4,7-trimethyl-4,5,6,7-tetrahydro-1 H-inden

a) Synthese von {4-[3'-$^i$Propyl-($\eta^5$-cyclopentadienyl)1-4,7,7-trimethyl-($\eta^5$-4,5,6,7-tetrahydroindenyl)}dichlorozirconium

Zu einer Suspension von 2,17 g (57,3 mmol) Lithiumaluminiumhydrid in 100 ml Diethylether wird bei Raumtemperatur eine Lösung von 6,11 g (22,9 mmol) des Tetrahydroindenylfulvens (Beispiel 8a) in 20 ml Diethylether zugetropft. Nach einer heftigen aber nicht sehr exothermen Reaktion wird die orangefarbene Suspension noch drei Stunden unter Rückfluß erhitzt. Anschließend kühlt man im Eisbad auf 0°C und hydrolysiert vorsichtig mit Eiswasser, wobei ein weißer voluminöser Niederschlag noch zweimal mit je 50 ml Diethylether und wäscht die vereinigten organischen Phasen mit wäßriger Natriumchloridlösung. Man trocknet danach über Magnesiumsulfat und erhält nach Entfernen des Lösungsmittels im Vakuum 5,63 g (92 %) des $^i$Propyl-substituierten ansaLiganden als orangefarbenes Öl.

Auch hier besteht das Produkt aus einer Vielzahl von Doppelbindungsisomeren, so daß nur eine grobe Zuordnung von Signalgruppen im $^1$H-NMR Spekturm möglich ist.

b) Synthese von {4-[3'-$^i$Propyl-($\eta^5$-cyclopentadienyl)]-4,7,7-trimethyl-($\eta^5$-4,5,6,7-tetrahydroindenyl)}dilithium

Es werden 4,21 g (1 5,7 mmol) des Isopropyl-substituierten Liganden in 70 ml Diethylether gelöst und bei 0°C mit 21,6 mol (34,5 mmol) einer 1,60 M Methyllithiumlösung tropfenweise versetzt. Die Lösung entfärbt sich rasch, wobei sich ein weißer Niederschlag bildet. Nach Beendigung des Zutropfen rührt man noch weitere 15 Stunden bei Raumtemperatur. Anschließend wird der Niederschlag abfiltriert und zweimal mit je 15 ml Diethylether gewaschen. Man erhält 5,20 g (93 %) des extrem luftempfindlichen Dilithium-salzes als beigefarbens Pulver, das ein Moläquivalent Diethylether enthält.

c) Synthese von {4-[3'-$^i$Propyl-($\eta^5$-cyclopentadienyl)]-4,7,7-trimethyl-($\eta^5$-4,5,6,7-tetrahydroindenyl)}dichlorozirconium

Zu einer auf -78°C abgekühlten Suspension von 5,20 g (14,7 mmol) des Dilithiumsalzes in 200 ml Toluol, werden 3,40 g (14,6 mmol) Zirconiumtetrachlorid langsam hinzugefügt. Die entstandene beigefarbene Suspension wird 24 Stunden bei Raumtemperatur gerührt ehe man von Unlöslichen abtrennt und das orangefarbene, klare Filtrat im Ölpumpenvakuum auf ungefähr 50 ml einengt. Eine $^1$H-NMR spektroskopische Untersuchung der Toluolphase führt zu dem Resultat, daß in dieser beide Diastereomere in einem Verhältnis von 1:1 zu finden sind. Durch Zugabe von 20 ml Pentan und Lagerung im Eisschrank bei -20°C fällt ein gelber Feststoff aus (1,42 g), bei dem ein Diastereomer deutlich (8:1) angereichert ist. In der Toluolphase findet man dementsprechend das andere Diastereomer im umgekehrten Verhältnis angereichert (1,62 g); Gesamtausbeute 49 %).

Löst man ungefähr 100 mg des ausgefallenen gelben Pulvers in Methylenchlorid so erhält man nach anschließender langsamer Diffusion von Pentan in diese Lösung röntgenstrukturfähige Kristalle, welche dem Diastereomer (4R*-{4-[3'-$^i$Pr-($\eta^5$-cyclopentadienyl)]-4,7,7-trimethyl-($\eta^5$-4,5,6,7-pR*-tetrahydroindenyl)}dichlorozirconium zugeordnet werden können.

Beispiel 23:

Synthese von {4-[3'-$^i$Propyl-($\eta^5$-cyclopentadienyl)]-4,7,7-trimethyl-[2-'propyl-($\eta^5$-4,5,6,7-tetrahydroindenyl)}dichlorozirconium

a) Synthese von 4-(3'-$^i$Propyl-cyclopentadienyl)-4,7,7-trimethyl-(2-$^i$propyl-4,5,6,7-tetrahydro-1H-inden) ausgehend von 2-Isopropyliden-4-(3'-isopropyliden-cyclopenta-1',4'-dienyl)-4,7,7-trimethyl-(4,5,6,7-tetrahydro-2H-inden)

Löst man 8,32 g (34,2 mmol) des "Monofulvens" (Beispiel 8a) in einem Gemisch aus 50 ml Methanol und 20 ml Pentan, so erhält man eine orangerote, klare Lösung, welche auf 0°C abgekühlt wird. Durch sukzessive Zugabe von 2,61 g (3,31 ml, 45,0 mmol) Aceton und 6,08 g (7,10 ml, 85,5 mmol) Pyrrolidin färbt sich die Reaktionslösung nach 30 min dunkelrot. Nach 7 Tagen Rühren bei Raumtemperatur wird die Reaktionsmischung nacheinander mit 5 ml Eisessig, 150 ml Wasser und 50 ml Pentan versetzt. Nach zweimaligen Ausschütteln der wäßrigen Phase mit Pentan werden die vereinigten organischen Phasen mehrmals mit gesättigter, wäßriger Natriumchloridlösung gewaschen und über Magnesiumsulfat getrocknet. Entfernt man das Lösungsmittel im Ölpumpenvakuum, so kann man das Difulven in einer Rohausbeute von 9,04 g (86 %) als rotes Öl isolieren.

Ein Teil des roten Öls wird in Pentan aufgenommen und an einer Kieselgelsäule (Merck, 60 mesh) chromatographiert, welche vorher mit Triethylamin desaktiviert wurde. Als Laufmittel wird ein Pentan : Diethylether Gemisch (100:5) verwendet (Gesamtausbeute < 10 %).

b) Synthese von 4-(3'-$^{i}$Propyl-cyclopentadienyl)-4,7,7-trimethyl-(2-$^{i}$propyl-4,5,6,7-tetrahydro-1H-inden)

In einem Dreihalskolben mit Intensivkühler und Tropftrichter werden 3,03 g (80,0 mmol) Lithiumaluminumhydrid in 100 ml Diethylether vorgelegt und tropfenweise unter starkem Rühren bei Raumtemperatur mit 6,47 g (21,1 mmol) des Difulvens (Beispiel 23a) gelöst in 50 ml Diethylether versetzt. Nach beendeter Zugabe wird das Reaktionsgemisch noch 5 Stunden unter Rückfluß erhitzt und anschließend vorsichtig mit 100 ml Wasser hydrolysiert. Dabei erhält man einen grauen Niederschlag an Aluminiumoxid und eine gelbe Diethyletherphase. Diese wird abdekantiert, der graue Niederschlag noch mehrmals mit Diethylether extrahiert und die vereinigten Diethyletherphasen mit gesättigter wäßriger Natriumchloridlösung gewaschen. Nach dem Trocknen über Magnesiumsulfat und dem Entfernen des Lösungsmittels im Vakuum verbleiben 6,25 g (96 %) des reduzierten Difulvens als orangerotes Öl, welches ohne weitere Reinigung umgesetzt wird.

c) Synthese von 4-(3'-$^{i}$Propyl-cyclopentadienyl)-4,7,7-trimethyl-(2-$^{i}$propyl-4,5,6,7-tetrahydro-1H-inden) über 2,5-Bis[($^{i}$propyl)cyclopenta-2,4-dien-1-yliden]hexan

Zu einer Lösung aus 2,78 ml (2,71 g, 23,8 mmol) 2,5-Hexandion und 4,00 g (47,6 mmol) Isopropylcyclopentadien in 50 ml Methanol werden 5,90 ml (5,07 g, 71,3 mmol) frisch destilliertes Pyrrolidin bei 0°C tropfenweise hinzugefügt. Dabei verfärbt sich die Reaktionslösung sofort dunkelrot und wird noch weitere 15 Stunden bei 0°C gerührt. Zur Aufarbeitung wird das Pyrrolidin durch Zugabe einer Lösung von 2 ml Eisessig in 100 ml Wasser neutralisiert. Man extruhiert zweimal mit je 100 ml Diethylether, wäscht die vereinigten organischen Phasen mehrmals mit gesättigter, wäßriger Natriumchloridlösung und trocknet über Magnesiumsulfat. Nach Entfernen des Lösungsmittels im Vakuum erhält man das Difulven als dunkelrotes Öl in einer Rohausbeute von 75 % (5,20 g).

Die Reinigung des Difulvens erfolgt durch eine säulenchromatographische Aufarbeitung an einer mit Triethylamin desaktiven Kieselgelsäule (Pentan : Triethylamin = 100:1). Als Laufmittel eignet sich ein Pentan : Diethylether Solvensgemisch im Verhältnis 1:1, wobei man 1,72 g des Difulvens (25 %) als rotes Öl isolieren kann.

d) Synthese von 4-(3'-$^{i}$Propyl-cyclopentadienyl)-4,7,7-trimethyl-(2-$^{i}$propyl-4,5,6,7-tetrahydro-1H-inden)

600 mg (2,04 mmol) des Bisisopropylsubstituierten Difulvens (Beispiel 23b) werden in 10 ml Diethylether gelöst und bei 0°C mit 2,55 ml einer etherischen 1,60 M Methyllithiumlösung langsam versetzt. Man läßt auf Raumtemperatur erwärmen und erhält nach 24 Stunden eine orangefarbene Suspension, die auf 0°C abgekühlt wird, ehe man sie mit 10 ml Wasser hydrolysiert. Nach Extraktion mit 20 ml Diethylether und Trocknen über Magnesiumsulfat erhält man 520 mg des cyclisierten Produkts als orangefarbenes Öl in einer Ausbeute von 82 %.

e) Synthese von {4-[3'-$^{i}$Propyl-($\eta^5$-cyclopentadienyl)]-4,7,7-trimethyl-[2-$^{i}$propyl-($\eta^5$-4,5,6,7-tetrahydroindenyl)}dichlorozirconium

Zu einer Lösung von 500 mg (1,61 mmol) der bisisopropylsubstituierten Verbindungen (Beispiel 23a bzw. 23b) in 20 ml Pentan tropft man 2,00 ml (3,22 mmol) einer 1,60 etherischen Methyllithiumlösung bei 0°C zu. Man läßt auf Raumtemperatur erwärmen und erhält nach 12 Stunden eine trübe, orangefarbene Suspension. Diese wird auf -78°C abgekühlt und mit 373 mg (1,61 mmol) Zirconiumtetrachlorid versetzt. Nach 24 Stunden Rühren bei Raumtemperatur filtriert man vom Unlöslichen ab und entfernt das Lösungsmittel im Vakuum. Man erhält beide Diastereomere des ansa-Zirconocens als orangefarbenes Pulver in einer Rohausbeute von 300 mg (40 %). Im $^1$H-NMR-Spektrum findet man die Resonanzsignale beider Diastereomere im Verhältnis 1:1 (bestimmt anhand der $^{i}$Pr-Gruppen).

Beispiel 24:

Synthese von {4-[3'-Trimethylsilyl-($\eta^5$-cyclopentadienyl)]-4,7,7-trimethyl-[2-trimethylsilyl($\eta^5$-4,5,6,7-tetrahydroindenyl)]}dichlorozirconium

a) Synthese von 7-(3'-Trimetylsilyl-cyclopenatdienyl)-4,4,7-trimethyl-(2-trimethylsilyl-4,5,6,7-tetrahydro-1H-inden)

Eine Lösung von 6,81 g (21,8 mmol) des Dilithiumetherates (Beispiel 2) in 50 ml Tetrahydrofuran wird auf 0°C abgekühlt und tropfenweise mit 5,50 ml (4,74 g, 43,6 mmol) Trimethylsilylchlorid versetzt. Man läßt über Nacht

auf Raumtemperatur erwärmen, wobei man eine orangefarbene, trübe Suspension erhält. Diese wird durch Zugabe von 50 ml entgastem Wasser hydrolysiert und anschließend mit Petrolether extrahiert. Nach dem Trocken über Magnesiumsulfat und dem Entfernen des Lösungsmittels im Vakuum erhält man 6,54 g (81 %) als rotorangefarbenes Öl.

b) Synthese von (4-[3'-Trimethylsilyl-($\eta^5$-cyclopenatdienyl)]-4,7,7-trimethyl-[2-trimethylsilyl($\eta^5$-4,5,6,7-tetrahydroindenyl)]}dilithium

Eine auf 0°C abgekühlte Lösung von 3,30 g (8,90 mmol) der Bistrimethylsilyl-substituierten Verbindung in 40 ml Pentan wird mit 11,1 ml (17,8 mmol) einer 1,60 M etherischen Methyllithiumlösung tropfenweise versetzt. Dabei erhält man unter Gasentwicklung einen weißen Niederschlag. Man läßt zur Vervollständigung der Reaktion noch 24 Stunden bei Raumtemperatur rühren, ehe man den weißen Niederschlag abfiltriert und mit Pentan wäscht. Nach dem Trocknen im Ölpumpenvakuum erhält man das Dilithiumsalz als weißen, pyrophoren Rückstand in einer Ausbeute von 76 % (2,60 g).

c) Synthese von {4-[3'-Trimethylsilyl-($\eta^5$-cyclopentadienyl)]-4,7,7-trimethyl-[2-trimethylsilyl($\eta^5$-4,5,6,7-tetrahydroindenyl)]}dichlorozirconium

Zu einer auf -78°C abgekühlten Suspension von 2,60 g (6,79 mmol) des Bistrimethylsilyl-substituierten Dilithiumsalzes in 100 ml Toluol werden 1,58 g (6,79 mmol) Zirconiumtetrachlorid portionsweise hinzugefügt. Man läßt auf Raumtemperatur erwärmen und erhält nach 24 Stunden Rühren eine orangefarbene Suspension. Nachdem man von Unlöslichem abgetrennt hat, wird das Lösungsmittel zur Trockne eingeengt, wobei man ein rotes Öl erhält. Durch Zugabe von 20 ml Pentan und anschließender Aufarbeitung kann man beide Diasteromere des ansa-Zirconocens als orangefarbenes Pulver in einer Rohausbeute von 1,54 g (43 %) isolieren; Fp.: 151°C (Zers., DSC).

II. Polymerisationsbeispiele

Beispiele A-M

Allgemeine Versuchsdurchführung

In einem 500-ml-Polymerisationsreaktor wird der Cokatalysator Methylalumoxan vorgelegt, in 250 ml Toluol gelöst und auf -50°C gekühlt. Mit einem Gaseinleitungsrohr wird Propen durch die Lösung geleitet und damit einkondensiert, wobei überschüssiges Propen über einen Blasenzähler entweichen kann. Sobald die gewünschte Menge an flüssigem Propen vorhanden ist (ca. 30 bis 35 ml), wird das Einleitungsrohr geschlossen. Anschließend wird die gewünschte Polymerisationstemperatur eingestellt. Nach erfolgter Temperierung gibt man eine Lösung des Katalysators in wenig Toluol zu. Nach einer entsprechenden Reaktionszeit wird der Abbruch der Reaktion durch Zugabe von 500 ml salzsaurem Methanol herbeigeführt, wobei das überschüssige Fropen unter starkem Aufsieden der Lösung entweicht. Die Isolierung der Polymere erfolgt durch Abtrennen der Toluolphase und Extraktion der Wasser/Methanolphase mit Diethylether. Die vereinigten Toluol- und Diethyletherphasen werden dann im Vakuum zur Trockene eingeengt.

Die erzielten Versuchsergebnisse sind in der nachfolgenden Tabelle aufgeführt:

Propenpolymerisation mit ansa-Metallocen/Methylaluminoxan Katalysatorsystemen, wobei die Metallocene 4-($\eta^5$-Cyclopentadienyl)-4,7,7-trimethyl-($\eta^5$-4, 5,6,7-tetrahydroindenyl)]dichlorotitan (a), 4-($\eta^5$-Cyclopentadienyl)-4,7,7-trimethyl-($\eta^5$-4,5,6,7-tetrahydroindenyl)]dichlorozirconium (b) und 4-($\eta^5$-cyclopentadienyl)-4,7-dimethyl-7-phenyl-($\eta^5$-4,5,6,7-tetrahydroindenyl)dichlorozirconium (c) eingesetzt wurden.

| Beispiel | Metallocen | T [°C] | Zeit [min] | Kat. [mg] | Verh. Cokat./Kat. | PP [g] | Aktivität | Mη |
|---|---|---|---|---|---|---|---|---|
| A | a) | -60 | 300 | 20 | 550 | 2,3 | 110 | - |
| B | a) | -50 | 240 | 20 | 550 | 4,7 | 300 | 680000 |
| C | a) | -40 | 240 | 20 | 550 | 5,8 | 370 | 290000 |
| D | a) | -30 | 240 | 19 | 590 | 8,7 | 650 | 210000 |
| E | a) | -20 | 180 | 20 | 550 | 5,6 | 500 | 56000 |
| F | a) | -11 | 180 | 19 | 590 | 12,5 | 1100 | 23000 |
| G | a) | 0 | 120 | 22 | 500 | 11,2 | 1300 | 9000 |

(fortgesetzt)

| Beispiel | Metallocen | T [°C] | Zeit [min] | Kat. [mg] | Verh. Cokat./Kat. | PP [g] | Aktivität | Mη |
|---|---|---|---|---|---|---|---|---|
| H | b) | -50 | 300 | 20 | 320 | 0,4 | 16 | 28000 |
| I | b) | -30 | 240 | 20 | 320 | 6,3 | 330 | 25000 |
| J | b) | -5 | 240 | 20 | 320 | 29,5 | 1500 | 2100 |
| K | b) | 22 | 120 | 20 | 620 | 16,8 | >2200 | -- |
| L | b) | 70 | 60 | 10,6 | 2200 | 1000 | 13300 | -- |
| M | c) | -30 | 240 | 19 | 390 | 2,8 | 180 | -- |

Es wurde stets eine 10,6 %ige toluolische Methylaluminoxanlösung als Cokatalysator eingesetzt. Die Aktivitäten berechnen sich nach folgender Gleichung:

$$\text{Aktivität} = gPP/(g[M] \cdot t \cdot p)$$

| | |
|---|---|
| gPP = | Menge an Polypropylen in g |
| g[M] = | Menge an Übergangsmetall im Katalysator |
| t = | Dauer in h |
| p = | Druck in bar |

Beispiel N

a) Herstellung der Katalysatorkomponente

[4-($\eta^5$-Cyclopentadienyl)-4,7,7-trimethyl-$\eta^5$-4,5,6,7-tetrahydroindenyl)]dichlorozirconium wurde entsprechend EP 567 952 auf $SiO_2$ geträgert.

b) Gasphasenpolymerisation von Ethylen

In einem 2-$dm^3$-Stahlautoklaven mit polierten Wandflächen wurde eine Gasphasenpolymerisation von Ethylen durchgeführt. Das Wirbelbett wurde mit Hilfe eines wandgängigen Doppelwendelrührers bei einer Vorlage von 10 g Polyethylenpulver als Saatbett mechanisch erzeugt. Über eine Druckbürette wurden zunächst der Cokatalysator (2 mmol Triisobutylaluminium in 2 $cm^3$ iso-Pentan) und danach 1 g der Katalysatormischung (25,8 µmol Zr) zudosiert. Anschließend wurde die Polymerisation bei 8 bar Ethylenpartialdruck bei einer Temperatur von 80°C 1 Stunde durchgeführt und durch Entspannen des Autoklaven beendet.

Es wurden 36 g Polyethylen entsprechend einer Aktivität von 3,6 kg PE/g Metallocen mit einer VZ von 70 ml/g erhalten.

Beispiele O-T

Ein trockener 1,5 $dm^3$-Reaktor wurde mit Stickstoff gespült und bei 20°C mit 0,75 $dm^3$ eines entaromatisierten Benzinschnitts mit dem Siedebereich 100 bis 120°C gefüllt. Dann wurde der Gasraum des Reaktors durch 5-maliges Aufdrücken von 2 bar Propylen und Entspannen stickstofffrei gespült. Danach wurden 3,75 $dm^3$ toluolische Methylaluminiumoxanlösung (5 mmol Al, n = 18) zugegeben. Unter Rühren wurde der Reaktor auf 30°C aufgeheizt und bei 500 Upm Rührgeschwindigkeit wurde durch Zugabe der Monomeren (Partialdruck von Ethylen und Propylen, sowie die Menge an 5-Ethyliden-2-norbornen (in $cm^3$) siehe Tabelle) die Reaktorvorbereitung abgeschlossen.

Parallel dazu wurden 0,125 mg des Metallocens 4-($\eta^5$-3'-methylcyclopentadienyl)-4,7,7-trimethyl-($\eta^5$-2-methyl-4,5,6,7-tetrahydroindenyl)]dichlorozirconium in 1,25 $cm^3$ toluolischer Methylaluminimoxanlösung (1,67 mmol Al, n = 18) aufgelöst, und durch 15 minütiges Stehenlassen zur vollständigen Reaktion gebracht. Dann wurde die Lösung in den Reaktor gegeben, das Polymerisationssystem wurde auf 50°C gebracht und durch entsprechende Kühlung 1 Stunde bei dieser Temperatur belassen. Durch Zugabe von 2 ml Isopropanol wurde dann die Polymerisation gestoppft, das Polymer durch Ablassen des Reaktorinhaltes in Aceton gefällt und bei 80°C im Vakuum getrocknet (stabilisiert mit Irganox 1010, 0,1 Gew.-%). Die Ergebnisse der Polymerisationen sind ebenfalls der Tabelle zu entnehmen.

Tabelle: Copolymere und Terpolymere

| Beispiel | Partialdurck Propylen | Partialdruck Ethylen | $cm^3$ 5-Ethyliden-2-norbornen [ENB] | Ausbeute [kg Polymer/g Metxh] | VZ [$cm^3/g$] | Tg [°C] | Comonomergehalt Ethylen [Gew.-%] | Comonomergehalt ENB [Gew.-%] |
|---|---|---|---|---|---|---|---|---|
| O | 2,5 | 0,5 | - | 14 | 26 | -15,5 | 5,3 | - |
| P | 1,0 | 3,0 | - | 12 | 41 | -55,9 | 35,0 | - |
| Q | 1,0 | 3,0 | 1,25 | 20 | 50 | -55,1 | 40,8 | 2,5 |
| R | 1,0 | 3,0 | 2,5 | 24 | 51 | -56,3 | 44,2 | 4,3 |
| S | 1,0 | 3,0 | 5,0 | 19 | 52 | -46,5 | 48,1 | 9,4 |
| T | 1,0 | 3,0 | 10,0 | 26 | 50 | -51,9 | 49,4 | 12,2 |

Beispiel U:

In einem 1,5 $dm^3$-Autoklav, der vorher gründlich mit Argon gespült wurde, werden 600 $cm^3$ einer Lösung von 180 $cm^3$ Styrol (destilliert bei reduziertem Druck) in Toluol vorgelegt. Durch mehrfaches Aufdrücken von Argon (1 bar) wurde die Lösung mit Argon gesättigt. In den so vorbereiteten Reaktor wurden im Gegenstrom 10 $cm^3$ toluolische Methylaluminoxanlösung (10,1 Gew.-%ige Methylaluminoxanlösung der Molmasse 1300 g/mol nach kryoskopischer Bestimmung) dosiert. Eine Lösung von 10 mg 4-($\eta^5$-Isopropyl-cyclopentadienyl)-4,7,7-trimethyl-($\eta^5$-4,5,6,7-tetrahydroindenyl)dichlorozirkonium in 10 $cm^3$ toluolischer Methylaluminoxanlösung wurde nach 15 minütiger Voraktivierung zugegeben. (Im Falle einer Wasserstoffregelung kann an dieser Stelle Wasserstoff aufgepreßt werden.)

Unter Rühren (750 UPM) wurde zwei Stunden polymerisiert und die Temperatur im Kessel bei 70°C gehalten wurde.

Nach Ende der Reaktionszeit wurde das Polymerisationsgemisch in ein Gefäß abgelassen und sofort in 5 $dm^3$ Ethanol eingetragen, 10 Minuten gerührt und anschließend das ausgefallene Produkt filtriert. Der Filterkuchen wurde je dreimal abwechselnd mit 10 %iger Salzsäure und Ethanol gewaschen.

Abschließend wurde mit Wasser neutral gewaschen, der Rückstand in Ethanol aufgeschlämmt und erneut filtriert. Das so gereinigte Polymer wurde bei $80^0C$ im Vakuum (0,2 bar) 15 Stunden getrocknet.

Nach der Trocknung wurden 5,2 g Polymer erhalten, welches eine Glastemperatur von 102°C aufwies.

Beispiel U1:

In einem 1,5 $dm^3$-Autoklav, der vorher gründlich mit Ethen gespült wurde, werden 600 $cm^3$ einer Lösung von 180 $cm^3$ Styrol (destilliert bei reduziertem Druck) in Toluol vorgelegt. Durch mehrfaches Aufdrücken von Ethen (1 bar) wurde die Lösung mit Ethen gesättigt. In den so vorbereiteten Reaktor wurden im Gegenstrom 10 $cm^3$ toluolische Methylaluminoxanlösung (10,1 Gew.-%ige Methylaluminoxanlösung der Molmasse 1300 g/mol nach kryoskopischer Bestimmung) dosiert. Eine Lösung von 10 mg 4-($\eta^5$-Isopropyl-cyclopentadienyl)-4,7,7-trimethyl-($\eta^5$-4,5,6,7-tetrahydroindenyl)dichlorozirkonium in 10 $cm^3$ toluolischer Methylaluminoxanlösung wurde nach 15 minütiger Voraktivierung zugegeben. (Im Falle einer Wasserstoffregelung kann an dieser Stelle Wasserstoff aufgepreßt werden.)

Unter Rühren (750 UPM) wurde eine Stunde polymerisiert, wobei der Ethendruck durch Nachdosieren bei 1 bar und die Temperatur im Kessel bei 70°C gehalten wurde.

Nach Ende der Reaktionszeit wurde das Polymerisationsgemisch in ein Gefäß abgelassen und sofort in 5 $dm^3$ Ethanol eingetragen, 10 Minuten gerührt und anschließend das ausgefallene Produkt filtriert. Der Filterkuchen wurde je dreimal abwechselnd mit 10 %iger Salzsäure und Ethanol gewaschen.

Abschließend wurde mit Wasser neutral gewaschen, der Rückstand in Ethanol aufgeschlämmt und erneut filtriert. Das so gereinigte Polymer wurde bei $80^0C$ im Vakuum (0,2 bar) 15 Stunden getrocknet.

Nach der Trocknung wurden 21 g farbloses Polymer erhalten, welches eine Glastemperatur von -24°C und eine Viskositätszahl von 30 $cm^3/g$ aufwies.

Beispiel V:

Zur Herstellung der Katalysator-Lösung werden 10 mg Metallocen A in 10 ml MAO-Lösung in Toluol gelöst und 15 Minuten gerührt.

Parallel hierzu wird ein inertisierter 1,5 $dm^3$ Rührreaktor mit 900 ml Dieselöl (Siedepunkt 100 bis 120°C) befüllt und auf 70°C temperiert. Die Katalysator-Lösung wird zudosiert und bei 750 Upm mit 7 bar Ethylen 1 Stunde polymerisiert. Anschließend wird der Reaktor entspannt, das Polymere aus der Suspension abfiltriert, mit Aceton gewaschen und 12 Stunden im Vacuum-Trockenschrank getrocknet.

Es resultieren 39,2 g Polyethylen mit einer VZ von 72 ml/g.

Beispiel W bis EA:

Beispiel A wurde mit den angegebenen Mengen der Metallocene 1 bis 5 wiederholt, wobei in den Beispielen BA und DA die Polymerisations-Temperatur geändert wurde sowie in den Beispielen X und EA 0,5 bar Wasserstoff verwendet und mit Ethylen auf 7 bar ergänzt wurde.

1: [4-($\eta^5$-Cyclopentadienyl)-4,7,7-trimethyl-($\eta^5$-4,5,6,7-tetrahydroindenyl)]dichlorozirkonium
2: [4-($\eta^5$-Cyclopentadienyl)-4,7-dimethyl-7-butyl-($\eta^5$-4,5,6,7-tetrahydroindenyl)]dichlorozirkonium
3: [4-($\eta^5$-Cyclopentadienyl)-4,7-dimethyl-7-phenyl-($\eta^5$-4,5,6,7-tetrahydroindenyl)]-dichlorozirkonium
4: [4-($\eta^5$-3-Methyl-cyclopentadienyl)-4,7,7-dimethyl-($\eta^5$-4,5,6,7-tetrahydroindenyl)]-dichlorozirkonium
5: [4-($\eta^5$-3-tert.-butyl-cyclopentadienyl)-4,7,7-dimethyl-($\eta^5$-4,5,6,7-tetrahydroindenyl)]-dichlorozirkonium

| Bsp. | Met | [mg] | Temperatur [°C] | Ethylen [bar] | $H_2$ [bar] | Aktivität [kg/g Metallocen/h] | VZ [mg/g] |
|---|---|---|---|---|---|---|---|
| W | 1 | 10 | 70 | 7 | 0 | 3,92 | 72 |
| X | 1 | 10 | 70 | 6,5 | 0,5 | 3,8 | 20 |
| Y | 2 | 10 | 70 | 7 | 0 | 11,8 | 100 |
| Z | 3 | 7 | 70 | 7 | 0 | 2 | 75 |
| AA | 4 | 2 | 70 | 7 | 0 | 37 | 186 |
| BA | 5 | 8 | 50 | 7 | 0 | 4,2 | 320 |
| CA | 5 | 8 | 70 | 7 | 0 | 39 | 205 |
| DA | 5 | 4 | 85 | 7 | 0 | 68,4 | 70 |
| EA | 5 | 8 | 70 | 6,5 | 0,5 | 24,8 | 44 |

Beispiel FA:

500 ml Dieselöl (Sdp. 100 bis 120°C), 20 ml Hexen und 10 ml 10 Gew.-%-Lösung von Methylaluminoxan in Toluol wurden in einem Laborautoklaven unter Stickstoff vorgelegt und auf 70°C unter 700 Upm Rühren temperiert. Parallel hierzu wurden 10 mg des Metallocens 5 in 1 ml 10 Gew.-% MAO-Lösung in Toluol gelöst.
Die Polymerisation wird durch Zugabe der Metallocen/MAO-Lösung und durch Aufpressen von 4 bar Ethylen gestartet. Nach 15 Minuten wird die Polymerisation mit $CO_2$ gestoppt und der Reaktor-Inhalt in 200 ml methanolische HCl abgelassen. Das Gemisch wird 5 Stunden zur Entfernung von Aluminium gerührt, das Polymer anschließend abfiltriert und mit Wasser sowie Aceton gewaschen und zur Bestimmung der Ausbeute 12 Stunden im Vacuum bei 80°C getrocknet.

Es resultieren 4,8 g Ethylen/1-Hexen-Copolymer mit einer VZ von 70 mg/g.
Eine 1 g Probe wird zur Entfernung von Rest-Comonomer in Dieselöl (Sdp. 100 bis 120°C) in der Hitze gelöst, anschließend ausgefällt, abfiltriert, mit Aceton gewaschen und nochmals im Vacuum bei 80°C getrocknet. Im DSC wurde ein Schmelzpunkt von 110,5°C und ein Hexen-Gehalt von 4,6 mol-% gemäß 13 C-NMR bestimmt.

Beispiel GA:

Beispiel J wurde mit 10 mg des Metallocens 6 ( [4-($\eta^5$-3-isopropylcyclopentadienyl)-4,7,7-dimethyl-($\eta^5$-4,5,6,7-tetrahydroindenyl)]dichlorozirkonium ) wiederholt. Es resultieren 4 g Copolymer mit einer VZ von 22 mg/g, welches nach Reinigung einen DSC-Schmelzpunkt von 102°C und gemäß 13 C-NMR einen Hexengehalt von 7,1 mol-% aufweist.

**Patentansprüche**

1. Verfahren zur Herstellung eines Polyolefins durch Polymerisation mindestens eines Olefins in Gegenwart mindestens einer stereorigiden Metallocenverbindung, die als Liganden zwei substituierte oder unsubstituierte Cyclopentadienylgruppen aufweist, die über ein mono- oder polycyclisches Ringsystem miteinander verbunden sind, worin sich eine Cyclonentadienylgruppe als Substituent an dem mono- oder polycyclischen Ringsystem befindet, während eine weitere Cyclopentadienylgruppe an das mono- oder polycyclische Ringsystem anelliert ist.

2. Verfahren gemäß Anspruch 1, worin die stereorigide Metallocenverbindung ein von 4-($\eta^5$-3'-alkyl-cyclopentadienyl)-4,6,6-trimethyl-($\eta^5$-2-alkyl-4,5-tetrahydropentalen) verschiedenes Ligandsystem aufweist.

3. Verfahren gemäß Anspruch 1 oder 2, worin das mono- oder polycyclische Ringsystem der stereorigiden Metallocenverbindung mindestens sechs Ringatome aufweist.

4. Verfahren gemäß einem oder mehreren der Ansprüche 1 bis 3, wobei die stereorigide Metallocenverbindung die Formel I aufweist

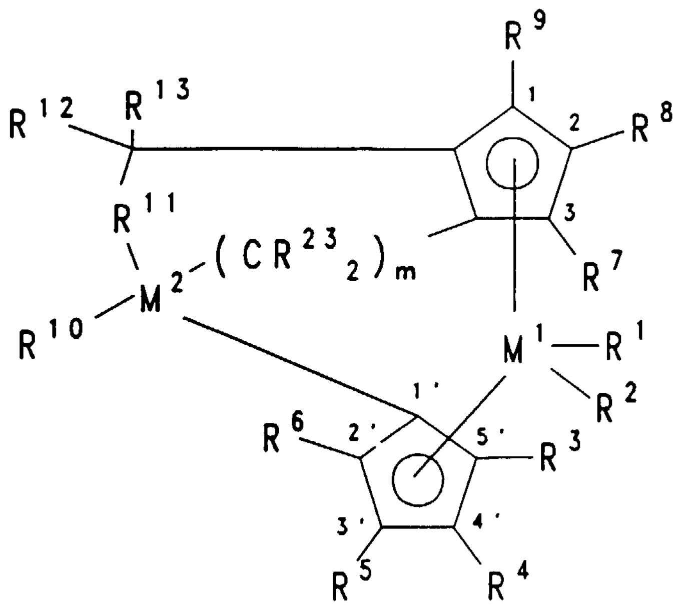

(I)

worin

| | |
|---|---|
| $M^1$ | ein Metall der Gruppe IIIb, IVb, Vb oder VIb des Periodensystems ist, |
| M2 | Kohlenstoff, Silizium oder Germanium ist, |
| $R^1$ und $R^2$ | gleich oder verschieden sind und ein Wasserstoffatom, eine $C_1$-$C_{40}$-kohlenwasserstoffhaltige Gruppe wie eine $C_1$-$C_{10}$-Alkyl-, eine $C_1$-$C_{10}$-Alkoxy, eine $C_6$-$C_{10}$-Aryl-, eine $C_6$-$C_{20}$-Aryloxy-, eine $C_2$-$C_{10}$-Alkenyl-, eine $C_7$-$C_{40}$-Arylalkyl- oder eine $C_7$-$C_{40}$-Arylalkenylgruppe, eine OH-Gruppe, ein Halogenatom oder $NR^{14}_2$, worin $R^{14}$ ein Halogenatom, eine $C_1$-$C_{10}$-Alkylgruppe oder eine $C_6$-$C_{10}$-Arylgruppe ist, bedeuten, oder $R^1$ und $R^2$ zusammen mit den sie verbindenden Atomen ein Ringsystem bilden, |
| $R^3$, $R^4$, $R^5$, $R^6$, $R^7$, $R^8$ und $R^9$ | gleich oder verschieden sind und ein Wasserstoffatom, ein Halogenatom, eine $C_1$-$C_{20}$-kohlenwasserstoffhaltige Gruppe wie eine $C_1$-$C_{10}$-Alkylgruppe, die halogeniert sein kann, eine $C_6$-$C_{20}$-Arylgruppe, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe, einen, $-R^{14}-SiR^{14}_3-$, $-NR^{14}_2-$, $-SiOR^{14}_3-$, $-SiSR^{14}_3-$ oder $-PR^{14}_2$-Rest bedeuten, worin $R^{14}$ ein Halogenatom, eine $C_1$-$C_{10}$-Alkylgruppe oder eine $C_6$-$C_{10}$-Arylgruppe ist, oder zwei oder mehr benachbarte Reste $R^3$, $R^4$, $R^5$, $R^6$, $R^7$, $R^8$ und $R^9$ zusammen mit den sie verbindenen Atomen ein Ringsystem bilden, welches bevorzugt 4-40, besonders bevorzugt 6-15 Kohlenstoffatome enthält, |
| $R^{10}$ | ein Wasserstoffatom, oder eine $C_1$-$C_{40}$-kohlenwasserstoffhaltige Gruppe wie eine $C_1$-$C_{20}$-Alkyl-, eine $C_1$-$C_{10}$-Alkoxy-, eine $C_6$-$C_{20}$-Aryl-, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe, bedeutet, die jeweils Reste $-NR^{14}_3$, $-SiR^{14}_3$,$-SR^{14}_2$ oder $-OSiR^{14}_3$ tragen können, worin $R^{14}$ ein Halogenatom, eine $C_1$-$C_{10}$-Alkylgruppe oder eine $C_6$-$C_{10}$-Arylgruppe ist, oder $R^{10}$ mit einem oder mehreren der Reste $R^3$, $R^4$, $R^5$ und $R^6$ verbunden ist, |

$R^{11}$

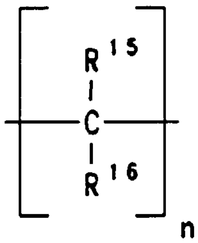 , 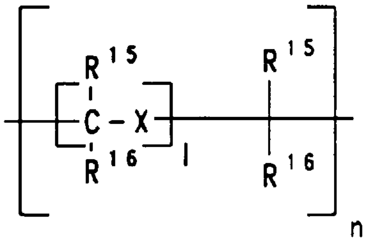 , 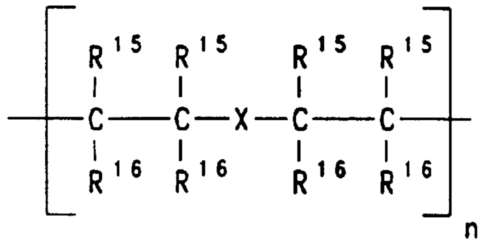 ,

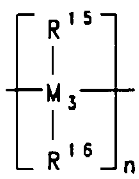 , 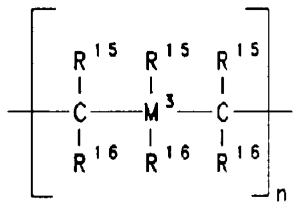 , 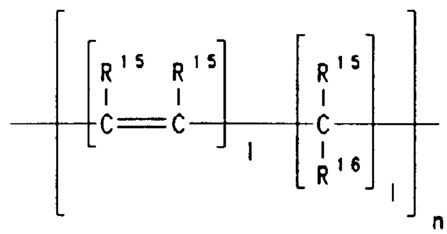

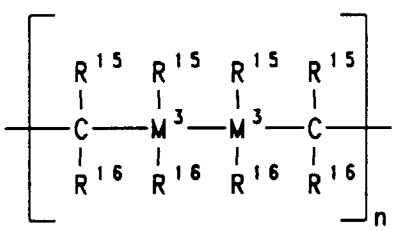 oder 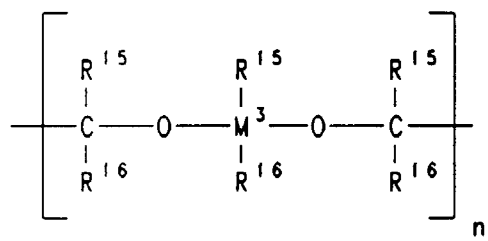

ist, wobei n eine ganze Zahl von 1 bis 20 ist, l ein ganze Zahl von 0 bis 20 ist,

X — gleich O, $NR^{14}$, =CO, $=PR^{14}$, $=P(O)R^{14}$, SO, $SO_2$ oder -S- ist, worin $R^{14}$ ein Halogenatom, eine $C_1$-$C_{10}$-Alkylgruppe oder eine $C_6$-$C_{10}$-Arylgruppe ist,

$R^{15}$ und $R^{16}$ — gleich oder verschieden sind und ein Wasserstoffatom, ein Halogenatom, oder eine $C_1$-$C_{40}$-kohlenwasserstoffhaltige Gruppe wie eine $C_1$-$C_{10}$-Alkyl-, eine $C_1$-$C_{10}$-Fluoralkyl-, eine $C_1$-$C_{10}$-Alkoxy-, eine $C_6$-$C_{10}$-Aryl-, eine $C_6$-$C_{10}$-Fluoraryl-, eine $C_6$-$C_{10}$-Aryloxy-, eine $C_2$-$C_{10}$-Alkenyl-, eine $C_7$-$C_{40}$-Arylalkyl-, eine $C_7$-$C_{40}$-Alkylaryl- oder eine $C_8$-$C_{40}$-Arylalkenylgruppe bedeuten, oder zwei Reste $R^{15}$, zwei Reste $R^{16}$, oder

$R^{15}$ und $R^{16}$ — jeweils mit den sie verbindenen Atomen einen oder mehrere Ringe bilden, und $M^3$ Silizium, Germanium oder Zinn ist,

$R^{12}$ und $R^{13}$ — gleich oder verschieden ist, und ein Wasserstoffatom, eine $C_1$-$C_{40}$-kohlenwasserstoffhaltige Gruppe wie eine $C_1$-$C_{20}$-Alkyl-, eine $C_1$-$C_{10}$-Alkoxy-, eine $C_6$-$C_{20}$-Aryl-, eine $C_6$-$C_{20}$-Aryloxy-, eine $C_2$-$C_{12}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe bedeutet, die jeweils Reste $-NR^{14}_3$, $-SR^{14}_2$, $-SiR^{14}_3$, $-OSiR^{14}_3$, worin $R^{14}$ ein Halogenatom, eine $C_1$-$C_{10}$-Alkylgruppe oder eine $C_6$-$C_{10}$-Arylgruppe ist, oder Halogen tragen können,

$R^{23}$ — gleich oder verschieden sind und ein Wasserstoffatom, ein Halogenatom oder eine $C_1$-$C_{40}$-kohlenwasserstoffhaltige Gruppe wie eine $C_1$-$C_{10}$-Alkylgruppe, eine $C_1$-$C_{10}$-Alkoxy-, eine $C_6$-$C_{10}$-Aryl-, eine $C_6$-$C_{25}$-Aryloxy-, eine

$C_2$-$C_{10}$-Alkenyl, eine $C_7$-$C_{40}$-Arylalkyl- oder eine C7-C40-Arylalkenylgruppe bedeuten, oder einer oder mehr Reste $R^{23}$ mit einem oder mehr Resten $R^{15}$ und $R^{16}$ und/oder einem oder mehr Resten $R^{10}$, $R^{11}$, $R^{12}$ und $R^{13}$ verbunden sind, und m eine ganze Zahl von 0 bis 24 ist, wobei für den Fall, daß $M^2$ gleich C, m gleich 0 und $R^{11}$ gleich $CH_2$ ist, mindestens einer der Reste $R^4$, $R^8$, $R^{10}$, $R^{12}$ und $R^{13}$, ungleich Alkyl und/oder mindestens einer der Reste $R^3$, $R^5$, $R^6$, $R^7$ und $R^9$ ungleich Wasserstoff ist.

**5.** Verfahren gemäß Anspruch 4, worin $M^1$ Zirkonium ist, $R^1$ und $R^2$ gleich sind und ein Halogenatom bedeuten, $R^3$, $R^4$, $R^5$, $R^6$, $R^7$, $R^8$ und $R^9$ gleich oder verschieden sind und Wasserstoff oder eine $C_1$-$C_4$-Alkylgruppe oder eine $C_6$-$C_{14}$-Arylgruppe bedeuten, oder $R^8$ und $R^9$ sowie $R^3$ und $R^4$ und/oder $R^5$ und $R^6$ zusammen mit den sie verbindender Atomen ein aromatisches Kohlenwasserstoffringsystem bilden, $M^2$ ein Kohlenstoffatom ist, $R^{10}$ eine $C_1$-$C_6$-Alkylgruppe ist, $R^{11}$ $-CH_2-CH_2-$ ist, $R^{12}$ und $R^{13}$ gleich oder verschieden sind und eine Methyl- oder Phenyl-Gruppe bedeuten und m = 0 ist.

**6.** Verfahren gemäß einem oder mehreren der Ansprüche 1 bis 5, in Gegenwart eines Katalysators, enthaltend a) mindestens eine stereorigide Metallocenverbindung und b) mindestens einen Cokatalysator.

**7.** Verfahren gemäß Anspruch 6, worin der Cokatalysator ein Aluminoxan ist.

**8.** Verfahren gemäß einem oder mehreren der Ansprüche 1 bis 7, wobei die stereorigide Metallocenverbindung geträgert und/oder vorpolymerisiert ist.

**9.** Verfahren gemäß einem oder mehreren der Ansprüche 1 bis 8, wobei eines oder mehrere Olefine der Formel $R^a$-CH=CH-$R^b$ polymerisiert werden, worin $R^a$ und $R^b$ gleich oder verschieden sind und ein Wasserstoffatom oder einen Kohlenwasserstoffrest mit 1 bis 20 C-Atomen bedeuten, oder $R^a$ und $R^b$ zusammen mit den sie verbindenen Atomen einen oder mehrere Ringe bilden.

**10.** Polyolefin, herstellbar nach dem Verfahren gemäß einem oder mehreren der Ansprüche 1 bis 9.

**11.** Polymerlegierung, enthaltend mindestens ein Polyolefin gemäß Anspruch 10.

**12.** Formkörper, enthaltend mindestens ein Polyolefin gemäß Anspruch 10.

**13.** Formkörper, enthaltend eine Polymerlegierung gemäß Anspruch 11.

**14.** Verwendung einer stereorigiden Metallocenverbindung, die als Liganden zwei substituierte oder unsubstituierte Cyclopentadienylgruppen aufweist, die über ein mono- oder polycyclisches Ringsystem miteinander verbunden sind, und worin sich eine Cyclopentadienylgruppe als Substituent an dem mono- oder polycyclischen Ringsystem befindet, während eine weitere Cyclopentadienylgruppe an das mono- oder polycyclische Ringsystem anelliert ist, zur Herstellung eines Polyolefins.

## Claims

**1.** A process for the preparation of a polyolefin by polymerization of at least one olefin in the presence of at least one stereorigid metallocene compound containing, as ligands, two substituted or unsubstituted cyclopentadienyl groups bonded to one another via a monocyclic or polycyclic ring system, in which a cyclopentadienyl group is located as substituent on the monocyclic or polycyclic ring system while a further cyclopentadienyl group is fused to the monocyclic or polycyclic ring system.

**2.** The process as claimed in claim 1, in which the stereorigid metallocene compound is a ligand system other than 4-($\eta^5$-3'-alkylcyclopentadienyl)-4,6,6-trimethyl($\eta^5$-2-alkyl-4,5-tetrahydropentalene).

**3.** The process as claimed in claim 1 or 2, in which the monocyclic or polycyclic ring system of the stereorigid metallocene compound has at least six ring atoms.

**4.** The process as claimed in one or more of claims 1 to 3, where the stereorigid metallocene compound has the

formula I

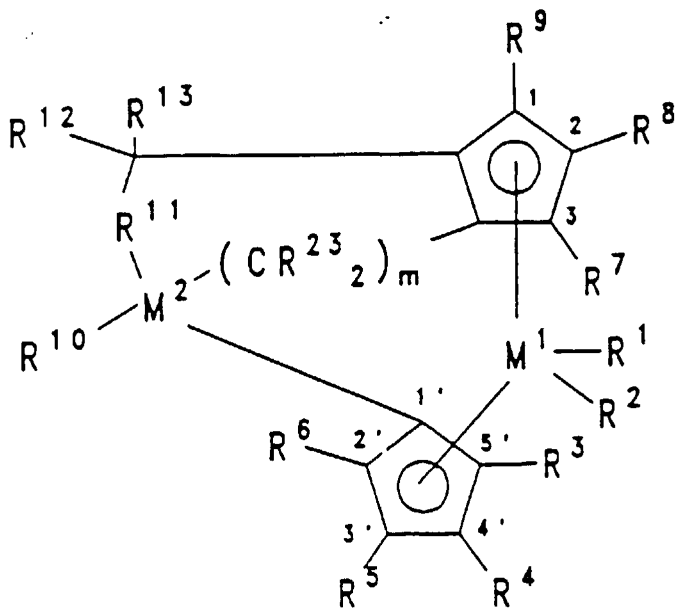

(I)

in which

$M^1$ is a metal from group IIIb, IVb, Vb or VIb of the Periodic Table,

$M^2$ is carbon, silicon, or germanium,

$R^1$ and $R^2$ are identical or different and are a hydrogen atom, a $C_1$-$C_{40}$-hydrocarbon-containing group, such as a $C_1$-$C_{10}$-alkyl group, a $C_1$-$C_{10}$-alkoxy group, a $C_6$-$C_{10}$-aryl group, a $C_6$-$C_{25}$-aryloxy group, a $C_2$-$C_{10}$-alkenyl group, a $C_7$-$C_{40}$-arylalkyl group or a $C_7$-$C_{40}$-arylalkenyl group, an OH group, a halogen atom or $NR^{14}_2$, in which $R^{14}$ is a halogen atom, a $C_1$-$C_{10}$-alkyl group or a $C_6$-$C_{10}$-aryl group, or $R^1$ and $R^2$, together with the atoms connecting them, form a ring system,

$R^3$, $R^4$, $R^5$, $R^6$, $R^7$, $R^8$ and $R^9$ are identical or different and are a hydrogen atom, a halogen atom, a $C_1$-$C_{20}$-hydrocarbon-containing group, such as a $C_1$-$C_{10}$-alkyl group, which may be halogenated, a $C_6$-$C_{20}$-aryl group, a $C_6$-$C_{20}$-aryloxy group, a $C_2$-$C_{12}$-alkenyl group, a $C_7$-$C_{40}$-arylalkyl group, a $C_7$-$C_{40}$-alkylaryl group or a $C_8$-$C_{40}$-arylalkenyl group, a $-SiR^{14}_3$, $-NR^{14}_2$, $-SiOR^{14}_3$, $-SiSR^{14}_3$, or $-PR^{14}_2$ radical, in which $R^{14}$ is a halogen atom, a $C_1$-$C_{10}$-alkyl group or a $C_6$-$C_{10}$-aryl group, or two or more adjacent radicals $R^3$, $R^4$, $R^5$, $R^6$, $R^7$, $R^8$ and $R^9$, together with the atoms connecting them, form a ring system preferably containing 4-40, particularly preferably 6-15, carbon atoms,

$R^{10}$ is a hydrogen atom or a $C_1$-$C_{40}$-hydrocarbon-containing group, such as a $C_1$-$C_{20}$-alkyl group, a $C_1$-$C_{10}$-alkoxy group, a $C_6$-$C_{20}$-aryl group, a $C_6$-$C_{20}$-aryloxy group, a $C_2$-$C_{12}$-alkenyl group, a $C_7$-$C_{40}$-arylalkyl group, a $C_7$-$C_{40}$-alkylaryl group or a $C_8$-$C_{40}$-arylalkenyl group, each of which may carry $-NR^{14}_3$, $-SiR^{14}_3$, $-SR^{14}_2$ or $-OSiR^{14}_3$ radicals, in which $R^{14}$ is a halogen atom, a $C_1$-$C_{10}$-alkyl group or a $C_6$-$C_{10}$-aryl group, or $R^{10}$ is connected to one or more of the radicals $R^3$, $R^4$, $R^5$ and $R^6$,

$R^{11}$ is

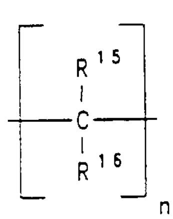 , 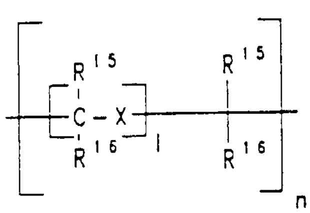 , 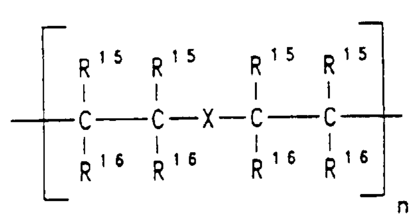 ,

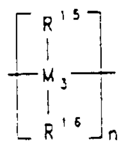 , 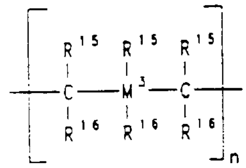 , 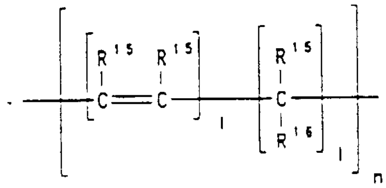

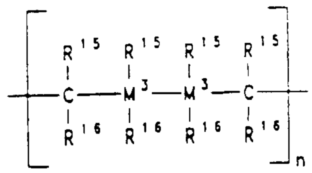 or 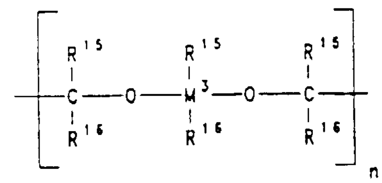

where n is an integer from 1 to 20, 1 is an integer from 0 to 20, X is O, $=NR^{14}$, =CO, $=PR^{14}$, $=P(O)R^{14}$, =SO, =SO, or -S-, in which $R^{14}$ is a halogen atom, a $C_1$-$C_{10}$-alkyl group or a $C_6$-$C_{10}$-aryl group,

$R^{15}$ and $R^{16}$ are identical or different and are a hydrogen atom, a halogen atom or a $C_1$-$C_{40}$-hydrocarbon-containing group, such as a $C_1$-$C_{10}$-alkyl group, a $C_1$-$C_{10}$-fluoroalkyl group, a $C_1$-$C_{10}$-alkoxy group, a $C_6$-$C_{10}$-aryl group, a $C_6$-$C_{10}$-fluoroaryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, or a $C_8$-$C_{40}$-arylalkenyl group or two radicals $R^{15}$, two radicals $R^{16}$ or $R^{15}$ and $R^{16}$, in each case together with the atoms connecting them, form one or more rings, and $M^3$ is silicon, germanium or tin,

$R^{12}$ and $R^{13}$ are identical or different and are a hydrogen atom, a $C_1$-$C_{40}$-hydrocarbon-containing group, such as a $C_1$-$C_{20}$-alkyl group, a $C_1$-$C_{10}$-alkoxy group, a $C_6$-$C_{20}$-aryl group, a $C_6$-$C_{20}$-aryloxy group, a $C_2$-$C_{12}$-alkenyl group, a $C_7$-$C_{40}$-arylalkyl group, a $C_7$-$C_{40}$-alkylaryl group or a $C_8$-$C_{40}$-arylalkenyl group, each of which may carry $-NR^{14}_3$, $-SR^{14}_2$, $-SiR^{14}_3$ or $-OSiR^{14}_3$ radicals, in which $R^{14}$ is a halogen atom, a $C_1$-$C_{10}$-alkyl group or a $C_6$-$C_{10}$-aryl group, or may carry halogen,

$R^{23}$ is identical or different and is a hydrogen atom, a halogen atom or a $C_1$-$C_{40}$-hydrocarbon-containing group, such as a $C_1$-$C_{10}$-alkyl group, a $C_1$-$C_{10}$-alkoxy group, a $C_6$-$C_{10}$-aryl group, a $C_6$-$C_{25}$-aryloxy group, a $C_2$-$C_{10}$-alkenyl group, a $C_7$-$C_{40}$-arylalkyl group or a $C_7$-$C_{40}$-arylalkenyl group, or one or more radicals $R^{23}$ are bonded to one or both radicals $R^{15}$ and $R^{16}$ and/or to one or more radicals $R^{10}$, $R^{11}$, $R^{12}$ and $R^{13}$, and

m is an integer from 0 to 24, but if $M^2$ is carbon, m is 0 and $R^{11}$ is $CH_2$, at least one of the radicals $R^4$, $R^8$, $R^{10}$, $R^{12}$ and $R^{13}$ is not alkyl and/or at least one of the radicals $R^3$, $R^5$, $R^6$, $R^7$ and $R^9$ is not hydrogen.

**5.** The process as claimed in claim 4, in which $M^1$ is zirconium, $R^1$ and $R^2$ are identical and are a halogen atom, $R^3$, $R^4$, $R^5$, $R^6$, $R^7$, $R^8$ and $R^9$ are identical or different and are hydrogen or a $C_1$-$C_4$-alkyl group or a $C_6$-$C_{14}$-aryl group, or $R^8$ and $R^9$ and $R^3$ and $R^4$ and/or $R^5$ and $R^6$, together with the atoms connecting them, form an aromatic hydrocarbon ring system, $M^2$ is a carbon atom, $R^{10}$ is a $C_1$-$C_6$-alkyl group, $R^{11}$ is $-CH_2$-$CH_2$-, $R^{12}$ and $R^{13}$ are identical or different and are a methyl or phenyl group, and m = 0.

**6.** The process as claimed in one or more of claims 1 to 5, in the presence of a catalyst comprising a) at least one stereorigid metallocene compound and b) at least one cocatalyst.

**7.** The process as claimed in claim 6, in which the cocatalyst is an aluminoxane.

**8.** The process as claimed in one or more of claims 1 to 7, in which the stereorigid metallocene compound is supported and/or prepolymerized.

**9.** The process as claimed in one or more of claims 1 to 8, in which one or more olefins of formula $R^a$-CH=CH-$R^b$ are polymerized, in which $R^a$ and $R^b$ are identical or different and are a hydrogen atom or a hydrocarbon radical having 1 to 20 carbon atoms, or $R^a$ and $R^b$, together with the atoms connecting them, form one or more rings.

**10.** A polyolefin which can be prepared by the process as claimed in one or more of claims 1 to 9.

**11.** A polymer alloy comprising at least one polyolefin as claimed in claim 10.

**12.** A molding comprising at least one polyolefin as claimed in claim 10.

**13.** A molding comprising a polymer alloy as claimed in claim 11.

**14.** The use of a stereorigid metallocene compound containing, as ligands, two substituted or unsubstituted cyclopentadienyl groups bonded to one another via a monocyclic or polycyclic ring system, and in which as for claim 1 cyclopentadienyl group is fused to the monocyclic or polycyclic ring system, for the preparation of a polyolefin.

**Revendications**

**1.** Procédé pour la préparation d'une polyoléfine par polymérisation d'au moins une oléfine en présence d'au moins un composé de métallocène stéréorigide, qui présente en tant que ligands deux groupes cyclopentadiényle substitués ou non substitués, qui sont reliés l'un à l'autre par l'intermédiaire d'un système de cycles mono- ou polycyclique, un groupe cyclopentadiényle se trouvant en tant que substituant sur le système de cycle mono- ou polycyclique, alors qu'un autre groupe cyclopentadiényle étant condensé sur le système de cycles mono- ou polycyclique.

**2.** Procédé selon la revendication 1, dans lequel le composé de métallocène stéréorigide présente un système de ligands différent du 4-($\eta^5$-3'-alkyl-cyclopentadiényl)-4,6,6-triméthyl-($\eta^5$-2-alkyl-4,5-tétrahydropentalène).

**3.** Procédé selon la revendication 1 ou 2, où le système de cycles mono- ou polycyclique du composé de métallocène stéréorigide présente au moins 6 atomes de cycle.

**4.** Procédé selon une ou plusieurs des revendications 1 à 3, le composé de métallocène stéréorigide répondant à la formule I présente

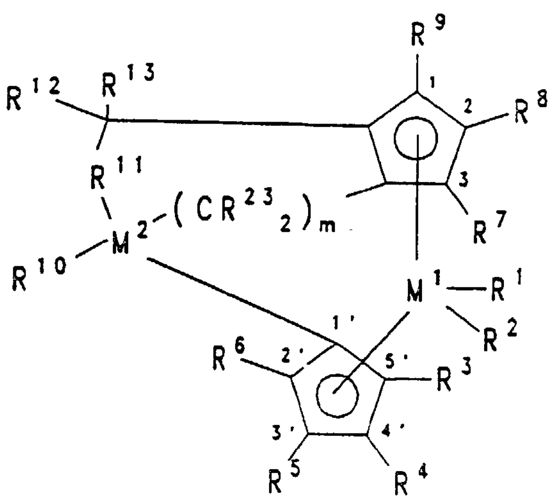

(I)

$M^1$ représente un métal du Groupe IIIb, IVb, Vb ou VIb du Système Périodique des Eléments,
$M^2$ représente un atome de carbone, de silicium ou de germanium,
$R^1$ et $R^2$, identiques ou différents représentent un atome d'hydrogène, un groupe hydrocarboné en $C_1$-$C_{40}$, tel qu'un groupe alkyle en $C_1$-$C_{10}$, un groupe alcoxy en $C_1$-$C_{10}$, un groupe aryle en $C_6$-$C_{10}$, un groupe aryloxy en $C_6$-$C_{25}$, un groupe alcényle en $C_2$-$C_{10}$, un groupe arylalkyle en $C_7$-$C_{40}$ ou un groupe arylalcényle en $C_7$-$C_{40}$, un groupe OH, un atome d'halogène ou $NR^{14}_2$, dans laquelle $R^{14}$ représente un atome d'halogène, un groupe alkyle en $C_1$-$C_{10}$ ou un groupe aryle en $C_6$-$C_{10}$, ou $R^1$ et $R^2$, ensemble avec les atomes qui les relient, forment un système de cycles,
$R^3$, $R^4$, $R^5$, $R^6$, $R^7$, $R^8$ et $R^9$, identiques ou différents, représentent un atome d'hydrogène, un atome d'halogène, un groupe hydrocarboné en $C_1$-$C_{20}$ tel qu'un groupe alkyle en $C_1$-$C_{10}$ qui peut être halogéné, un groupe

aryle en $C_6$-$C_{20}$, un groupe aryloxy en $C_6$-$C_{20}$, un groupe alcényle en $C_2$-$C_{12}$, un groupe arylalkyle en $C_7$-$C_{40}$, un groupe alkylaryle en $C_{17}$-$C_{40}$ ou un groupe arylacényle en $C_8$-$C_{40}$, un reste -$R^{14}SiR^{14}{}_3$-, -$NR^{14}_2$-, -$SiOR^{14}_3$-, -$SiSR^{14}_3$- ou -$PR^{14}_2$-, où $R^{14}$ représente un atome d'halogène, un groupe alkyle en $C_1$-$C_{10}$ ou un groupe aryle en $C_6$-$C_{10}$, ou deux ou plusieurs restes voisins $R^3$, $R^4$, $R^5$, $R^6$, $R^7$, $R^8$ et $R^9$, ensemble avec les atomes qui les relient, forment un système de cycles, lequel contient de préférence de 4 à 40, de manière particulièrement préférée de 6 à 15 atomes de carbone.

$R^{10}$ représente un atome d'hydrogène, ou un groupe hydrocarboné en $C_1$-$C_{40}$, tel qu'un groupe alkyle en $C_1$-$C_{20}$, un groupe alcoxy en $C_1$-$C_{10}$, un groupe aryle en $C_6$-$C_{20}$, un groupe aryloxy en $C_6$-$C_{20}$, un groupe alcényle en $C_2$-$C_{12}$, un groupe arylalkyle en $C_7$-$C_{40}$, un groupe alkylaryle en $C_7$-$C_{40}$, ou un groupe arylalcényle en $C_8$-$C_{40}$, qui peuvent chacun porter des restes -$NR^{14}_3$-, -$SiR^{14}_3$-, -$SR^{14}_2$- ou -$OSiR^{14}_3$-, où $R^{14}$ représente un atome d'halogène, un groupe alkyle en $C_1$-$C_{40}$ ou un groupe aryle en $C_6$-$C_{10}$, ou $R^{10}$ est relié à un ou plusieurs des restes $R^3$, $R^4$, $R^5$ et $R^6$,

$R^{11}$ représente

$R^{11}$

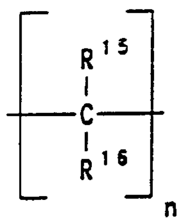, 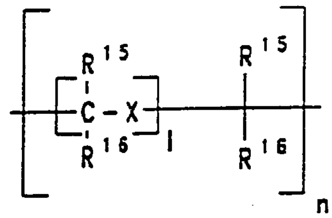, 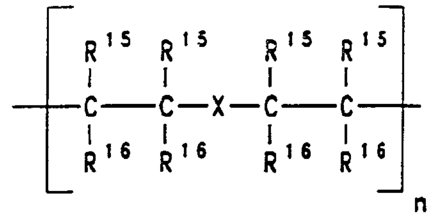,

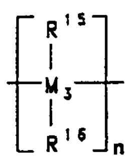, 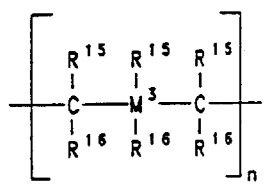, 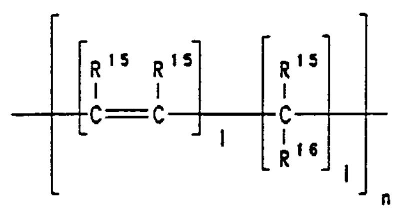

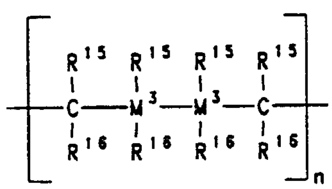 ou 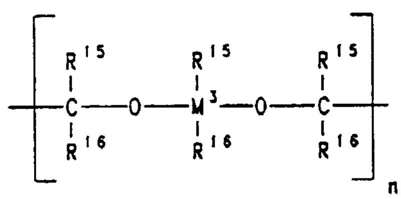

n étant un nombre entier de 1 à 20, 1 un nombre entier de 0 à 20,

X représente =$NR^{14}$, =CO, =$PR^{14}$, =$P(O)R^{14}$, =SO, =$SO_2$ ou -S-, où $R^{14}$ est un atome d'halogène, un groupe alkyle en $C_1$-$C_{10}$ ou un groupe aryle en $C_6$-$C_{10}$,

$R^{15}$ et $R^{16}$ sont identiques ou différents et représentent un atome d'hydrogène, un atome d'halogène ou un groupe hydrocarboné en $C_1$-$C_{40}$, tel qu'un groupe alkyle en $C_1$-$C_{10}$, un groupe fluoralkyle en $C_1$-$C_{10}$, un groupe alcoxy en $C_1$-$C_{10}$, un groupe aryle en $C_6$-$C_{10}$, un groupe fluroaryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$ ou un groupe arylalcényle en $C_8$-$C_{40}$, ou deux restes $R^{15}$, deux restes $R^{16}$, ou

$R^{15}$ et $R^{16}$ chacun avec les atomes qui les relient forment un ou plusieurs cycles, et

$M^3$ représente un atome de silicium, de germanium ou d'étain,

$R^{12}$ et $R^{13}$ sont identiques ou différents et représentent un atome d'hydrogène, un groupe hydrocarboné en $C_1$-$C_{40}$, tel qu'un groupe alkyle en $C_1$-$C_{20}$, un groupe alcoxy en $C_1$-$C_{10}$, un groupe aryle en $C_6$-$C_{20}$, un groupe aryloxy en $C_6$-$C_{20}$, un groupe alcényle en $C_2$-$C_{12}$, un groupe arylalkyle en $C_7$-$C_{40}$, un groupe alkylaryle en $C_7$-$C_{40}$ ou un groupe arylalcényle en $C_8$-$C_{40}$, qui peuvent chacun porter des restes $-NR^{14}_3$-, $-SR^{14}_2$-, $-SiR^{14}_3$- ou $-OSiR^{14}_3$-, où $R^{14}$ est un atome d'halogène, un groupe alkyle en $C_1$-$C_{10}$ ou un groupe aryle en $C_6$-$C_{10}$, ou peuvent porter des atomes d'halogène,

$R^{23}$ sont identiques ou différents et représentent un atome d'hydrogène, un atome d'halogène ou un groupe hydrocarboné en $C_1$-$C_{40}$ tel qu'un groupe alkyle en $C_1$-$C_{10}$, un groupe alcoxy en $C_1$-$C_{10}$, un groupe aryle en $C_6$-$C_{10}$, un groupe aryloxy en $C_6$-$C_{25}$, un groupe alcényle en $C_2$-$C_{10}$, un groupe arylalkyle en $C_7$-$C_{40}$ ou un groupe arylalcényle en $C_7$-$C_{40}$, un ou plusieurs restes $R^{23}$ sont liés à un ou plusieurs restes $R^{15}$ et $R^{16}$ et/ou à un ou plusieurs restes $R^{10}$, $R^{11}$, $R^{12}$ et $R^{13}$, et n est un nombre entier de 0 à 24, où dans le cas où $M^2$ est identique à C, m vaut 0 et $R^{11}$ est égal à $CH_2$, au moins l'un des restes $R^4$, $R^{8}$, $R^{10}$, $R^{12}$, $R^{13}$ n'est pas égal à alkyle et au moins l'un des restes $R^3$, $R^5$, $R^6$, $R^7$, et $R^9$ n'est pas égal à l'hydrogène.

**5.** Procédé selon la revendication 4, où $M^1$ représente le zirconium, $R^1$ et $R^2$ sont identiques et représentent un atome d'halogène, $R^3$, $R^4$, $R^5$, $R^6$, $R^7$, $R^8$ et $R^9$ sont identiques ou différents et représentent un atome d'hydrogène ou un groupe alkyle en $C_1$-$C_4$ ou un groupe aryle en $C_6$-$C_{14}$, ou $R^8$ et $R^9$ ainsi que $R^3$ et $R^4$ et/ou $R^5$ et $R^6$ ensemble avec les atomes qui les relient, forment un cycle hydrocarboné aromatique, $M^2$ représente un atome de carbone, $R^{10}$ représente un groupe alkyle en $C_1$-$C_6$, $R^{11}$ représente $-CH_2-CH_2-$, $R^{12}$ et $R^{13}$ sont identiques ou différents et représentent un groupe méthyle ou phényle et m vaut 0.

**6.** Procédé selon une ou plusieurs des revendications 1 à 5, en présence d'un catalyseur contenant a) au moins un composé de métallocène stéréorigide et b) au moins un co-catalyseur.

**7.** Procédé selon la revendication 6, où le co-catalyseur est l'aluminoxane.

**8.** Procédé selon une ou plusieurs des revendications 1 à 7, où le composé de métallocène stéréorigide est supporté et/ou prépolymérisé.

**9.** Procédé selon une ou plusieurs des revendications 1 à 8, une ou plusieurs oléfines de formule $R^a-CH=CH-R^b$ étant polymérisée, où $R^a$ et $R^b$ sont identiques ou différents et représentent un atome d'hydrogène ou un reste hydrocarboné avec 1 à 20 atomes de carbone, ou $R^a$ et $R^b$, ensemble avec les atomes qui les relient, forment un ou plusieurs cycles.

**10.** Polyoléfine que l'on peut préparer selon une ou plusieurs des revendications 1 à 9.

**11.** Alliage polymère contenant au moins une polyoléfine selon la revendication 10.

**12.** Corps moulé contenant au moins une polyoléfine selon la revendication 10.

**13.** Corps moulé contenant un alliage de polymère selon la revendication 11.

**14.** Utilisation d'un composé de métallocène stéréorigide qui présente en tant que ligands deux groupes cyclopentadiényle substitués ou non substitués, qui sont reliés l'un à l'autre par l'intermédiaire d'un système de cycles mono- ou polycyclique, et dans lequl un groupe cyclopentadiényle se trouvant sur le système de cycle mono- ou polycyclique en tant que substituant, alors qu'un autre groupe cyclopentadiényle étant condensé sur le système de cycles mono- ou polycyclique, pour la préparation d'une polyoléfine.